(19) Europäisches Patentamt
European Patent Office
Office européen des brevets

(11) **EP 1 680 910 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(51) Int Cl.:
**H04M 9/08** *(2006.01)* **H04R 27/00** *(2006.01)*
**H04S 5/00** *(2006.01)* *H04L 25/03* *(2006.01)*

(21) Anmeldenummer: **04797674.1**

(22) Anmeldetag: **05.11.2004**

(86) Internationale Anmeldenummer:
**PCT/EP2004/012570**

(87) Internationale Veröffentlichungsnummer:
**WO 2005/046194 (19.05.2005 Gazette 2005/20)**

(54) **VORRICHTUNG UND VERFAHREN ZUM VERARBEITEN EINES EINGANGSSIGNALS**

DEVICE AND METHOD FOR PROCESSING AN INPUT SIGNAL

DISPOSITIF ET PROCEDE POUR TRAITER UN SIGNAL D'ENTREE

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **06.11.2003 DE 10351793**

(43) Veröffentlichungstag der Anmeldung:
**19.07.2006 Patentblatt 2006/29**

(73) Patentinhaber:
• **Buchner, Herbert**
**93152 Nittendorf (DE)**
• **Herbordt, Wolfgang**
**97332 Volkach (DE)**
• **Spors, Sascha**
**90408 Nürnberg (DE)**
• **Kellermann, Walter**
**90542 Eckental (DE)**

(72) Erfinder:
• **Buchner, Herbert**
**93152 Nittendorf (DE)**
• **Herbordt, Wolfgang**
**97332 Volkach (DE)**
• **Spors, Sascha**
**90408 Nürnberg (DE)**
• **Kellermann, Walter**
**90542 Eckental (DE)**

(74) Vertreter: **Zinkler, Franz et al**
**Schoppe, Zimmermann, Stöckeler & Zinkler**
**Patentanwälte**
**Postfach 246**
**82043 Pullach bei München (DE)**

(56) Entgegenhaltungen:
**EP-A- 0 766 446 EP-A- 1 229 709**
**EP-A- 1 282 297 US-A- 5 638 311**
**US-A1- 2003 105 540**

EP 1 680 910 B1

**Beschreibung**

Die vorliegende Erfindung bezieht sich auf eine Vorrichtung und ein Verfahren zum Verarbeiten eines Eingangssignals, eine Vorrichtung und ein Verfahren zum Erfassen einer Übertragungscharakteristik eines Raumes, eine Vorrichtung und ein Verfahren zum Unterdrücken von Störungen, eine Vorrichtung und ein Verfahren zum Erfassen einer inversen Übertragungscharakteristika eines Raumes, eine Vorrichtung und ein Verfahren zum Erzeugen eines Prädiktionsfehlersignals, eine Vorrichtung und ein Verfahren zum Wiedergewinnen eines Nutzsignals aus einem Eingangssignal, eine Vorrichtung und ein Verfahren zum Unterdrücken eines Störanteils in einem Empfangssignal. Insbesondere bezieht sich die folgende Erfindung auf mehrdimensionale adaptive Filterung.

Bei einer Signalausbreitung in einem Raum zwischen einem Sender und einem Empfänger, beispielsweise bei einer Wellenausbreitung, ist es oft notwendig zu erfassen, welchen Einfluss der Raum durch seine Raumcharakteristik, Beispielsweise einer Raumimpulsantwort, auf die ausbreitenden Wellen ausübt. Ist der Einfluss des Raumes bekannt, so kann dieser im Empfänger, beispielsweise durch eine adaptive Filterung, nachgebildet und/oder rückgängig gemacht werden.

Um die Raumcharakteristik zu bestimmen, wird von einem Sender ein dem Empfänger bekanntes Signal ausgestrahlt, das von einem Empfänger abgegriffen wird. Auf der Basis eines Vergleichs zwischen dem gesendeten und dem abgegriffenen (detektierten) Signal kann nun auf die Charakteristik eines Übertragungskanals zwischen dem Sender und dem Empfänger geschlossen werden, wodurch sich ein einkanaliges System (Punkt-zu-Punkt-Verbindung) ergibt.

Als Verallgemeinerung können in dem Raum mehrere Sender und mehrere Empfänger aufgestellt werden, so dass sich nun ein mehrkanaliges System mit mehreren Eingängen und/oder mehreren Ausgängen ergibt, mit dessen Hilfe die Raumcharakteristik an den durch die Anordnung der Sender und Empfänger festgelegten Orten des Raumes bestimmt werden kann. Im allgemeinen Fall handelt es sich dabei um sogenannte adaptive MIMO-Systeme (MIMO = Multiple-Input/Multiple-Output). Bei diesen Systemen werden jedoch nur die Beziehungen zwischen den Eingängen und den Ausgängen an diskreten, festen Raumpunkten, z.B. in Form von Impulsantworten oder Frequenzgängen betrachtet. Das von den Sendern ausgestrahlte Feld ist jedoch kontinuierlich und breitet sich in Form von Wellenfronten aus. Ortsabhängigkeiten innerhalb des Feldes werden nach dem Stand der Technik daher nicht berücksichtigt, da die Empfangssignale, ausgehend von einer Eingangs-Ausgangs-Beschreibung, direkt verarbeitet werden. In den meisten Anwendungen, beispielsweise in der Akustik, geht man außerdem zumindest von nur relativ wenigen Eingangskanälen des adaptiven Systems aus, wie es in der Schrift J. Benesty and Y. Huang (eds.), Adaptive signal processing: Application to real-world problems, Springer-Verlag, Berlin, Februar 2003, diskutiert worden ist.

In einem MIMO-Fall der adaptiven Filterung nach dem Stand der Technik ergeben sich folgende Nachteile. Zum einen ist der Rechenaufwand aufgrund der Kreuzpfade enorm hoch. Beispielsweise wird ein adaptives Filter mit P Eingangskanälen und Q Ausgangskanälen P·Q Pfade adaptieren und deren Änderungen verfolgen. Diese einzelnen Pfade können ihrerseits jeweils je nach Anwendungen mehrere hundert oder tausend adaptive Parameter aufweisen. Um eine Raumcharakteristik genau zu bestimmen, sind jedoch viele Eingangskanäle notwendig. Mit zunehmender Anzahl der Eingangskanäle ergeben sich jedoch zunehmend Konvergenzprobleme insbesondere bei Korrelation zwischen den Eingangskanälen, wie es beispielsweise in den Schriften S. Shimauchi und S. Makino, "Stereo Projection Echo Canceller with True Echo Path Estimation", Proc. IEEE International Conference on Acoustic, Speech, and Signal Processing ICASSP95, Detroit, MI, USA, Seiten 3059-3062, Mai 1995, und J. Benesty, D.R. Morgan and M.M. Sondhi, "A better understanding and an improved solution to the problem of stereophonic acoustic echo cancellation", Proc. IEEE International Conference on Acoustic, Speech, and Signal Processing ICASSP97, München, Seiten 303-306, April 1997, beschrieben ist.

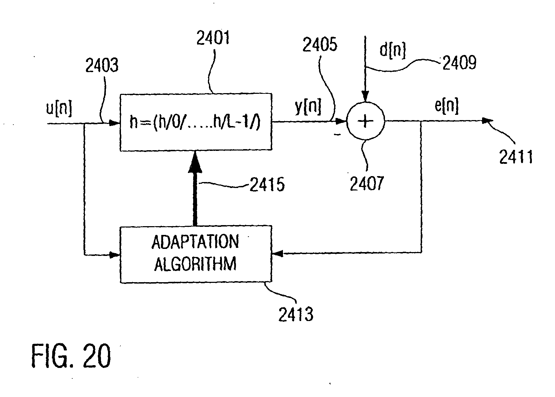

In Figur 20 ist ein Ausführungsbeispiel eines zeitdiskreten adaptiven Filters nach Stand der Technik.

Das adaptive Filter 2401 hat L Filterkoeffizienten, die zu einem Vektor h=[h (0),...,h(L-1)] zusammengefasst sind. Das Filter 2401 hat einen Eingang 2403 und einen Ausgang 2405. An dem Eingang 2403 des Filters 2401 liegt ein Eingangssignal u(n) an. An dem Ausgang 2405 liegt ein Ausgangssignal y(n) an. Der Ausgang 2405 ist mit einem Summierer 2407 gekoppelt. Der Summierer 2407 hat einen weiteren Eingang 2409, an dem ein Signal d(n) anliegt, sowie einen Ausgang 2411, an dem ein Signal e(n) anliegt. Zwischen dem Eingang 2403 des Filters 2401 und dem Ausgang 2411 des Summierers 2407 ist ein Block 2413 geschaltet, in dem ein Adaptionsalgorithmus für die Filterkoeffizienten ausgeführt wird. Der Block 2413 empfängt somit das Signal u(n) sowie das Signal e(n). Der Block 2413 hat ferner einen Ausgang 2415, der mit dem Filter 2401 gekoppelt ist. Über den Ausgang 2415 werden die von dem Adaptionsalgorithmus in dem Block 2413 bestimmten Filterkoeffizienten an das Filter 2401 geliefert.

Adaptive zeitdiskrete Filter nach Figur 20 stellen eine weitverbreitete Technik in der digitalen Signalverarbeitung dar. Das Prinzip besteht darin, Filterkoeffizienten (die in dem in Figur 20 dargestellten Ausführungsbeispiel zu einem Vektor h zusammengefasst sind) so zu bestimmen, dass das Ausgangssignal y(n) des Systems (bzw. eines Ausgangskanals in einem mehrkanaligen System) bei einem bekannten Eingangssignal u(n) (bzw. mehreren bekannten Eingangssignalen) einem Wunschsignal d(n), bzw. mehreren Wunschsignalen bei einem mehrkanaligen System angenähert wird.

Dies wird durch eine blockweise Minimierung des Fehlersignals e(n)=d(n)-y(n), bzw. mehrerer Fehlersignale bei einem mehrkanaligen System, nach einem vorbestimmten Kriterium erreicht. Beispielsweise wird dabei als Kriterium ein mittlerer quadratischer Fehler verwendet. Die Blocklänge des Filters kann dabei größer oder gleich einem Abtastwert sein. Eine Optimierung der Filterkoeffizienten kann ferner rekursiv oder nicht-rekursiv erfolgen.

Nach dem Stand der Technik lassen sich die Anwendungsbereiche der adaptiven Filterung allgemein in vier Klassen unterteilen, wie es in der Schrift von S. Haykin, Adaptive Filter Theory, 3. Ed., Prentice Hall Inc., Englewood Cliffs, NJ, USA, 1996 angegeben ist. Dabei handelt es sich um eine Systemidentifikation, um eine inverse Modellierung, um eine Prädiktion und um eine Interferenz-Unterdrückung.

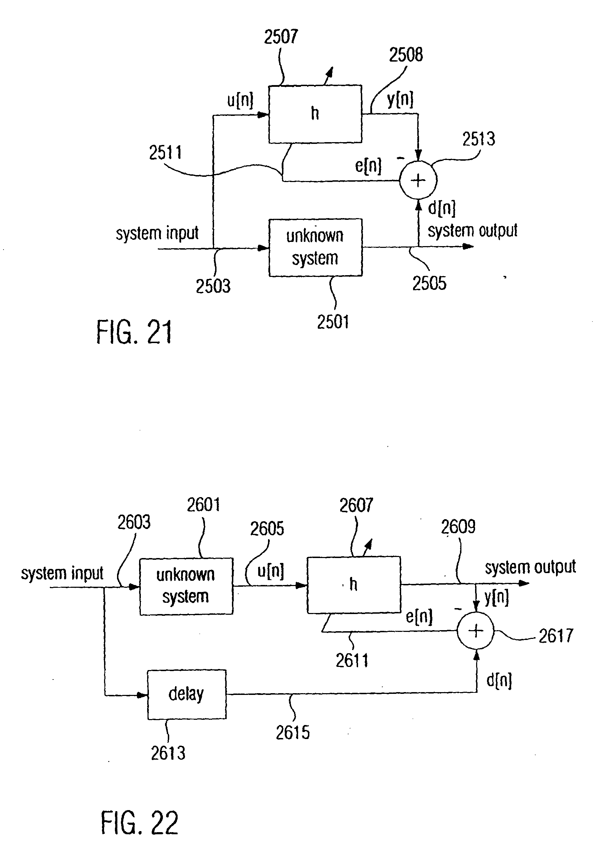

In Figur 21 ist ein prinzipielles Blockdiagramm zu einer einkanaligen Systemidentifikation dargestellt. Das unbekannte System 2501, dessen Charakteristik, beispielsweise eine Impulsantwort, bestimmt werden soll, wird über einen Systemeingang 2503 angeregt. Das unbekannte System 2501 hat ferner einen Ausgang 2505, an dem ein Systemausgangssignal, ansprechend auf ein Anregungssignal, abgreifbar ist. Mit dem Systemeingang 2503 ist ein adaptives Filter 2507 gekoppelt. Das adaptive Filter 2507 hat einen Ausgang 2509 sowie einen Adaptionseingang 2511.

Zwischen dem Ausgang 2509 des adaptiven Filters 2507 und dem Ausgang 2505 des unbekannten Systems 2501 ist ein Summierer 2513 angeordnet, dessen Ausgang mit dem Eingang 2511 des adaptiven Filters 2507 gekoppelt ist.

Bei der Systemidentifikation geht es, wie es bereits erwähnt worden ist, um eine Bestimmung der Charakteristik des unbekannten Systems 2501, das beispielsweise ein Raum ist, in dem sich akustische Wellen ausbreiten. Bei der Charakteristik des Raumes kann es sich beispielsweise um eine Impulsantwort handeln, die in Form von diskreten Impulsantwortkoeffizienten, die auch als Filterkoeffizienten verstanden werden können, charakterisiert ist. Um die Impulsantwort zu bestimmen, wird das adaptive Filter 2507 parallel zu dem unbekannten System 2501 angeregt. Aus einem Vergleich der an dem jeweiligen Ausgang 2509 und 2505 anliegenden Systeme wird nun ein Fehlersignal e(n) generiert, auf dessen Basis das adaptive Filter 2507 adaptiert wird. Der Summierer 2513 addiert dabei das Ausgangssignal d(n) des unbekannten Systems 2501 zudem mit einem negativen Vorzeichen bewerteten Ausgangssignal y(n). Das Ergebnis dieser Differenz wird als Fehlersignal e(n) dem Filter zugeführt. Während der Adaption werden die Filterkoeffizienten solange adaptiert, bis das Fehlersignal e(n) möglichst gering ist. Ist e(n)=0 so gibt der Koeffizientensatz des adaptiven Filters 2507 die Impulsantwort des unbekannten Systems 2501 exakt wieder. Mit anderen Worten ausgedrückt, ist, nach einer Minimierung des Fehlersignals e(n), das modellierende adaptive Filter 2507 optimal im Sinne des verwendeten Optimierungskriteriums, beispielsweise dem Kriterium des kleinsten Fehlerquadrats, dem unbekannten System 2501 (das zu modellierende System) angepasst. Neben einer in Figur 21 dargestellten einkanaligen Systemidentifikation werden auch mehrkanalige Systeme identifiziert, wobei, wie es bereits erwähnt worden ist, nur diskrete Orte betrachtet werden. Derartige Systeme sind beispielsweise in S. Shimauchi und S. Makino, "Stereo Projection Echo Canceller with True Echo Path Estimation", Proc. IEEE International Conference on Acoustics, Speech, and Signal Processing ICASSP95, Detroit, MI, USA, Seiten 3059-3062, Mai 1995 und in J. Benesty, D.R. Morgan, and M.M. Sondhi, "A better understanding and an improved solution to the problem of stereophonic acoustic echo cancellation", Proc. IEEE International Conference on Acoustic, Speech, and Signal Processing ICASSP97, München, Seiten 303-306, April 1997, beschrieben.

Bei einer inversen Modellierung befindet sich das zu modellierende unbekannte System in Serie mit dem adaptiven. Filter. In Figur 22 ist ein prinzipielles Blockdiagramm eines Systems zur inversen Modellierung dargestellt.

Das unbekannte System 2601 hat einen Eingang 2603 und einen Ausgang 2605. Mit dem Ausgang 2605 des unbekannten Systems 2601 ist ein adaptives Filter 2607 verbunden, das einen Ausgang 2609 sowie einen weiteren Eingang 2611 aufweist. Der Eingang 2603 des unbekannten Systems 2601 ist ferner mit einem Verzögerungsglied 2613 gekoppelt. Das Verzögerungsglied 2613 hat einen Ausgang 2615, der mit dem Ausgang 2609 des adaptiven Filters 2607 über einen Addierer 2617 gekoppelt ist. Der Summierer 2617 hat einen Ausgang, der mit dem Eingang 2611 des Filters 2607 verbunden ist. Im Gegensatz zur Systemidentifikation wird bei einer inversen Modellierung versucht, einen Einffuss des unbekannten Systems 2601, beispielsweise dessen Impulsantwort, zu reduzieren. Hierbei wird eine Differenz zwischen dem Filterausgangssignal und dem Systemeingangssignal gebildet. Um eine Verzögerung des Filters 2607 und des Systems 2601 zu berücksichtigen, kann optional ein Verzögerungsglied 2613 in dem Referenzzweig vorgesehen werden. Bei der inversen Modellierung nach Figur 22 befindet sich das zu modellierende System 2601 in Serie mit dem adaptiven Filter 2607. Nach einer Minimierung des Fehlersignals e(n) entspricht das adaptive Filter dem inversen unbekannten System im optimalen Sinne, je nach verwendetem Optimierungskriteriurn (beispielsweise dem Kriterium des kleinsten mittleren Fehlerquadrats). Neben einer in Figur 22 dargestellten einkanaligen inversen Systemmodellierung werden nach Stand der Technik in einem Mehrkanalfall nur diskrete Raumpunkte optimiert, wie es beispielsweise in der Schrift Masato Miyoshi, Yutaka Kaneda, "Inverse Filtering of Room Acoustics" IEEE Transactions on Acoustics, Speech, and Signal Processing, Band 36, Nr. 2, Februar 1988, beschrieben ist.

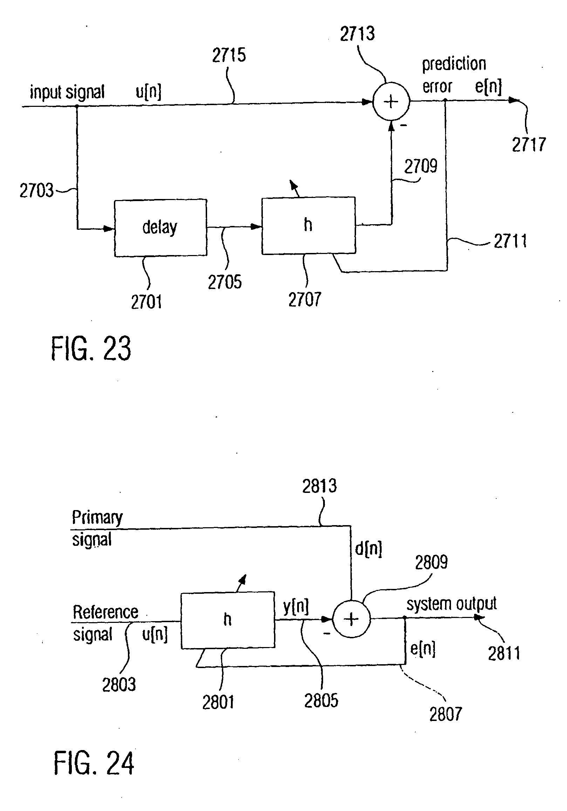

Figur 23 zeigt ein Blockdiagramm einer Prädiktionsstruktur. Die Prädiktionsstruktur weist ein Verzögerungsglied 2701 auf, das einen Eingang 2703 und einen Ausgang 2705 aufweist. Der Ausgang 2705 ist mit einem adaptiven Filter 2707 gekoppelt, das einen Ausgang 2709 sowie einen weiteren Eingang 2711 aufweist. Parallel zu dem aus dem Verzögerungsglied 2701 und dem adaptiven Filter 2707 gebildeten Zweig befindet sich ein Addierer 2713, dessen Eingang 2715 mit dem Eingang 2703 des Verzögerungsglieds 2701 verbunden ist. Der Addierer 2713 hat ferner einen Ausgang 2717 sowie einen weiteren Eingang, der mit dem Ausgang 2709 des adaptiven Filters 2707 gekoppelt ist.

Bei der Prädiktion wird aus einer Anzahl von vergangenen Signalwerten ein Schätzwert für einen aktuellen Signalwert u(n) ermittelt und eine Differenz zwischen dem aktuellen Wert und dem Schätzwert, der an dem Ausgang 2709 anliegen soll, wird übertragen. Um die Koeffizienten des Filters 2707 adaptiv einzustellen, wird das an dem Ausgang 2717 anliegende Differenzsignal im Filter als Referenz für eine Adaption der Filterkoeffizienten zugeführt. Durch diese Anordnung wird erreicht, dass das adaptive Filter in einer optimalen Weise (entsprechend einem verwendeten Optimierungskriterium, beispielsweise einem Kriterium des kleinsten mittleren Fehlerquadrats) das Wunschsignal pradiziert. Es bleibt also nur der nicht-vorhersagbare, d.h. der informationstragende Signalanteil übrig, der als Prädiktionsfehlersignal übertragen wird. Im Empfänger wird eine hierzu inverse Operation durchgeführt, um die im Sender unterdrückte Redundanz wiederzugewinnen, um das Eingangssignal möglichst genau zu reproduzieren.

In Figur 24 ist ein Blockdiagramm eines Systems zur Interferenz-Unterdrückung nach Stand der Technik dargestellt. Das System umfasst ein adaptives Filter 2801 mit einem Eingang 2803, einem Ausgang 2805 sowie einem Adaptionseingang 2807. Der Ausgang 2805 ist mit einem Addierer 2809 gekoppelt. Der Addierer 2809 hat einen Ausgang 2811 sowie einen Eingang 2813. Der Ausgang 2811 des Addierers 2809 ist mit dem Adaptionseingang 2807 des Filters 2801 gekoppelt.

Interferenz-Unterdrückung nach Figur 24 entspricht strukturell dem Grundkonzept einer adaptiven Filterung nach Fig. 20, bei der die Filterkoeffizienten in Abhängigkeit von einem verwendeten Optimierungskriterium eingestellt werden. Typischerweise besteht ein an dem Eingang 2813 des Addierers 2809 anliegendes Primärsignal d(n) aus einer Mischung aus Nutzsignalen und Störsignalen. Ein Referenzsignal u(n), das an dem Eingang 2803 des Filters 2801 anliegt, ist eine Schätzung des Störsignals (der Störung). Die Interferenz-Unterdrückung minimiert entsprechend einem Optimierungskriterium, beispielsweise einem Kriterium des minimalen mittleren Fehlerquadrats, das Fehlersignal e(n), das eine Differenz aus dem Signal d(n) und dem Signal y(n) ist. Dadurch wird die Störung im Fehlersignal unterdrückt, was im Idealfall dazu führt, dass über den Ausgang 2811 Nutzsignale ausgegeben und übertragen werden. Darüber hinaus können das Primärsignal und das Referenzsignal vertauscht werden, so dass das Eingangssignal des adaptiven Filters einer Mischung von Nutzsignalen und Störung entspricht. Anwendung kann diese Struktur bei einer ortsselektiven Geräuschunterdrückung finden. Setzt man das Primärsignal gleich Null und verwendet man als Referenzsignal eine Mischung von Nutzsignalen und Störsignalen, so können auch statistische Optimierungskriterien einer blinden Quellentrennung verwendet werden. Ein derartiges Konzept ist in der folgenden Schrift A. Hyvärinen, J. Karhunen und E. Oja, Independent Component Analysis, John Wiley & Sons, Inc., New York, 2001, beschrieben. Die bekannten Ansätze nach Stand der Technik beschränken sich dabei auf ein- oder mehrkanalige Störreduktion und blinder Quellentrennung an wenigen bestimmten diskreten Raumpunkten (Sensororten unter Aufgabe der räumlichen Information an einem Systemausgang).

Nachteilig an den bekannten Ansätzen gemäß Stand der Technik ist, dass die abgestrahlten Signale in Form von elektromagnetischen Wellen oder in Form von akustischen Schallwellen nur an einigen wenigen diskreten Raumpunkten erfasst und weiterverarbeitet werden. Eine Information über das System wird anhand der bestimmten Raumeigenschaften an den diskreten Punkten berechnet. Dabei kommt es jedoch zu einem signifikanten Bestimmungsfehler, falls lediglich einige wenige Sensoren im Raum aufgestellt werden, um die Raumcharakteristik zu bestimmen. Um eine genauere Bestimmung der Raumcharakteristik zu erzielen, muss deninach eine Vielzahl von Aktoren und Sensoren aufgestellt werden, um den Raum genügend genau zu diskretisieren. Dabei steigt jedoch der Rechenaufwand enorm an, da ein System hoher Komplexität aufgebaut werden muss, dessen Herstellungs- und Erhaltungskosten entsprechend ansteigen.

Ein weiterer Nachteil an den bekannten Konzepten ist darin zu sehen, dass eine kontinuierliche Raumcharakteristik, wie sie beispielsweise bei einer Ausbreitung der elektromagnetischen Wellen zum Tragen kommt, mit den bekannten Systemen prinzipiell nicht nachgebildet werden kann. Erhöht man nämlich die Anzahl der Aktoren und Sensoren, um den Raum noch feiner zu diskretisieren, so haben die im Raum aufgestellten Geräte einen signifikanten Einfluss auf die erfasste Raumcharakteristik, da beispielsweise die Echos zwischen den benachbarten Lautsprechern und Mikrofonen im Falle von akustischen Schallwellen mit den vom Raum verursachten Reflexionen überlagern. Diese negativen Einflüsse können nur näherungsweise durch komplexe Kompensationsalgorithmen eliminiert werden.

Ein weiterer Nachteil an den mehrkanaligen Konzepten gemäß Stand der Technik ist darin zu sehen, dass die konventionellen Ansätze einer effizienten Implementierung einer Wellenfeldsynthese oder einer Wellenfeldanalyse im Wege stehen. Bei einer Wellenfeldsynthese kann beispielsweise mit einer Mehrzahl von Lautsprechern, die als Kugelstrahler idealisiert werden, ein beispielsweise akustisches Schallfeld in einem Raum, in dem die Lautsprecher aufgestellt sind, exakt und an jedem Ort des Raumes und zu jeder Zeit reproduziert werden. Hierzu ist es jedoch notwendig, die Raumcharakteristik des Raumes, in dem die Lautsprecher aufgestellt sind, ebenfalls an jedem beliebigen Ort bestimmen zu können. Da die konventionellen Ansätze jedoch nur eine Charakterisierung an diskreten Orten erlauben, ist es prinzipiell nicht möglich, das gewünschte akustische Schallfeld exakt an jedem Ort des Raumes mit Hilfe einer Wellenfeldsynthese unter Verwendung des Standardkonzeptes zum Erfassen der Raumcharakteristik zu reproduzieren.

Die Vorveröffentlichung: "An approach to listening room compensation with wave field synthesis", S. Spors, A. Kuntz und R. Rabenstein, AES 24th International Conference on Multichannel Audio, Seiten 1 bis 13 beschreibt die Verwendung der Wellenfeldsynthese, um ein Wellenfeld innerhalb eines Wiedergabebereichs zu steuern. Hierzu wird unter Verwendung eines kreisförmigen Mikrofon-Arrays eine Zerlegung in ebene Wellen durchgeführt. Der erste Schritt besteht darin, die zylindrischen Harmonischen aus dem Schalldruck und der Schallschnelle in Normalrichtung zum Array zu berechnen. Dann wird das Wellenfeld in ankommende und abgehende zylindrische Harmonische zerlegt, um dann durch Aufsummieren verschiedener Harmonischer die Zerlegung in ebene Wellen fertig zu stellen. Hierauf werden die ebenen Wellen einer Matrix von Raumkompensationsfiltern zugeführt, welche adaptiv gesteuert werden, damit ein gegebenes erwünschtes Wellenfeld erhalten wird.

Es ist die Aufgabe der vorliegenden Erfindung, ein Konzept zum Verarbeiten von kontinuierlichen Wellenfeldern, die in einem Raum ausbreitungsfähig sind, zu schaffen.

Diese Aufgabe wird durch eine Vorrichtung zum Verarbeiten eines Eingangssignals gemäß Anspruch 1, durch eine Vorrichtung zum Erfassen einer Übertragungscharakteristik eines Raumes gemäß Anspruch 11, durch eine Vorrichtung zum Unterdrücken von Störungen in einem Anregungssignal gemäß Anspruch 13, durch eine Vorrichtung zum Erfassen einer inversen Übertragungscharakteristik eines Raumes gemäß Anspruch 14, durch eine Vorrichtung zum Erzeugen eines Prädiktionsfehlersignals gemäß Anspruch 15, durch eine Vorrichtung zum Wiedergewinnen eines Nutzsignals aus einem Eingangssignal gemäß Anspruch 16, durch eine Vorrichtung zum Unterdrücken eines Störanteils in einem Empfangssignal gemäß Anspruch 17, durch eine Vorrichtung zum Unterdrücken eines Störanteils in einem Empfangssignal gemäß Anspruch 21, durch ein Verfahren zum Verarbeiten eines Eingangssignals gemäß Anspruch 23, durch ein Verfahren zum Erfassen einer Übertragungscharakteristik eines Raumes gemäß Anspruch 24, durch ein Verfahren zum Unterdrücken von Störungen in einem Anregungssignal gemäß Anspruch 25, durch ein Verfahren zum Erfassen einer inversen Übertragungscharakteristik eines Raumes gemäß Anspruch 26, durch ein Verfahren zum Erzeugen eines Prädiktionsfehlersignals aus einem Eingangssignal gemäß Anspruch 27, durch ein Verfahren zum Wiedergewinnen eines Nutzsignals aus einem Eingangssignal gemäß Anspruch 28, durch ein Verfahren zum Unterdrücken eines Störanteils in einem Empfangssignal gemäß Anspruch 29, durch ein Verfahren zum Unterdrücken eines Störanteils in einem Empfangssignal gemäß Anspruch 30 oder durch ein Computerprogramm gemäß Anspruch 31 gelöst.

Der vorliegenden Erfindung liegt die Erkenntnis zugrunde, dass eine Raumcharakteristik an jedem beliebigen Ort durch eine effiziente Ausnutzung des Green'schen Satzes charakterisiert werden kann. Der Green'sche Satz erlaubt es, dass die Verteilung einer physikalischen Feldgröße innerhalb eines geschlossenen Volumens durch die Randverteilung sowie durch den Gradienten der Randverteilung ausgedrückt werden. Erfindungsgemäß wird dieser Zusammenhang ausgenutzt, um ein mehrdimensionales Feldproblem in ein vielkanaliges MIMO-Problem zu transformieren. Anstatt die benötigten Größen direkt aus dem mehrdimensionalen Feld abzugreifen, werden die entsprechenden Größen erfindungsgemäß an einem Rand abgegriffen, dies bedeutet, dass eine Randverteilung des ausgestrahlten Feldes erfasst wird und nicht, wie es nach dem Stand der Technik bekannt ist, unter Verwendung einer Eingang-Ausgang-Beschreibung.

Um das erfindungsgemäße Konzept zu verdeutlichen, wird im Folgenden zunächst der Fall einer adaptiven Filterung erörtert. Im Gegensatz zu den bekannten Konzepten der mehrkanaligen adaptiven Filterung, bei den die Filterkoeffizienten nur für einzelne diskrete Punkte des Raumes optimiert werden, wird erfindungsgemäß über einen ganzen Raumbereich optimiert. Dies bedeutet, dass die Filterparameter, beispielsweise Filterkoeffizienten, nicht nur für einzelne diskrete Orte des Raumes bestimmt werden, sondern für den gesamten Raumbereich bestimmt werden.

Innerhalb eines festgelegten Frequenzbereichs (unterhalb der sogenannten Aliasing-Frequenz nach dem räumlichen Abtasttheorem) kann somit durch eine ausreichend feine zeitliche und räumliche Abtastung mittels vielkanaliger Sensor- und Aktor-Arrays ein mehrdimensionales Kontinuum adaptiv exakt nachgebildet werden. Bei den Aktor- und Sensor-Arrays kann es sich beispielsweise um Sende- und Empfangsantennen handeln, falls beispielsweise eine Raumcharakteristik bezüglich einer Ausbreitung von elektromagnetischen Wellen von Interesse ist. Alternativ kann es sich bei den Aktor- und Sensor-Arrays um Lautsprecher- und Mikrofonsysteme handeln, falls das betrachtete Wellenfeld ein akustisches Schallfeld ist.

Wird ein Wellenfeld von einer Mehrzahl von diskret angeordneten (diskreten) Sendern ausgestrahlt, so kann eine Feldverteilung mit Hilfe von diskret angeordneten Empfangseinrichtungen abgegriffen werden. Im Unterschied zu den bekannten, Punkt-zu-Punkt-basierten Ansätzen nach Stand der Technik wird erfindungsgemäß ein anderer Weg beschritten, in dem die Punkt-zu-Punkt-Systembetrachtung zugunsten von einer globalen Feldbetrachtung aufgegeben wird. Nach einer Abgreifung des empfangenen Feldes werden die Signale also nicht dazu herangezogen, um die Raumcharakteristik direkt zu bestimmen. Vielmehr wird zunächst ausgehend von den abgegriffenen Signalen eine Zerlegung eines Wellenfeldes in Wellenfeldkomponenten durchgeführt, wobei eine Überlagerung der Wellenfeldkomponenten das Wellenfeld an jedem Ort des Raumes nachbildet. Die Wellenfeldkomponenten werden auf der Basis von orthogonalen Basisfunktionen, beispielsweise auf der Basis von Hankel oder Bessel-Funktionen bestimmt. Erfindungsgemäß werden die Wellenfeldkomponenten weiterverarbeitet, um beispielsweise eine Charakteristik des Raumes an jedem beliebigen Ort zu bestimmen (Systemidentifikation, um beispielsweise eine räumliche Signalrückkopplung von Aktoren und Sensoren zu eliminieren, inverse Systemmodellierung um beispielsweise den Raumeinfluss auf ein Nutzsignal zu eliminieren, oder Interferenz-Unterdrückung, um Störungen zu unterdrücken).

Im Folgenden wird das erfindungsgemäße Konzept am Beispiel einer Ausbreitung von akustischen Schallwellen erörtert.

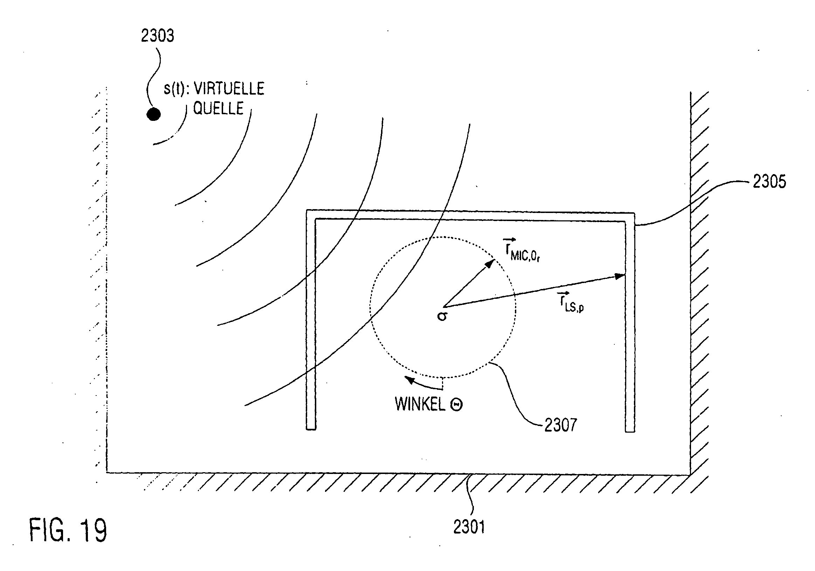

Figur 19 zeigt einen Raum 2301, in dem eine virtuelle Quelle s(t) 2303 angeordnet ist. Die virtuelle Quelle 2303 kann beispielsweise ein virtueller Lautsprecher sein der z.B. durch eine Wellenfeldsynthese nachgebildet wird. In dem Raum 2301 ist rechteckförmig ein Lautsprecher-Array 2305 angeordnet. Innerhalb eines von dem Lautsprecher-Array gebildeten Bereichs befindet sich ein zirkulares Mikrofon-Array 2307. Von der Mitte des von den Mikrofonen gebildeten Kreises bis zu dessen Rand erstreckt sich ein Ortsvektor $\vec{r}_{Mic,q}$. Von der Mitte des Kreises bis zum beliebigen Punkt des Lautsprecher-Arrays 2305 erstreckt sich ein Ortsvektor $\vec{r}_{LS,p}$. Jeder beliebige Ort am Rand des Mikrofon-Arrays 2307 kann mit Hilfe des Ortsvektors $\vec{r}_{Mic,q}$ angegeben werden. Bei einem bekannten Radius des von den Mikrofonen gebildeten Arrays reicht es jedoch aus, die geometrische Position eines Mikrofons innerhalb des Mikrofon-Arrays 2307 durch eine Angabe des Winkels Θ zu charakterisieren.

Im Folgenden wird angenommen, dass die Mikrofone in dem Mikrofon-Array 2307 einen Druck p(θ, t) sowie eine Schallschnelle $\vec{v}$(θ, t) liefern. Hierzu können beispielsweise die in D.S. Jagger, "Recent developments and improvements in soundfield microphone technology", Preprint 2064 of 75th AES Convention, Paris, März 1984 beschriebenen Anordnungen herangezogen werden. Das von den Mikrofonen abgegriffene Wellenfeld umfasst den Raumeinfluß, der sich z.B. durch. Reflektionen oder Streuung an den Raumwänden bemerkbar macht.

Um eine Wirkung der virtuellen Quelle in dem Raum nachzubilden, werden die Lautsprecher geeignet angeregt. Werden beispielsweise P Lautsprecher aufgestellt, so lauten die Lautsprechersignale:

$$x(\vec{r}_{LS,p}, t) = \sum_i g_{pi}(t) \underset{(t)}{*} s_i \cdot (t), \quad p = 1, \cdots, P$$

Dabei bezeichnen x die Lautsprechersignale, g die Wellenfeldsynthese-Filter und s das Quellensignal. Der Operator "*" bedeutet Faltung. Durch die Wellenfeldsynthese-Filter (WFS-Filter) wird jedem Lautsprecher ein Anteil an der virtuellen Quelle zugewiesen. Im Folgenden wird dieses WellenfeldSynthese-System mit "Transformation Ia" bezeichnet.

In einem weiteren Schritt kann das vom Lautsprecher-Array reproduzierte Feld von an den Mikrofon-Positionen des zirkularen Mikrofon-Arrays extrapoliert werden. Dies kann dadurch bewerkstelligt werden, dass zunächst eine "räumliche Impulsantwort" von je einem Lautsprecher auf alle Mikrofon-Positionen bei einer freien Wellenausbreitung, d.h. ohne Reflektionen in dem Raum, berechnet wird. Wird die Annahme zugrundegelegt, dass jeder Lautsprecher als eine Punktquelle, die Kugelwellen aussendet, modelliert werden kann, so kann die zugehörige Schallschnelle in normaler Richtung, die in der in Figur 19 dargestellten zweidimensionalen Anordnung am relevantesten ist, über eine akustische Impedanz einer Kugelwelle in einem Freifeld berechnet werden. Diese P "Impulsantworten" $p_{imp}$ werden mit den Lautsprechersignalen zeitlich gefaltet und alle Beiträge werden dann überlagert.

Damit ergibt sich für das unverhallte, von den Lautsprechern ausgestrahlte Feld am Mikrofon-Array gemäß diesem Beispiel für den Schalldruck $\underline{p}$ und die Schallschnelle $\underline{v}$:

$$\underline{p}(\theta_q, \omega) = \sum_{p=1}^{P} \underline{p}_{imp}(r_{pq}, \omega) . F_{(t)}\left\{ x(\vec{r}_{LS,p}, t) \right\},$$

$$\underline{v}(\theta_q, \omega) = \sum_{p=1}^{P} \frac{1 + \dfrac{c}{j\omega r_{pq}}}{p \cdot c} \cdot \frac{-\vec{r}_{pq} \cdot \vec{r}_{Mic,q}}{r_{pq} \cdot r_{Mic,q}} \cdot \underline{p}_{imp}(r_{pq}, \omega) \cdot F_{(t)}\{x(\cdot)\}$$

mit

$$\underline{p}_{imp}(r_{pq}, \omega) = \hat{p}_\alpha \frac{1}{r_{pq}} e^{-j\omega \frac{r_{pq}}{c}}$$

$$r_{pq} = \left\| \vec{r}_{pq} \right\| = \left\| \vec{r}_{Mic,q} - \vec{r}_{LS,p} \right\|$$

Dabei bezeichnet $\rho$ eine Dichte des Ausbreitungsmediums und c die Schallgeschwindigkeit, und $F_{(t)}\{x(\cdot)\}$ die Fouriertransformierte von x bezüglich der Zeit.

Wie es bereits erwähnt worden ist, wird zunächst das unverhallte Schallfeld betrachtet.

Das unverhallte Schallfeld kann nun beispielsweise in ebene Wellenkomponenten zerlegt werden, wie das aus der Schrift E. Hulsebos, D. de Vries und E. Bourdillat, "Improved microphone array configurations for auralization of sound fields by wave field synthesis", Audio engineering society 101th convention, Amsterdam, Mai 2001 bekannt ist. Wird das unverhallte Schallfeld in ebene Wellenfeldkomponenten zerlegt, d.h. in Wellenfeldkomponenten, die bei einer Überlagerung eine ebene Welle ergeben, so ergibt sich für das Beispiel des zirkularen 2D-Arrays beispielsweise:

$$\underline{q}_{LS}^{(1)}(k_\theta, \omega) = j^{(1-k_\theta)} \frac{H_{k_\theta}^{'(2)}(kR)P(k_\theta, \omega) - H_{k_\theta}^{(2)}(kR) \cdot j\rho c V(k_\theta, \omega)}{H_{k_\theta}^{(1)}(kR)H_{k_\theta}^{'(2)}(kR) - H_{k_\theta}^{(2)}(kR)H_{k_\theta}^{'(1)}(kR)}$$

mit

$$P(k_\theta, \omega) = F_{(\theta)}\{\underline{p}(\theta, \omega)\} = \frac{1}{2\pi} \int_0^{2\pi} \underline{p}(\theta, \omega) e^{-jk_\theta \theta} d\theta$$

$$V(k_\theta, \omega) = F_{(\theta)}\{\underline{v}(\theta, \omega)\}$$

Dabei bezeichnen $H_{k_\theta}^{(n)}(\cdot)$ sogenannte Hankel-Funktionen n-ter Art, $k_\theta$-ter Ordnung. Dabei bezeichnet $k_\theta$ die Ordnung der extrapolierenden Hankel-Funktionen, z. B $k_\theta = \cdots, -1, 0, +1, \cdots,$. Die Wellenzahl wird durch $k = \dfrac{\omega}{c}$ bezeichnet, und $R = \|\vec{r}_{Mic,q}\|$.

Die oben beschriebenen Schritte, d.h. die Bestimmung des unverhallten Wellenfeldes (z.B. am Mikrofon-Array) sowie die Zerlegung des unverhallten Schallfeldes in Wellenfeldkomponenten, werden im Folgenden mit dem Begriff "Transformation 1" bezeichnet, wobei darin der Schritt zur Bestimmung des unverhallten Wellenfeldes optional sei.

Im Unterschied zu der oben genannten Schrift werden gemäß diesem Ausführungsbeispiel erfindungsgemäß Fouriertransformierte der Drücke und der Schallschnellen verwendet. Die Ortsabhängigkeiten ($\theta$) werden dabei durch die $k_\theta$-Abhängigkeiten ersetzt. Erfindungsgemäß ist es nun möglich, das Wellenfeld an jedem beliebigen Ort des Raumes (und zu jeder beliebigen Zeit) mit Hilfe von Wellenfeldkomponenten darzustellen. Insbesondere kann damit dargestellt werden, wie ein Wellenfeld am Mikrofon-Array aussehen würde, gäbe es keinen Raumeinfluss.

Das von den Lautsprechern ausgestrahlte Wellenfeld wird naturgemäß durch die Raumcharakteristik beeinflusst, so dass ein Empfangswellenfeld am Mikrofon-Array von einem Sendewellenfeld nun abweicht.

Das Empfangswellenfeld wird von dem Mikrofon-Array erfasst und es wird, ansprechend auf das erfasste Wellenfeld, ein Ausgangssignal erzeugt. Die Mikrofone können beispielsweise so ausgebildet sein, dass sie bereits die Drücke und die Schallschnellen an dem jeweiligen Aufstellungsort als ein Untersignal des Ausgangssignals liefern. Beispielsweise können hierzu sogenannte Soundfield-Mikrofone eingesetzt werden, wie sie in der bereits erwähnten Schrift D.S. Jagger, "Recent developments and improvements in soundfield microphone technology", Preprint 2064 of 75th AES Convention, Paris, März 1984 bekannt sind.

Analog zu der beschriebenen Zerlegung des auszustrahlenden Wellenfeldes in die Wellenfeldkomponenten kann das empfangene, verhallte Wellenfeld (Schallfeld) bei Verwendung von derselben orthogonalen Wellenfeldbasis-Funktionen, z.B. Hankel-Funktionen, in Wellenfeldkomponenten zerlegt werden. Das Ergebnis dieser Operation sind Wellenfeldkomponenten der Form $\omega$, die sich, wie es bereits erwähnt worden ist, von den ursprünglichen Wellenfeldkomponenten aufgrund eines Raumeinflusses unterscheiden. Diese unmittelbare Zerlegung in Wellenfeldkomponenten wird im Folgenden mit dem Begriff "Transformation 2" bezeichnet.

Die obigen Ausführungen machen nun den erfindungsgemäßen Ansatz deutlich. Da das ursprüngliche Wellenfeld auf der Basis dessen Zerlegung in orthogonale Wellenfeldkomponenten an jedem Ort des Raumes analytisch bestimmbar ist, und da ein Empfangswellenfeld, das den Raumeinfluss umfasst, erfassbar und ebenfalls in Wellenfeldkomponenten zerlegbar ist, kann nun die Raumcharakteristik auf der Basis des (unbeeinflussten) Wellenfeldes, dargestellt durch Wellenfeldkomponenten, sowie des verhallten (beeinflussten) Wellenfeldes am Mikrofon-Array, in Form seiner Wellenfeldkomponenten an jedem Ort des Raumes bestimmt werden. Die Anzahl der Wellenfeldkomponenten hängt davon ab, welche orthogonalen Wellenfeldbasisfunktionen verwendet werden. Eine Ortsauflösung ist auch beliebig skalierbar, da eine Anzahl der Wellenfeldkomponenten, die nur durch das bereits erwähnte räumliche Abtasttheorem nach unten hin begrenzt ist, beliebig groß gewählt werden kann, ohne eine Anzahl der Aktoren und Sensoren zu erhöhen. Da gemäß dem betrachteten Ausführungsbeispiel die (ebenen) Wellenfeldkomponenten des ursprünglichen Wellenfeldes und des Empfangswellenfeldes bezüglich $k_\theta$ und bezüglich $\omega$ orthogonal bzw. nahezu orthogonal (nach einer zeitlichen und räumlichen Abtastung) sind, kann nun eine adaptive Filterung für alle Wellenfeldkomponenten, indiziert durch $k_\theta$ getrennt voneinander durchgeführt werden. Dies entspricht in diesem Beispiel jeweils einer einkanaligen adaptiven Filterung zwischen lautsprecher- und mikrofonseitigen ebenen Wellen. Im Unterschied zum Stand der Technik sind die Wellenfeldkomponenten nun getrennt voneinander behandelbar, so dass das bereits erwähnte Problem der Verkopplung zwischen den verschiedenen Pfaden (Signalkorrelation) nicht mehr auftritt. Die Wellenfeldkomponenten können nun, z.B. durch Filterung gezielt verarbeitet werden.

Ein weiterer Vorteil des erfindungsgemäßen Ansatzes liegt darin, dass die einzelnen Frequenzkomponenten (Wellenfeldkomponenten) über w nach einer Abtastung der Sensorsignale zu ausreichend vielen Zeitpunkten orthogonal oder nahezu orthogonal sind. Dies eröffnet die Möglichkeit, bereits entwickelte Ansätze zur adaptiven Filterung, sowohl im Zeit- als auch im Frequenzbereich zu verwenden, so dass der Entwicklungs- und Realisierungsaufwand reduziert ist.

Die Wellenfeldkomponenten des Empfangswellenfeldes können nun beispielsweise geeignet gefiltert werden, um den Raumeinfluss zu kompensieren.

Die Weiterverarbeitung der kompensierten Komponenten hängt von der beabsichtigten Anwendung ab. Die weiterverarbeiteten Wellenfeldkomponenten können nun dazu herangezogen werden, um durch deren Überlagerung ein Wellenfeld zu rekonstruieren. Werden die Wellenfeldkomponenten des Empfangswellenfeldes derart verarbeitet (z.B. gefiltert), dass beispielsweise die Echos, d.h. Rückwirkungen von Aktoren auf Sensoren, beseitigt sind, so kann das gesuchte räumliche Wellenfeld stets rekonstruiert werden, was beispielsweise unter Verwendung der untenstehend angegebenen Formel durchgeführt werden kann.

$$p^{(1)}(r,\theta,\omega) = \int_0^{2\pi} \underline{q}_{out}^{(1)}(\theta',\omega)e^{-jkr\cos(\theta-\theta')}d\theta'$$

Mit $q_{out}$ sind die weiterverarbeiteten Wellenfeldkomponenten bezeichnet. Die Rekonstruktionsvorschrift wird im Folgenden mit dem Begriff "Transformation 3" bezeichnet.

Falls die räumliche Information am Ausgang nicht weiter von Interesse ist, so kann beispielsweise bereits eine Überlagerung der weiterverarbeiteten Wellenfeldkomponenten gemäß

$p$

ausgegeben werden, was einer omni-direktionalen Richtcharakteristik bei der Aufnahme entspricht.

Darüber hinaus ist es nun auch möglich, nur bestimmte $\theta$-Komponenten auszugeben, so dass eine räumlich selektive Weiterverarbeitung möglich ist. Dies ist beispielsweise von Vorteil, falls das erfindungsgemäße Konzept zu einer Strahlenformung oder zu einer Geräuschunterdrückung herangezogen wird, z.B. beim sog. Beamforming.

Da bei der Zerlegung des Wellenfeldes in orthogonale Wellenfeldkomponenten der Green'sche Satz implizit ausgenutzt wird, kann das erfindungsgemäße Konzept stets dort eingesetzt werden, wo Randverteilungen bestimmter Größen bei einer Lösung von bestimmten beispielsweise mathematischen Problemen ausgenutzt werden. Beispielsweise kommen als Anwendungsgebiete des erfindungsgemäßen Konzepts alle durch partielle Differentialgleichungen beschreibbaren physikalischen Phänomene, beispielsweise in der Akustik (hörbare Schallwellen, Ultraschall usw.), Seismik, Hydrodynamik, Aerodynamik oder Elektrodynamik in Betracht.

Ein weiterer Vorteil der vorliegenden Erfindung ist darin zu sehen, dass das erfindungsgemäße Konzept, beispielsweise bei einer mehrdimensionalen Filterung, einen verringerten Hardware- und Rechenaufwand verglichen mit den bekannten Konzepten gemäß Stand der Technik aufweist. Die Aufwandsverringerung ist dadurch begründet, dass bei einer Filterung bzw. Weiterverarbeitung der Wellenfeldkomponenten deren Anzahl nicht generell von der Anzahl der aufgestellten Sensoren oder Aktoren abhängt, sondern lediglich durch das räumliche Abtasttheorem begrenzt ist, da es sich bei der Anzahl der Wellenfeldkomponenten um eine mathematische Größe handelt, deren Weiterverarbeitung beispielsweise in einem Prozessor geeignet implementiert werden. Der weitere Vorteil ist die erzielte Orthogonalität der Wellenfeldkomponenten. Das erfindungsgemäße Konzept erlaubt jedoch auch eine Verbesserung der Konvergenzeigenschaften bei einer adaptiven Filterung der Wellenfeldkomponenten, da dieselben, wie es bereits erwähnt worden ist, orthogonal zueinander sind.

Ein weiterer Vorteil der vorliegenden Erfindung besteht darin, dass der Aufwand bei einer Aufrechterhaltung einer gewünschten Parameterkonvergenz minimiert werden kann, wenn das Konzept der mehrkanaligen adaptiven Filterung auf den mehrdimensionalen Fall erweitert wird, da die Wellenfeldkomponenten wie Signale betrachtet werden können.

Wie es bereits erwähnt worden ist, werden erfindungsgemäß adaptive Filter betrachtet, die explizit auf partiellen Differentialgleichungen beruhen. Dadurch werden die erfindungsgemäßen Filter nicht nur an einzelnen Raumpunkten sondern im Rahmen des räumlichen Abtasttheorems kontinuierlich über den gesamten Raumbereich optimiert. Das Abtasttheorem ist aus der folgenden Schrift bekannt, D.H. Johnson und D.E. Dudgeon, Array Signal Processing: Concepts and Techniques, Prentice Hall, Upper Saddle River, NJ, USA, 1993.

Wie es bereits erwähnt worden ist, wird die Anzahl der benötigten Aktoren und Sensoren erfindungsgemäß reduziert, da nur auf dem Rand gemessen bzw. beeinflusst werden muss, anstatt im gesamten Raumvolumen. In vielen Anwendungsfällen wäre es auch nicht praktikabel, Sensoren oder Aktoren im gesamten Raumvolumen zu platzieren. Dies ist beispielsweise dann der Fall, wenn ein Raum während beispielsweise einer Opernaufführung ausgemessen werden soll. Durch die Verringerung der Sensoren- und Aktorenzahl wird auch eine Konvergenzverbesserung der Adaption erreicht, da eine Redundanz innerhalb des Feldes herausgenommen wird. Dies resultiert aus der bereits erwähnten Tatsache, dass die Anzahl der Wellenfeldkomponenten durch das Abtasttheorem und nicht durch die Anzahl der Empfangseinrichtungen oder Sendeeinrichtungen vorgebbar ist.

Durch eine Verbindung der adaptiven MIMO-Filterung mit einer geeigneten mehrdimensionalen Transformation kann eine weitere Reduzierung der Komplexität und Verbesserung der Konvergenz erreicht werden, wie anhand des obigen Beispiels gezeigt. Besonders vorteilhaft sind hier Transformationen, die eine Orthogonalisierung der räumlichen und zeitlichen Komponenten herbeiführen. Insbesondere kann eine Zerlegung nach den orthogonalen Basisfunktionen des Feldproblems verwendet werden. Derartige Zerlegungen sind beispielsweise in der Schrift K. Burg, H. Haf und F. Wille, Höhere Mathematik für Ingenieure - Band V: Funktionalanalysis und Partielle Differentialgleichungen, Teubner Verlag, Stuttgart, 1993 und in der Schrift A. Sommerfeld, Vorlesungen über theoretische Physik - Band VI: Partielle Differentialgleichungen der Physik, Verlag Harri Deutsch, Frankfurt, 1978 beschrieben. Dazu zählen z.B. die Wellenkomponenten eines der jeweiligen Anwendung angepassten Koordinatensystems. In Abhängigkeit von der Geometrie der Sensoren- und Aktorenanordnung, können beispielsweise ebene Wellen, Kugelwellen oder Zylinderwellen zugrundegelegt werden, d.h. die orthogonalen Wellenfeldfunktionen umfassen Hankel-, Bessel, -Zylinder-oder Kugelfunktionen, wie es in den Schriften E. Williams, Fourier Acoustic, Academic Press, London, UK, 1999 und A. Berkhout, Applied Seismic Wave Theory, Elsevier, Amsterdam, The Netherlands, 1987 beschrieben ist.

Ein weiterer Vorteil der vorliegenden Erfindung besteht darin, dass die bereits erwähnten Anwendungen, die bisher nur im Kontext der adaptiven Filterung nach dem Stand der Technik bekannt sind (beispielsweise Systemidentifikation, Prädiktion), nun mit Hilfe des neuen Ansatzes effizient auf die mehrdimensionale adaptive Filterung erweitert werden können, wodurch sich neue Einsatzbereiche ergeben. Beispielsweise können mit Hilfe der traditionellen Adaptionstechniken beliebige Raumeigenschaften an beliebigen Orten des Raumes bestimmt werden, was beispielsweise für eine Schallreproduktion mittels Wellenfeldsynthese bzw. für eine Aufnahme mittels Wellenfeldanalyse von Vorteil ist.

Bevorzugte Ausführungsbeispiele der vorliegenden Erfindung werden nachfolgend bezugnehmend auf die beiliegenden Zeichnungen näher erläutert. Es zeigen:

Figur 1     ein prinzipielles Blockdiagramm einer erfindungsgemäßen Vorrichtung zum Verarbeiten eines Eingangssignals gemäß einem ersten Ausführungsbeispiel;

Figur 2a     ein Blockdiagramm einer mehrdimensionalen adaptiven Filterung gemäß einem Ausführungsbeispiel der vorliegenden Erfindung;

Figur 2b     ein Blockdiagramm einer mehrdimensionalen adaptiven Filterung gemäß einem weiteren Ausführungsbeispiel der vorliegenden Erfindung;

Figur 3     ein Blockdiagramm eines adaptiven Filters gemäß der vorliegenden Erfindung;

Figur 4     ein prinzipielles Blockdiagramm einer Vorrichtung zum Erfassen einer Übertragungscharakteristik eines Raumes gemäß einem ersten Ausführungsbeispiel der vorliegenden Erfindung;

Figur 5     ein prinzipielles Blockdiagramm einer erfindungsgemäßen Vorrichtung zur Echokompensation;

Figur 6     ein weiteres Ausführungsbeispiel einer Vorrichtung zur Echokompensation.

Figur 7     eine prinzipielle Systemanordnung bei einer aktiven Geräuschunterdrückung;

Figur 8     ein Ausführungsbeispiel einer Anordnung von Mikrofon- und Lautsprecher-Arrays gemäß einem ersten Ausführungsbeispiel der vorliegenden Erfindung;

Figur 9     ein prinzipielles Blockdiagramm einer erfindungsgemäßen Vorrichtung zur aktiven Geräuschunterdrückung gemäß einem ersten Ausführungsbeispiel der vorliegenden Erfindung;

Figur 10     ein prinzipielles Blockdiagramm einer erfindungsgemäßen Vorrichtung zum Erfassen einer inversen Übertragungscharakteristik eines Raumes gemäß einem ersten Ausführungsbeispiel;

Figur 11    ein weiteres Ausführungsbeispiel einer erfindungsgemäßen Vorrichtung zum Erfassen einer inversen Übertragungscharakteristik eines Raumes;

Figur 12    ein Blockdiagramm einer erfindungsgemäßen Anordnung zur mehrdimensionalen akustischen Raumkompensation;

Figur 13    ein prinzipielles Blockdiagramm einer erfindungsgemäßen Vorrichtung zum Erzeugen eines Prädiktionsfehlersignals;

Figur 14    ein prinzipielles Blockdiagramm einer erfindungsgemäßen Vorrichtung zum Wiedergewinnen eines Nutzsignals aus einem Eingangssignal gemäß einem ersten Ausführungsbeispiel der vorliegenden Erfindung;

Figur 15    ein prinzipielles Blockdiagramm einer erfindungsgemäßen Vorrichtung zum Unterdrücken eines Störanteils in einem Empfangssignal gemäß einem ersten Ausführungsbeispiel der vorliegenden Erfindung;

Figur 16    ein weiteres Ausführungsbeispiel einer erfindungsgemäßen Vorrichtung zum Unterdrücken eines Störanteils;

Figur 17    ein weiteres Ausführungsbeispiel einer erfindungsgemäßen Vorrichtung zum Unterdrücken eines Störanteils;

Figur 18    ein Ausführungsbeispiel eines Computerprogramms zum Durchführen einer erfindungsgemäßen Echokompensation;

Figur 19    ein Ausführungsbeispiel einer erfindungsgemäßen Anordnung von Lautsprechern und Mikrofonen in einem Raum;

Figur 20    ein prinzipielles Blockdiagramm einer adaptiven Filterung gemäß Stand der Technik;

Figur 21    ein prinzipielles Blockdiagramm einer Systemidentifikationsstruktur gemäß Stand der Technik;

Figur 22    ein prinzipielles Blockdiagramm zur inversen Modellierung gemäß Stand der Technik;

Figur 23    ein prinzipielles Blockdiagramm zur Pradiktion gemäß Stand der Technik; und

Figur 24    ein prinzipielles Blockdiagramm zur Interferenz-Unterdrückung gemäß Stand der Technik.

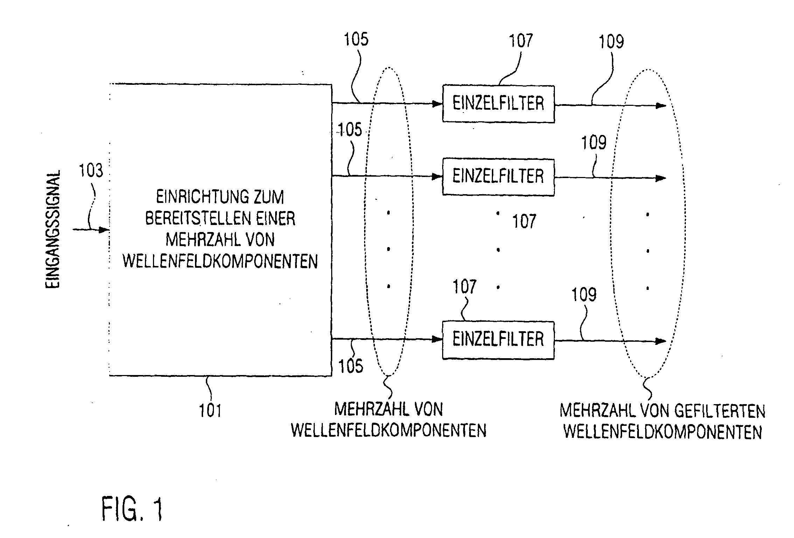

Figur 1 zeigt ein erstes Ausführungsbeispiel einer erfindungsgemäßen Vorrichtung zum Verarbeiten eines Eingangssignals. Die Vorrichtung weist eine Einrichtung 101 zum Bereitstellen einer Mehrzahl von Wellenfeldkomponenten, wobei die Einrichtung 101 zum Bereitstellen der Mehrzahl von Wellenfeldkomponenten einen Eingang 103 sowie eine Mehrzahl von Ausgängen 105 aufweist. Die Vorrichtung zum Verarbeiten eines Eingangssignals weist ferner eine Mehrzahl von Einzelfiltern 107 auf, wobei jeder Ausgang 105 der Einrichtung 101 zum Bereitstellen der Mehrzahl von Wellenfeldkomponenten mit einem Einzelfilter 107 gekoppelt ist. Die Mehrzahl der Einzelfilter 107 weist eine Mehrzahl von Ausgängen 109 auf, wobei jedem Einzelfilter 107 ein Ausgang 109 zugeordnet ist.

Im Folgenden wird die Funktionsweise der in Figur 1 dargestellten Vorrichtung erklärt.

Die Einrichtung 101 zum Bereitstellen der Mehrzahl von Wellenfeldkomponenten empfängt über den Eingang 103 ein Eingangssignal, wobei das Eingangssignal eine Anzahl von Untersignalen aufweist, die diskreten Sende- oder Empfangseinrichtungen zugeordnet sind. Die diskreten Sende-oder Empfangseinrichtungen sind an vorbestimmten geometrischen Positionen bezüglich eines Raumes angeordnet. Bei den geometrischen Positionen kann es sich beispielsweise um eine zirkulare Anordnung oder auch um eine lineare Anordnung handeln. Die Einrichtung 101 zum Bereitstellen der Mehrzahl von Wellenfeldkomponenten ist ausgebildet, um auf der Basis von orthogonalen Wellenfeldbasis-funktionen und den vorbestimmten geometrischen Positionen die Wellenfeldkomponenten aus dem Eingangssignal abzuleiten. Dabei ergibt eine Überlagerung der Wellenfeldkomponenten ein zusammengesetztes Wellenfeld, das in dem Raum ausbreitungsfähig ist. Bei dem Wellenfeld kann es sich beispielsweise um ein Wellenfeld handeln, das ausgestrahlt bzw. empfangen wird, wie es bereits erörtert worden ist. Das Wellenfeld kann ein akustisches Schallfeld sein, ein elektromagnetisches Feld, oder ein anderes Wellenfeld, das mit Hilfe von orthogonalen Wellenfeldbasisfunktionen in Wellenfeldkomponenten zerlegbar ist. An dieser Stelle sei darauf hingewiesen, dass die erfindungsgemäßen Vorrichtungen nicht auf dem Wellenfeld selbst, sondern auf seiner Darstellung durch z.B. elektrische Signale operieren.

Wie es bereits erwähnt worden ist, weist das Eingangssignal eine Mehrzahl von Untersignalen auf, die den Sende- bzw. Empfangseinrichtungen zugeordnet sind. Bei den Untersignalen kann es sich beispielsweise um Anregungssignale für die jeweilige Sendeeinrichtung handeln. Analog kann es sich bei den Untersignalen um Empfangssignale handeln, die der jeweiligen Empfangseinrichtung zugeordnet sind.

Die über die Ausgänge 105 herausgebbaren Wellenfeldkomponenten werden einer Mehrzahl von Einzelfiltern 107 zugeführt. Die Einzelfilter sind beispielsweise Digitalfilter, die mit Hilfe von Filterkoeffizienten die jeweilige Wellenfeldkomponente filtern. Bei den Filterkoeffizientensätzen kann es sich beispielsweise um gleiche oder um verschiedene Filterkoeffizientensätze handeln, so dass die Mehrzahl der Wellenfeldkomponenten jeweils eine unterschiedliche Beeinflussung durch die Filter erfährt. Die Einzelfilter sind demnach ausgebildet, um die zugeordnete Wellenfeldkomponente derart zu beeinflussen, so dass ausgangsseitig bezüglich der Mehrzahl von Einzelfiltern eine Mehrzahl von gefilterten Wellenfeldkomponenten erhalten wird, die ein verarbeitetes Eingangssignal darstellt. Bei dem verarbeiteten Eingangssignal kann es sich beispielsweise um die Mehrzahl der Wellenfeldkomponenten nach der Filterung handeln.

Wie es bereits erwähnt worden ist, kann das zusammengesetzte Wellenfeld ein akustisches Schallfeld sein, das von den diskreten Sendeeinrichtungen an den vorbestimmten geometrischen Positionen des Raumes erzeugbar ist, oder das von den diskreten Empfangseinrichtungen an den vorbestimmten geometrischen Positionen des Raumes erfassbar ist. In diesem Falle umfassen die Untersignale einen zugeordneten Schalldruck und/oder eine zugeordnete Schallschnelle des Schallfeldes an einer vorbestimmten geometrischen Position des Raumes.

Die Einrichtung 101 zum Bereitstellen ist ausgebildet, um die Wellenfeldkomponenten als eine Verknüpfung zwischen einer aus den Schalldrücken basierenden Größe und/oder einer auf den Schallschnellen basierenden Größe mit den orthogonalen Basisfunktionen zu bestimmen. Bei den Größen kann es sich um die Schalldrücke bzw. Schallschnellen selbst handeln. Alternativ können die auf den Schalldrücken bzw. die auf den Schallschnellen basierenden Größen Fouriertransformierte, der jeweiligen Schalldrücke bzw. Schallschnellen sein. In diesem Fall umfasst die Einrichtung 101 zum Bereitstellen einen Transformator zum Erzeugen einer räumlichen Fouriertransformierten der Schalldrücke als der auf den Schalldrücken basierenden Größe und/oder zum Erzeugen einer Fouriertransformierten als der auf den Schallschnellen basierenden Größe.

Bei der Verknüpfung zwischen den auf den Schalldrücken und/oder den auf den Schallschnellen basierenden Größen kann es sich beispielsweise um die bereits beschriebene Verknüpfung zum Erzeugen von Wellenfeldkomponenten auf Basis von Hankel-Funktionen handeln. Prinzipiell können hierbei jedoch beliebige orthogonale Wellenfeldfunktionen (Wellenfeldbasisfunktionen) eingesetzt werden, wobei die orthogonalen Wellenfeldfunktionen beispielsweise Hankeloder Bessel- oder Zylinder- oder Kugelfunktionen in beliebigen Dimensionen, beispielsweise in 2D oder 3D umfassen.

Da eine Zerlegung des Wellenfeldes erfindungsgemäß von einem Signalprozessor oder Digitalrechner durchgeführt werden kann, ist es vorteilhaft, dass die orthogonalen Wellenfeldfunktionen als Funktionswerte zur Verfügung stehen. In diesem Fall umfasst die erfindungsgemäße Einrichtung zum Bereitstellen der Mehrzahl von Wellenfeldkomponenten eine Einrichtung zum Liefern von diskreten Funktionswerten von orthogonalen Wellenfeldfunktionen, wie beispielsweise von Stützwerten von Hankel-Funktionen in Anhängigkeit von ke. Die Einrichtung zum Liefern von diskreten Wellenfeldfunktionen kann beispielsweise einen Speicher umfassen, in dem die diskreten Funktionswerte speicherbar sind. Alternativ kann die Einrichtung zum Liefern von diskreten Funktionswerten ein Prozessor sein, der die jeweiligen Funktionswerte, beispielsweise anhand von in Tabellen zusammengefassten Größen, errechnet und zur Verfügung stellt.

Wie es bereits erwähnt worden ist, kann es sich bei den Einzelfiltern um digitale Filter handeln, die jeweils diskrete Filterkoeffizientensätze aufweisen. Die Filterkoeffizienten können fest eingestellt sein, um eine vorbestimmte Charakteristik der Wellenfeldkomponenten, und somit des zusammenzusetzenden Wellenfeldes zu erzeugen. Alternativ können die Einzelfilter jedoch ausgebildet sein, um die diskreten Filterkoeffizienten zum Filtern der jeweiligen Wellenfeldkomponente zu empfangen. Dies ist insbesondere dann von Vorteil, wenn die Einzelfilter adaptiv eingestellt werden. Um die Filterkoeffizienten adaptiv zu bestimmen, umfasst die erfindungsgemäße Vorrichtung zum Verarbeiten eine Einrichtung zum Bestimmen von diskreten Filterkoeffizienten, wobei die Einrichtung zum Bestimmen von diskreten Filterkoeffizienten ausgebildet ist, um, für ein Einzelfilter, eine Referenzwellenfeldkomponente zu empfangen, und um durch eine Minimierung eines Unterschieds zwischen der Referenzwellenfeldkomponente und der Wellenfeldkomponente die diskreten Filterkoeffizienten zu bestimmen. Bei den Referenzwellenfeldkomponenten kann es sich beispielsweise um die Wellenfeldkomponenten eines Wunschwellenfeldes handeln, das bestimmte örtliche Eigenschaften, beispielsweise eine bestimmte örtliche Feldstärke aufweist. Bei den Wellenfeldkomponenten kann es sich beispielsweise um die Wellenfeldkomponenten des Empfangswellenfeldes handeln, die derart gefiltert werden sollten, so dass nach der Filterung ein Wunschwellenfeld entsteht, wie es bereits im Zusammenhang mit der adaptiven Filterung geschildert worden ist.

Die Minimierung des Unterschieds zwischen den Referenzwellenfeldkoeffizienten und den Wellenfeldkoeffizienten kann beispielsweise adaptiv durchgeführt werden. In diesem Fall ist die erfindungsgemäße Einrichtung zum Bestimmen von diskreten Filterkoeffizienten ausgebildet, um die diskreten Filterkoeffizienten adaptiv, beispielsweise im Zeit- oder im Frequenzbereich, auf der Basis von bekannten Algorithmen zu bestimmen. Um die Filterkoeffizienten adaptiv zu berechnen, kann beispielsweise der Algorithmus nach dem Kriterium des mittleren Fehlerquadrats (MSE = Mean-Squared Error), nach dem Kriterium des minimalen mittleren Fehlerquadrats (MMSE = Minimum MSE), nach dem Kriterium des kleinsten Fehlerquadrats (LMS = Least-Mean-Square) verwendet werden. Darüber hinaus können der RLS-Algorithmus (RLS = Recursive Least-Squares, rekursive kleinste Quadrate), oder der FDAF-Algorithmus (FDAF = Frequency-Domain Adaptive Filtering) oder ein weiterer bekannter Adaptionsalgorithmus, bzw. eine Variante davon, eingesetzt werden.

Die erfindungsgemäße Einrichtung zum Bereitstellen einer Mehrzahl von Wellenfeldkomponenten kann beispielsweise ausgebildet sein, um die erwähnte Transformation 1a und 1 auszuführen, um eine Wellenfeldzerlegung zu bestimmen. Alternativ kann die erfindungsgemäße Einrichtung 101 zum Bereitstellen der Mehrzahl von Wellenfeldkomponenten ausgebildet sein, um die bereits beschriebene Transformation 2 durchzuführen, bei der bereits, im Falle eines akustischen Schallfeldes, die Drücke und die Schallschnellen direkt zu einer Wellenfeldzerlegung herangezogen werden können.

Die Mehrzahl der gefilterten Wellenfeldkomponenten am Ausgang der Mehrzahl der Einzelfilter 107 kann bereits in dieser Form an eine fernere Einrichtung verschickt werden, um dort weiterverarbeitet zu werden. Alternativ kann die erfindungsgemäße Vorrichtung eine Einrichtung zum Rekonstruieren eines Wellenfeldes aus den gefilterten Wellenfeldkomponenten ausweisen. Die in Figur 1 nicht dargestellte Einrichtung zum Rekonstruieren ist ausgebildet, um durch eine Überlagerung von den auf den gefilterten Wellenfeldkomponenten basierenden Größen ein gefiltertes Wellenfeld zu rekonstruieren, und um ein verarbeitetes Eingangssignal zu liefern, ansprechend auf welches das rekonstruierte Wellenfeld von einer Mehrzahl von diskreten Sendeeinrichtungen, beispielsweise Lautsprechern, erzeugbar ist. Bevorzugt ist die erfindungsgemäße Einrichtung zum Rekonstruieren ausgebildet, um die bereits erwähnte Transformation 3 durchzuführen, um das gefilterte Wellenfeld durch eine Fourier-basierte Transformation der gefilterten Wellenfeldkomponenten zu rekonstruieren.

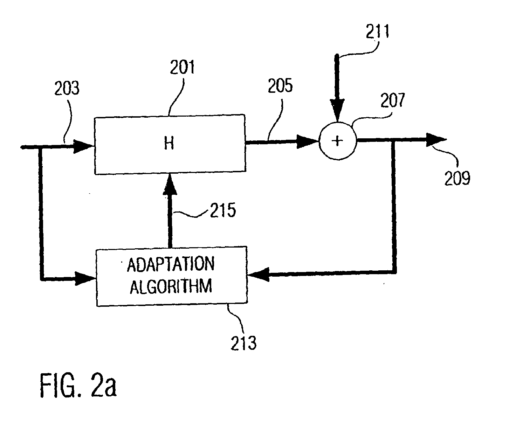

Figur 2a zeigt ein Ausführungsbeispiel eines adaptiven mehrdimensionalen Filters, das erfindungsgemäß zum Filtern der Wellenfeldkomponenten eingesetzt werden kann.

Die in Figur 2a dargestellte Filtervorrichtung umfasst ein Filter 201, bei dem es sich um ein mehrdimensionales Filter handeln kann. In diesem Falle wird das Filter durch eine Matrix aus Filterkoeffizienten charakterisiert. Alternativ kann das mehrdimensionale Filter 201 aus einer Reihe von nebeneinander angeordneten Einzelfiltern bestehen. Das Filter 201 hat einen Eingang 203 sowie einen Ausgang 205. Der Ausgang 205 des Filters 201 ist mit einem Addierer 207 gekoppelt, wobei der Addierer 207 einen Ausgang 209 sowie einen weiteren Eingang 211 aufweist. Zwischen dem Eingang 203 des Filters 201 und dem Ausgang 209 des Addierers 207 ist eine Einrichtung 213 zum Bestimmen von Filterkoeffizienten (Adaptation-Algorithm) angeordnet. Die Einrichtung 213 zum Bestimmen der Filterkoeffizienten hat einen Ausgang 215, mit dem das Filter 201 gekoppelt ist. Die in Figur 2a dargestellte mehrdimensionale Filtervorrichtung hat eine Struktur, die bereits im Zusammenhang mit dem in Figur 20 dargestellten Ausführungsbeispiel diskutiert worden ist. In Abhängigkeit davon, an welchen Stellen die Transformationen 1, 2 bzw. 3 durchgeführt werden, kann die in Figur 2a dargestellte Filtervorrichtung eingesetzt werden, um das Eingangssignal zu verarbeiten.

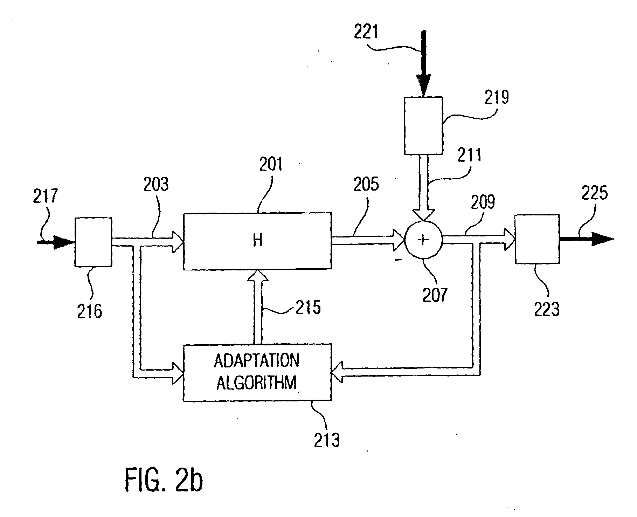

Figur 2b zeigt die in Figur 2a dargestellte Filtervorrichtung mit einer erfindungsgemäßen äußeren Beschaltung.

Im Unterschied zu dem in Figur 2a dargestellten Ausführungsbeispiel weist die in Figur 2b dargestellte Vorrichtung einen Transformationsblock 216 mit einem Eingang 217 sowie einem Ausgang, der mit dem Eingang 203 der Filtervorrichtung 201 gekoppelt ist. Darüber hinaus weist die in Figur 2b dargestellte Filtervorrichtung einen Transformationsblock 219 auf mit einem Eingang 221 sowie einem Ausgang, der mit dem Eingang 211 des Addierers 207 gekoppelt ist. Ferner umfasst die in Figur 2b dargestellte Filtervorrichtung einen Transformationsblock 223 mit einem Ausgang 225 sowie einem Eingang, der mit dem Ausgang 209 des Addierers 207 gekoppelt ist.

Im Folgenden wird die Funktionsweise der in Figur 2b dargestellten Filtervorrichtung erklärt.

In Abhängigkeit von einer jeweiligen Funktionalität der Transformationsblöcke 216, 219 sowie 223 kann die in Figur 2b dargestellte Filtervorrichtung zu einer Filterung eines empfangenen Wellenfeldes herangezogen werden. In diesem Fall liegt an dem Eingang 217 ein Eingangssignal, das der diskreten Empfangsvorrichtung zugeordnet ist. Handelt es sich bei dem Wellenfeld um ein akustisches Schallfeld, so können beispielsweise, wie es bereits beschrieben worden ist, an dem Eingang Größen anliegen, die direkt auf die Drücke und/oder direkt auf die Schallschnellen hinweisen. In diesem Fall ist der Transformationsblock 216 ausgebildet, um die bereits erwähnte Transformation 2 zu bestimmen. An dem Eingang 221 können dann beispielsweise die Anregungssignale anliegen. In diesem Fall ist der Transformationsblock 219 ausgebildet, um die Transformationen 1a und 1 auszuführen. Die gefilterten Wellenfeldkomponenten werden, nach einer unter Umständen mehrmaligen Bestimmung der Filterkoeffizienten durch einen Adaptionsalgorithmus, den die Einrichtung 213 zum Bestimmen von Filterkoeffizienten durchführt, gefiltert. Die gefilterten Wellenfeldkomponenten werden dann von den am Eingang 211 des Addierers 207 anliegenden Referenzwellenfeldkomponenten abgezogen und das Ergebnis wird über den Ausgang 209 ausgegeben. Der Transformationsblock 223 führt beispielsweise die Transformation 3 durch, um das verarbeitete Wellenfeld aus den verarbeiteten Wellenfeldkomponenten, die an dem Ausgang 209 anliegen, zu rekonstruieren.

Die Transformationsblöcke 216, 219 bzw. 223 können jedoch jede beliebige Transformation, beispielsweise Transformation 1, Transformation 2 oder Transformation 3 durchführen, die dazu führt, dass an den Eingängen 203 und 211 Wellenfeldkomponenten von Wellenfeldern anliegen und dass am Ausgang 225 ein rekonstruiertes Wellenfeld ausgegeben wird.

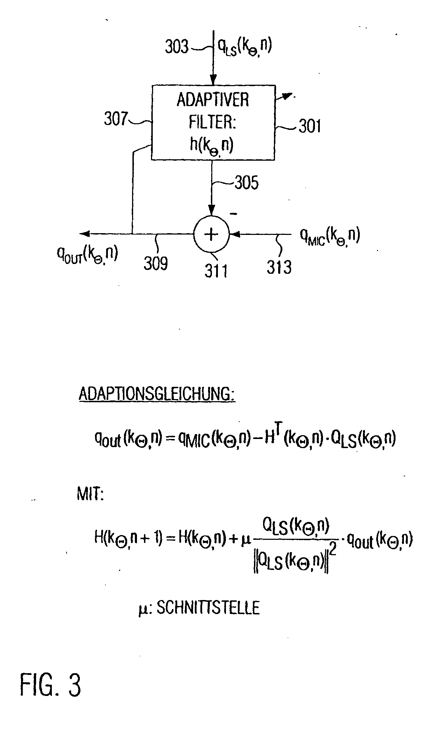

Figur 3 zeigt ein Ausführungsbeispiel einer adaptiven Filtervorrichtung gemäß der vorliegenden Erfindung. Die adaptive Filtervorrichtung umfasst ein adaptives Filter 301 mit einem Eingang 303 sowie einem Ausgang 305. Das adaptive Filter 301 weist ferner einen Adaptionseingang 307 auf, der mit einem Ausgang 309 eines Addierers 311 gekoppelt ist. Der Addierer 311 weist einen Eingang 313 sowie einen weiteren Eingang, der mit dem Ausgang 305 des adaptiven Filters 301 gekoppelt ist, auf.

Im Folgenden wird die Funktionsweise der in Figur 3 dargestellten Filtervorrichtung erklärt.

Das in Figur 3 dargestellte adaptive Filter 301 ist ausgebildet, um einen Vektor von Filterkoeffizienten $H(ke, n+1)$ ausgehend von dem vorherigen Vektor von Filterkoeffizienten $H(ke, n)$ unter Verwendung der dargestellten Formel zu bestimmen. Mit $q_{LS}()co, n)$ sind die zu filternden Wellenfeldkomponenten zum Zeitpunkt $n$ bezeichnet. Die Filterung der Wellenfeldkomponenten geschieht in diesem Beispiel mit Filtern, die zeitlich endliche Impulsantworten aufweisen.

$$Q_{LS}(k_\Theta,n) = \left[q_{LS}(k_\Theta,n), q_{LS}(k_\Theta,n-1),..., q_{LS}(k_\Theta,n-L+1)\right]^T$$

bezeichnet einen Vektor von Wellenfeldkomponenten der jeweils L letzten diskreten Zeitpunkte. Der Vektor zum Zeitpunkt n weist dabei die gleiche Dimension wie der Vektor der Filterkoeffizienten auf. Um die Filterkoeffizienten zu bestimmen, ist das adaptive Filter 301 ausgebildet, die in Figur 3 angegebene Adaptionsgleichung durchzuführen. Mit $q_{out}(k_\theta,n)$ sind die verarbeiteten Wellenfeldkomponenten gekennzeichnet. Mit $q_{mic}(k_\theta,n)$ sind die Wellenfeldkomponenten eines Empfangswellenfeldes, beispielsweise von Mikrofonen abgegriffen, bezeichnet.

Der Filterkoeffizienten-Vektor zum nächsten Zeitpunkt wird mit Hilfe der Schrittweite $\mu$, beispielsweise 11 = 0,01, gebildet. Die in Figur 3 dargestellte Adaptionsgleichung basiert auf dem bekannten LMS-Algorithmus. Alternativ können jedoch auch ein RLS-Algorithmus oder ein FDAF-Algorithmus oder andere bekannte Algorithmen als Adaptions-Algorithmen herangezogen werden.

Aus Gründen der Übersichtlichkeit ist die in Figur 3 dargestellte Filtervorrichtung nur für eine örtliche Mode, $k_\theta$, ausgeführt. Der Spaltenvektor, der die geschätzten Filterparameter enthält, beschreibt dabei ein zeitliches Verhalten der betrachteten örtlichen Mode, was durch die berücksichtigten zurückliegenden Koeffizienten ausgedrückt wird. Bei einer Mehrzahl der örtlichen Moden, beispielweise bei fünf Moden, werden entsprechend fünf Wellenfeldkomponenten zu verarbeiten sein. Gemäß einem Ausführungsbeispiel der vorliegenden Erfindung kann eine mehrdimensionale Filtervorrichtung fünf parallel geschaltete Vorrichtungen der Form, wie sie in Figur 3 dargestellt ist, umfassen. Alternativ ist es jedoch auch möglich, dass die Wellenfeldkomponenten, die verschiedenen örtlichen Moden zugeordnet sind, seriell verarbeitet werden.

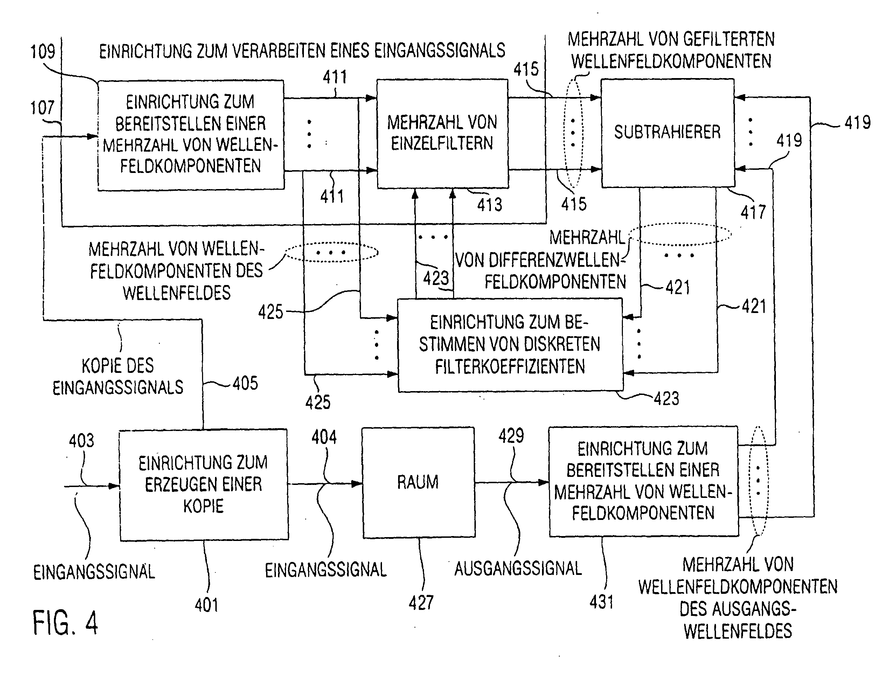

Figur 4 zeigt ein Ausführungsbeispiel einer erfindungsgemäßen Vorrichtung zum Erfassen einer Übertragungscharakteristik eines Raumes bei einer Ausbreitung eines Wellenfeldes. Bei dem Wellenfeld kann es sich um ein elektromagnetisches Wellenfeld oder um ein akustisches Schallfeld handeln, das, ansprechend auf ein Eingangssignal, von an bestimmten geometrischen Positionen des Raumes angeordneten diskreten Sendeeinrichtungen erzeugbar ist und sich im Raum ausbreitet. Ein Empfangswellenfeld wird von an bestimmten geometrischen Positionen des Raumes angeordneten Empfangseinrichtungen abgegriffen, wobei die Empfangseinrichtungen, ansprechend auf das Empfangswellenfeld, ein Ausgangssignal erzeugen. Das Eingangssignal zum Anregen des Wellenfeldes weist dabei eine Mehrzahl von Untersignalen auf, die den diskreten Sendeeinrichtungen zugeordnet sind. Bei den Untersignalen kann es sich beispielsweise um verschiedene Anregungssignale für die verschiedenen Sendeeinrichtungen handeln. Das Ausgangssignal kann beispielsweise eine Mehrzahl von Ausgangsuntersignalen aufweisen, wobei jedes der Ausgangsuntersignale einer jeden Empfangseinrichtung zugeordnet ist.

Die in Figur 4 dargestellte Vorrichtung zum Erfassen einer Übertragungscharakteristik eines Raumes hat eine Struktur, der die in Figur 21 dargestellte Struktur zur Systemidentifikation zugrunde liegt.

Die in Figur 4 dargestellte Vorrichtung weist eine Einrichtung 401 zum Erzeugen einer Kopie auf. Bei der Einrichtung 401 zum Erzeugen der Kopie kann es sich beispielsweise um einen Signalaufteiler oder um eine Signalverzweigung handeln. Die Einrichtung 401 zum Erzeugen der Kopie hat einen Eingang 403, einen ersten Ausgang 405 sowie einen zweiten Ausgang 404. Der erste Ausgang 405 ist mit einer Vorrichtung 407 zum Verarbeiten eines Eingangssignals gekoppelt, wobei die Vorrichtung 407 einen Aufbau aufweist, wie er bereits diskutiert worden ist, beispielsweise im Zusammenhang mit dem in Figur 1 dargestellten Ausführungsbeispiel. Die in Figur 4 dargestellte Vorrichtung 407 zum Verarbeiten des Eingangssignals umfasst eine Einrichtung 409 zum Bereitstellen einer Mehrzahl von Wellenfeldkomponenten. Die Einrichtung 409 zum Bereitstellen der Mehrzahl von Wellenfeldkomponenten hat einen Eingang, der mit dem ersten Ausgang 405 der Einrichtung 401 zum Erzeugen der Kopie verbunden ist. Die Einrichtung 409 zum Bereitstellen der Mehrzahl von Wellenfeldkomponenten weist ferner eine Mehrzahl von Ausgängen 411 auf, wobei jeder der Ausgänge 411 mit einem Einzelfilter der Mehrzahl von Einzelfiltern gekoppelt ist. Die Mehrzahl von Einzelfiltern ist in dem in Figur 4 dargestellten Ausführungsbeispiel aus Übersichtlichkeitsgründen zusammengefasst und zu einer Mehrzahl 413 von Einzelfiltern zusammengefasst. Die Mehrzahl von Ausgängen 415 ist mit einer Mehrzahl von Eingängen eines Subtrahierers 417, der auch ein Addierer sein kann, gekoppelt. Der Subtrahierer 417 weist ferner eine Mehrzahl von weiteren Eingängen 419 auf. Darüber hinaus erfasst der Subtrahierer 417 eine Mehrzahl von Ausgängen 421.

Die Mehrzahl von Ausgängen 421 des Subtrahierers 417 ist mit einer Mehrzahl von Eingängen einer Einrichtung 423 zum Bestimmen von diskreten Filterkoeffizienten gekoppelt. Die Einrichtung 423 zum Bestimmen von diskreten Filterkoeffizienten weist ferner eine Mehrzahl von weiteren Eingängen 425 auf, die mit der Mehrzahl der Ausgänge 411 der Einrichtung 409 zum Bereitstellen der Mehrzahl von Wellenfeldkomponenten der Vorrichtung 407 zum Verarbeiten des Eingangssignals gekoppelt ist.

Der zweite Ausgang 404 der Einrichtung 401 zum Erzeugen der Kopie ist mit einer der in Fig. 4 nicht dargestellten diskreten Sendeeinrichtungen gekoppelt, die in einem Raum 427, dessen Charakteristik bestimmt werden soll, aufgestellt sind. Die diskreten Sendeeinrichtungen können beispielsweise zirkular oder linear aufgestellt sein, wie es bereits erwähnt worden ist. In dem Raum 427 ist ferner eine in Figur 4 nicht dargestellte Mehrzahl von Empfangseinrichtungen angeordnet, die mit einem Ausgang 429 des Raumes 427 (des unbekannten Systems) gekoppelt sind. Der Ausgang 429 des Raumes 427 ist mit einer Einrichtung 431 zum Bereitstellen einer Mehrzahl von Wellenfeldkomponenten gekoppelt. Die Einrichtung zum Bereitstellen der Mehrzahl von Wellenfeldkomponenten weist eine Mehrzahl von Ausgängen auf, die mit den weiteren Eingängen 419 des Subtrahierers 417 gekoppelt sind.

Im Folgenden wird die Funktionsweise der in Figur 4 dargestellten Vorrichtung erläutert.

Die Einrichtungen 409 und 431 zum Bereitstellen der Mehrzahl von Wellenfeldkomponenten sind ausgebildet, um auf der Basis der Kopie des Eingangssignals bzw. auf der Basis des Ausgangssignals die Wellenfeldkomponenten des Wellenfeldes bzw. des Empfangswellenfeldes zu bestimmen, wie das bereits erklärt worden ist. Ansprechend auf das Eingangssignal, das an dem Eingang 404 des Raumes anliegt, wird nun das Wellenfeld erzeugt, das sich in dem Raum ausbreitet. Ansprechend an das von den diskreten Empfangseinrichtungen erfassbare Empfangsfeld wird über den Ausgang 429 des Raums ein Ausgangssignal erzeugt, auf dessen Basis die Einrichtung 431 zum Bereitstellen der Mehrzahl von Wellenfeldkomponenten dieselben bestimmt. Handelt es sich bei dem Wellenfeld um ein akustisches Schallfeld, so ist die Einrichtung 409 ausgebildet, um die Transformationen 1a und 1 bzw. nur Transformation 1 durchzuführen, das bedeutet um aus dem Eingangssignal, das die Sendeeinrichtungen anregt, zunächst die Schalldrücken und die Schallgeschwindigkeiten zu bestimmen, um auf der Basis der bestimmten Schalldrücke und Schallgeschwindigkeiten die Wellenfeldkomponenten des Wellenfeldes, das ausgestrahlt wird, an jedem beliebigen Ort des Raumes 427 analytisch zu bestimmen. Zum Abgreifen des Empfangsfeldes wird in dem Raum 427 ein Mikrofon-Array aufgestellt, wobei die Mikrofone ausgebildet sind, um als Ausgangsuntersignale Direkt-Schalldrücke und/oder Schallgeschwindigkeiten auszugeben. Basierend auf diesen ausgegebenen Schalldrücken bzw. Schallgeschwindigkeiten führt die Einrichtung 431 zum Bestimmen der Mehrzahl von Wellenfeldkomponenten die bereits beschriebene Transformation 2 durch.

Der Subtrahierer 417 ist ausgebildet, um eine Mehrzahl von Differenzwellenfeldkomponenten zu bestimmen und sie über die Ausgänge 421 der Einrichtung 423 zum Bestimmen von diskreten Filterkoeffizienten zu liefern. Die Differenzwellenfeldkomponenten werden aus einer Differenz zwischen der Mehrzahl von gefilterten Wellenfeldkomponenten, die über die Ausgänge 415 von der Mehrzahl von Einzelfiltern 413 ausgebbar ist, und der Mehrzahl der Wellenfeldkomponenten des Ausgangswellenfeldes, die über die Ausgänge 419 der Einrichtung 431 zum Bestimmen der Mehrzahl von Wellenfeldkomponenten ausgebbar sind, bestimmt. Der Einrichtung 423 zum Bestimmen von diskreten Filterkoeffizienten stehen ferner die Wellenfeldkoeffizienten zur Verfügung, die von der Einrichtung 409 bereitstellbar sind. Die Einrichtung 423 zum Bestimmen von diskreten Filterkoeffizienten führt beispielsweise einen der möglichen Minimierungsalgorithmen durch, wie sie bereits beschrieben worden sind. Als Ergebnis des Algorithmus werden die im jeweiligen Adaptionsschritt bestimmten Filterkoeffizienten über die Ausgänge 433, die jeweils mit einem der Filter der Mehrzahl von Einzelfiltern gekoppelt sind, an dieselben geliefert. Unter Verwendung der neu errechneten Filterkoeffizienten werden die im nächsten Schritt von der Einrichtung 409 zum Bereitstellen der Mehrzahl von Wellenfeldkomponenten bereitgestellten Wellenfeldkomponenten gefiltert. Bei einer vollständigen Adaption der Filterkoeffizienten entspricht die Mehrzahl von gefilterten Wellenfeldkomponenten, die von der Mehrzahl von Einzelfiltern geliefert wird, der Mehrzahl von Wellenfeldkomponenten des Ausgangswellenfeldes. In diesem Fall beschreiben die Filterkoeffizienten der Mehrzahl von Einzelfiltern die Charakteristik des Raumes, beispielsweise sein Übertragungsverhalten bezüglich einer Wellenausbreitung.

Auf der Basis der bestimmten diskreten Filterkoeffizienten kann nun eine Entzerrung der Wellenfeldkomponenten durchgeführt werden, um die Einflüsse des Raumes auf das sich ausbreitende Wellenfeld wieder rückgängig zu machen. Dabei werden, im Unterschied zu den herkömmlichen Ansätzen, die Wellenfeldkomponenten des Wellenfeldes entzerrt. Hierzu kann es sich beispielsweise um einen Entzerrer handeln, der im Sinne des minimalen mittleren Fehlerquadrats operiert.

Zum Entzerren der Wellenfeldkomponenten kann gemäß einem weiteren Ausführungsbeispiel der vorliegenden Erfindung eine Vorrichtung zum Entzerren eingesetzt werden, welche auf der Basis der bestimmten diskreten Filterkoeffizienten die Wellenfeldkomponenten eines Ausgangswellenfeldes entzerrt. Die entzerrten Wellenfeldkomponenten werden dann zu einem entzerrten Wellenfeld überlagert, das weiterverarbeitet werden kann.

Das erfindungsgemäße Konzept gemäß Fig. 4 kann auch dazu herangezogen werden, um eine mehrdimensionale akustische Echokompensation (AEC=Acoustic Echo Cancellation) für Voll-Duplex-Kommunikationssysteme basierend auf einer akustischen Wellenfeldsynthese durchzuführen. In diesem Fall umfasst die erfindungsgemäße Vorrichtung zum Erfassen einer Übertragungscharakteristik eines Raumes ferner eine in Figur 4 nicht dargestellte Einrichtung zum Rekonstruieren eines Wellenfeldes aus den Differenzwellenfeldkomponenten. Die Grundidee einer Echokompensation ist, die Echopfade, bestehend aus Lautsprechern, Raum und Mikrofonen, digital mit Hilfe von Filterstrukturen nachzubilden, um akustische Rückkopplungen (und dadurch unter Umständen auch Instabilität, d.h. Rückkopplungspfeifen) über den Raum des jeweiligen Kommunikationspartners zu vermeiden. Das Lautsprecher-Raum-Mikrofon-System stellt somit das zu identifizierende System dar, das in dem in Figur 4 dargestellten Ausführungsbeispiel durch den Raum 427 angedeutet ist. Das adaptive Filter wird mit den Lautsprechersignalen angeregt, und die so geschätzten Echosignale werden von den Mikrofonsignalen (Ausgangssignale des unbekannten Systems) subtrahiert, die die tatsächlichen Echos enthalten. Bei einer exakten Übereinstimmung des Models mit dem wahren System würde das Echo in den Mikrofonsignalen vollständig ausgelöscht. Erfindungsgemäß wird eine akustische Echokompensation für vielkanalige Wellenfeldsynthese-Systeme mehrdimensional realisiert.

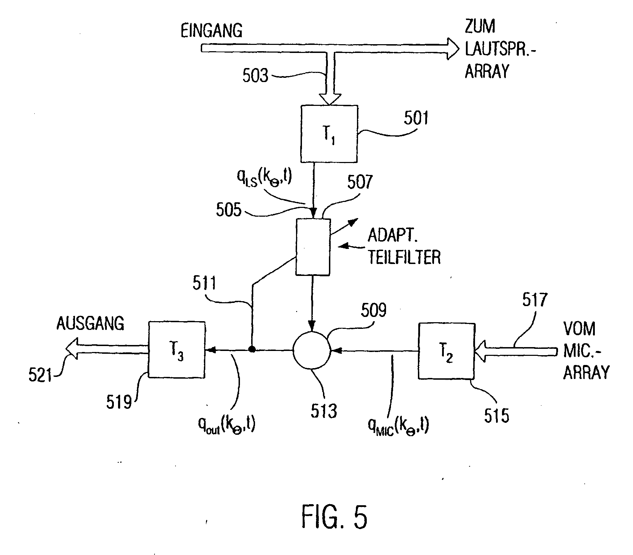

In Figur 5 ist ein Ausführungsbeispiel einer erfindungsgemäßen Struktur zur akustischen Echokompensation. Die in Figur 5 dargestellte Struktur weist einen Transformationsblock 501 mit einem Eingang 503 sowie einem Ausgang 505 auf. Der Ausgang 505 ist mit einem adaptiven Filter 507 gekoppelt. Das adaptive Filter 507 weist einen Ausgang 509 sowie einen Adaptionseingang 511 auf. Der Adaptionseingang 511 ist mit einem Ausgang eines Subtrahierers 513 gekoppelt. Der Subtrahierer umfaßt einen Eingang, der mit dem Ausgang 509 des adaptiven Filters 507 gekoppelt ist, sowie einen weiteren Eingang, der mit einem Transformationsblock 515 gekoppelt ist. Der Transformationsblock 515 hat einen Eingang 517. Der Ausgang des Addierers 513 ist ferner mit einem Eingang eines Transformationsblocks 519 gekoppelt, der einen Ausgang 521 aufweist.

Im Folgenden wird die Funktionalität der in Figur 5 dargestellten Anordnung erklärt.

Die Eingangssignale, die zum Lautsprecher-Array hingeführt werden, um die Lautsprecher anzuregen, werden dem Transformationsblock 501 zugeführt, der ausgebildet ist, um aus den Eingangssignalen die Wellenfeldkomponenten zu bestimmen, wobei beispielsweise die Transformation 1a und 1 durchgeführt wird. Die Wellenfeldkomponenten werden sodann dem adaptiven Filter 507 zugeführt, und es wird eine adaptive Filterung der Komponenten durchgeführt, wie es bereits im Zusammenhang mit dem in Figur 3 dargestellten Ausführungsbeispiel erörtert worden ist. Die vom Mikrofon-Array herkommenden Ausgangssignale werden zu einer Wellenfeldzerlegung herangezogen, um Wellenfeldkomponenten des Empfangssignals zu bestimmen. Hierzu wird der Transformationsblock 515 herangezogen, wobei beispielsweise die oben beschriebene Transformation 2 durchgeführt wird. Die verarbeiteten Wellenfeldkomponenten am Ausgang des Subtrahierers 513, der auch ein Addierer sein kann, werden dem Transformationsblock 519 zugeführt, der ausgebildet ist, um das verarbeitete Wellenfeld zu rekonstruieren, wobei beispielsweise die beschriebene Transformation 3 ausgeführt wird. Am Ausgang 521 liegt dann das verarbeitete Wellenfeld vor.

Die in Figur 5 dargestellte Struktur zur akustischen Echokompensation kann dazu herangezogen werden, um die Lautsprecher von den Mikrofonen zu entkoppeln. Die Echokompensation wird erfindungsgemäß in dem Wellenfeldbereich durchgeführt.

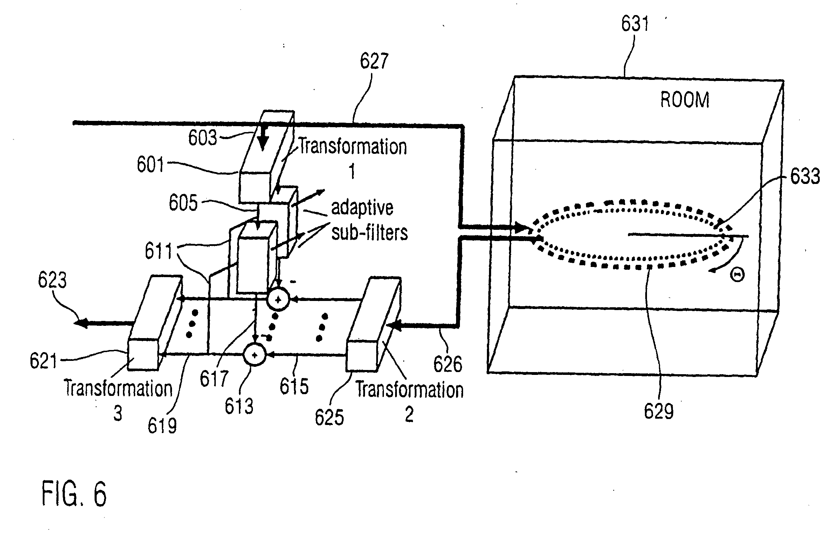

In Figur 6 ist eine weitere Vorrichtung zur akustischen Echokompensation gemäß einem weiteren Ausführungsbeispiel der vorliegenden Erfindung dargestellt, wobei der in Figur 6 dargestellten Struktur der bereits im Zusammenhang mit Figur 5 diskutierte erfindungsgemäße Aufbau zur akustischen Echokompensation zugrunde liegt.

Die in Figur 6 dargestellte Struktur, zur Echokompensation weist einen Transformationsblock 601 auf, der einen Eingang 603 sowie eine Mehrzahl von Ausgängen 605 aufweist. Die Mehrzahl von Ausgängen 605 ist mit einer Mehrzahl von adaptiven Subfiltern 607 gekoppelt, wobei jedes der adaptiven Subfilter einen Ausgang 609 sowie einen Adaptionseingang 611 aufweist. Jedes der adaptiven Subfilter 609 ist mit einem Subtrahierer 613 gekoppelt, der auch ein Addierer sein kann. Jeder der Subtrahierer 613 hat einen Eingang 615, einen Eingang 617, mit dem ein Ausgang des jeweiligen adaptiven Subfilters 607 gekoppelt ist, sowie einen Ausgang 619. Mit der Mehrzahl der Ausgänge 619 der Mehrzahl der Subtrahierer 613 ist ein Transformationsblock 621 gekoppelt, der einen Ausgang 6 2 3 aufweist.

Das in Figur 6 dargestellte Ausführungsbeispiel weist ferner einen Transformationsblock 625 auf, der einen Eingang 626 sowie eine Mehrzahl von Ausgängen aufweist, die mit der Mehrzahl der Eingänge 615 der Mehrzahl der Subtrahierer 613 gekoppelt sind.

Der Eingang 603 des Transformationsblocks 601 ist mit einer Übertragungsstrecke 627 gekoppelt. Die Übertragungsstrecke 627 ist ferner mit einem Lautsprecher-Array 629, das in einem Raum 631 zirkular aufgestellt ist, gekoppelt. In dem Raum 631 ist ferner ein Mikrofon-Array 633 zirkular angeordnet, wobei die diskreten Empfangseinrichtungen (Mikrofone) ein Ausgangssignal liefern, das dem Transformationsblock 625 über den Eingang 626 zur Verfügung steht.

Die geometrische Position einer jeden Sende- bzw. Empfangseinrichtung (Lautsprecher bzw. Mikrofone) ist durch den in Figur 6 eingezeichneten Winkel $\Theta$ und aus dem jeweiligen Radius bestimmt, solange alle Mikrophone und Lautsprecher in einer Ebene liegen.

In dem in Figur 6 dargestellten Ausführungsbeispiel sind der Einfachheit halber sowohl zirkulare Lautsprecher als auch Mikrofon-Arrays angenommen, so dass eine Identifikation in der dadurch aufgespannten Ebene durchgeführt wird. Um das Wellenfeld vollständig (einschließlich einer Richtungsinformation) zu erfassen, besteht das Mikrofon-Array bevorzugt aus speziellen Mikrofonen, aus sogenannten Soundfield-Mikrofonen, wie sie aus der Schrift D.S. Jagger, "Recent developments and improvements in soundfield microphone technology", Preprint 2064 of 75th AES Convention, Paris, März 1984 bekannt sind. Diese Mikrofone liefern sowohl einen Druckverlauf als auch die Schallschnelle auf einer Kreislinie, womit mittels einer Wellenfeldsynthese am anderen Ende des Telekommunikationssystems, das dem in Figur 6 dargestellten Ausführungsbeispiel zugrunde liegt, das Schallfeld in diesem Raum exakt reproduziert werden kann. Das mit dem Mikrofon-Array aufgenommene Schallfeld beinhaltet jedoch auch das von dem Lautsprecher-Array über den Raum herrührende Echo, das kompensiert werden soll.

In den Transformationsblöcken 601, 625 sowie 621 (Transformationseinheiten) werden nun, wie es bereits diskutiert worden ist, sowohl das unverhallte Feld des Lautsprecher-Arrays als auch das mit dem Mikrofon-Array aufgenommene verhallte Feld in beispielsweise ebene Wellenfeldkomponenten zerlegt, die sich in jeweils unterschiedliche Richtungen ausbreiten. Da in diesem Beispiel beide Arrays zirkular sind, bieten sich zu einer Beschreibung Polarkoordinaten an. Die ebenen Wellenfeldkomponenten können im Wellenzahlbereich über den Winkel O gewonnen werden (sogenannte Plane Wave Decomposition). Da diese Wellenfeldkomponenten zueinander orthogonal sind, können sie unabhängig voneinander für verschiedene Werte der Wellenzahl bezüglich des Winkels über die Arrays weiter verarbeitet werden. Auf die einzelnen Wellenfeldkomponenten werden nun bekannte einkanalige Adaptionsalgorithmen, wie sie bereits beschrieben worden sind, angewendet. Das gesamte von den Lautsprecher-Echos bereinigte Feld wird schließlich in der Transformationseinheit 621 aus den einzelnen Wellenfeldkomponenten wieder synthetisiert (rekonstruiert).

Abweichend von der in Figur 6 dargestellten Struktur sind jedoch auch andere Varianten zur akustischen Echokompensation für eine Wellenfeldsynthese denkbar. Beispielsweise liegen am Eingang 603 virtuelle Quellensignale $S_i$ vor, so dass zunächst unter Verwendung der bereits beschriebenen Transformation la eine Wellenfeldsynthese durchgeführt wird. Der Transformationsblock 601 liefert aus dadurch gewonnenen Signalen die benötigten Wellenfeldkomponenten, wie es bereits beschrieben worden ist.

Alternativ hierzu kann jedoch eine Wellenfeldsynthese für die Ausgabe und für die Filterung getrennt durchgeführt werden. In diesem Fall wird der Transformationsblock 601 um eine Wellenfeldsynthese erweitert.

Gemäß einem weiteren Ausführungsbeispiel zu der vorliegenden Erfindung liegen am Eingang 603 bereits Wellenfeldkomponenten vor, die beispielsweise ebene Wellenfeldkomponenten sind. Dieser Fall ist dann von Interesse, wenn eine effiziente Übertragung auf der Basis einer Quellenkodierung bereits im erfindungsgemäßen Transformationsbereich verwendet wird, wie es beispielsweise bei Telekonferenzsystemen der Fall sein kann. Liegen an dem Eingang 603 bereits zerlegte Wellenfeldkomponenten vor, so ist der Transformationsblock 601 ausgebildet, um die Wellenfeldkomponenten an die adaptiven Subfilter weiterzuleiten. Alternativ kann der Transformationsblock 601 weggelassen werden. Die übrigen Transformationen werden durchgeführt, wie es bereits beschrieben worden ist. Gemäß einem weiteren Ausführungsbeispiel kann auf dem Transformationsblock 621 erzichtet werden. Wird der Transformationsblock 621 weggelassen, so kann z.B. im ebenen Wellenbereich eine effiziente Übertragung oder Speicherung durchgeführt werden. Die Synthese kann dann beispielsweise erst auf der Empfangsseite der Übertragungsstrecke oder bei der Wiedergabe des Speicherinhalts erfolgen.

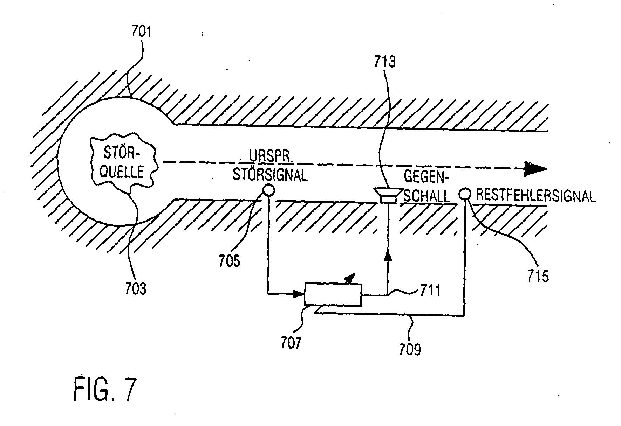

Ein weiteres Konzept, das traditionell ebenfalls zu der diskutierten Klasse der System-Identifikationsverfahren zählt, ist eine räumliche aktive Geräuschunterdrückung (ANC = Active Noise Control). Dabei wird zur Auslöschung von einem Störschall adaptiv ein Gegenschall erzeugt, wie es in Figur 7 angedeutet ist. Dabei befindet sich in einem Raum 701 eine Störquelle 703, die den Störschall hervorruft. Das ursprüngliche Störsignal wird von einer Empfangseinrichtung 705 empfangen, und ein darauf basierendes Signal wird einem adaptiven Filter 707 zugeführt. Das adaptive Filter 707 weist einen Adaptionseingang 709 sowie einen Ausgang 711 auf, wobei der Ausgang 711 mit einem Lautsprecher 713 zum Erzeugen des Gegenschalls verbunden ist. Ein Restfehlersignal wird von einer weiteren Empfangseinrichtung 715 aufgenommen, und ein darauf basierendes Signal wird an den Adaptionseingang 709 des Adaptionsfilters 707 angelegt. Wie es in Figur 7 dargestellt ist, breitet sich ein Schallfeld in die durch den eingezeichneten Pfeil markierte Richtung aus. Das Filter wird dabei solange adaptiert, bis ein Gegenschall erzeugt wird, der den Störschall möglichst vollständig kompensiert, so dass die weitere Empfangseinrichtung 715 im Idealfall kein Signal erfassen kann.

Gemäß einem weiteren Ausführungsbeispiel der vorliegenden Erfindung kann eine aktive Geräuschunterdrückung bereits im Wellenbereich durchgeführt werden.

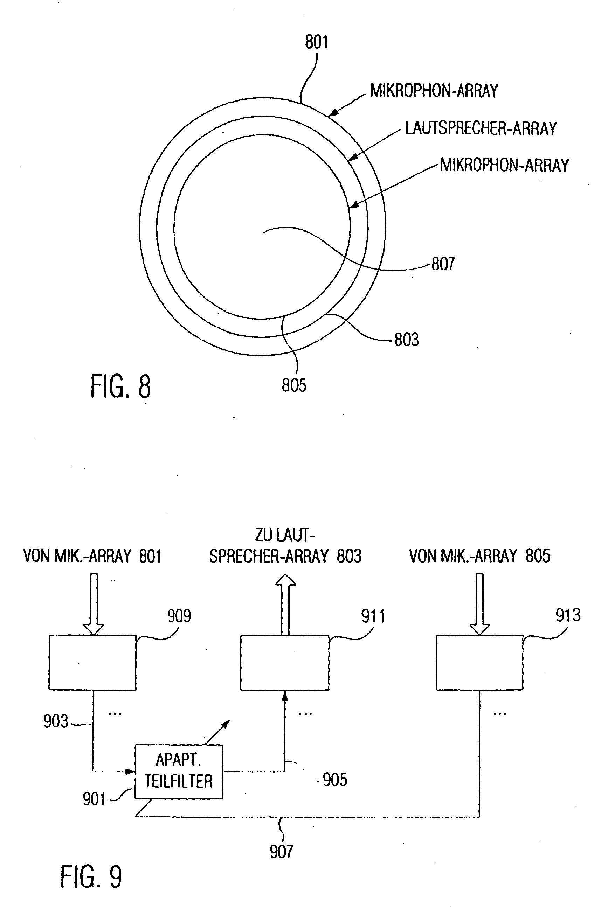

In Figur 8 ist ein Ausführungsbeispiel einer erfindungsgemäßen Anordnung eines Mikrofon-Arrays 801, eines Lautsprecher-Arrays 803 sowie eines Mikrofon-Arrays 805 dargestellt. Dabei sind die jeweiligen Arrays kreisförmig angeordnet. Das Mikrofon-Array 805 hat dabei den kleinsten Radius. Um das Mikrofon-Array 805 herum ist kreisförmig das Lautsprecher-Array 803 angeordnet. Um das Lautsprecher-Array 803 herum ist kreisförmig das Mikrofon-Array 801 mit dem größten Radius angeordnet. Kommt eine Störung von außen, so ist nun das Ziel, einen derartigen Gegenschall zu erzeugen, so dass in einem Innengebiet 807 Ruhe herrscht. Erfindungsgemäß wird eine mehrdimensionale Erweiterung der aktiven Geräuschunterdrückung dadurch erzielt, dass die Lautsprecher und Mikrofone in Fig. 7 jeweils durch die erwähnten Arrays ersetzt werden. Im Transformationsbereich wird eine Adaption durchgeführt, wie sie bereits im Zusammenhang mit der Echokompensation gezeigt warden ist. Dabei liefert das Mikrofon-Array 801 eine Referenz für ein Störfeld. Das Mikrofon-Array 805 liefert ein Feld des Restfehlers.

Figur 9 zeigt eine resultierende Struktur zur aktiven Geräuschunterdrückung für den oben diskutierten Fall, wobei der Einfachheit halber die Struktur für eine Wellenfeldkomponente dargestellt ist.

Die in Figur 9 dargestellte Vorrichtung umfasst ein adaptives Teilfilter 901, das einen Eingang 903 sowie einen Ausgang 905 umfasst. Das adaptive Teilfilter 901 weist ferner einen Adaptionseingang 907 auf. Die von dem Mikrofon-Array 801 kommenden Signale werden von einem Transformationsblock 909 empfangen, wobei der Transformationsblock 909 ausgebildet ist, um an den Eingang 903 Wellenfeldkomponenten des von dem Mikrofon-Array 801 empfangenen Feldes zu liefern. Der Ausgang 905 des adaptiven Teilfilters 901 ist mit einem Transformationsblock 911 verbunden, der ausgebildet ist, um eine Rekonstruktion des Wellenfeldes auf der Basis einer Überlagerung der Wellenfeldkomponenten durchzuführen, und um das Lautsprecher-Array 803 anzuregen. Das MikrofonArray 805 liefert, ansprechend auf ein Empfangsfeld, ein Ausgangssignal an einen Transformationsblock 913, der ausgebildet ist, um Wellenfeldkomponenten des von dem Mikrofon-Array 805 abgegriffenen Empfangsfeldes zu bestimmen und diese an den jeweiligen Adaptionseingang 907 des Adaptions-Teilfilters zu liefern. Das Adaptions-Teilfilter ist ausgebildet, um eine Adaption der Filterkoeffizienten durchzuführen, wie sie bereits diskutiert worden ist. Ist das Filter adaptiert, so wird das Lautsprecher-Array 803 derart angeregt, dass im Innengebiet 807 die von außen kommende Störung kompensiert wird.

Gemäß einem weiteren Szenario kommt die Störung von innen. Das Ziel des Adaptionsalgorithmus besteht nun darin, im Außengebiet, d.h. im Gebiet außerhalb der Mikrofon-Anordnung, einen derartigen Gegenschall zu erzeugen, so dass die Störung kompensiert wird. Erfindungsgemäß wird hierfür das in Figur 9 dargestellte Blockschaltbild gespiegelt, wobei die Rollen der Mikrofon-Arrays 805 und 801 vertauscht werden.

Gemäß einem weiteren Szenario kommt die Störung sowohl von innen als auch von außen. In diesem Fall wird erfindungsgemäß eine parallele Verwendung des in Figur 9 dargestellten Blockschaltbilds und dessen gespiegelten Version notwendig. In diesem Fall ist eine Verarbeitung von einlaufenden und auslaufenden Wellenfeldkomponenten bei der Aufnahme und Wiedergabe notwendig. Um die Ausbreitungsrichtungen unterscheiden zu können, ist es notwendig, dass von den jeweiligen Mikrofon-Arrays sowohl Schalldrücke als auch die Schallschnellen (zumindest in Normalen-Richtung) gemessen werden.

Neben der Systemidentifikation spielt eine inverse Systemmodellierung eine wichtige Rolle, um beispielsweise ein Ausgangssignal eines Systems zu filtern. Handelt es sich bei den Filterkoeffizienten um Entzerrer- Koeffizienten, so beschreiben diese eine inverse Übertragungscharakteristik des betrachteten Systems.

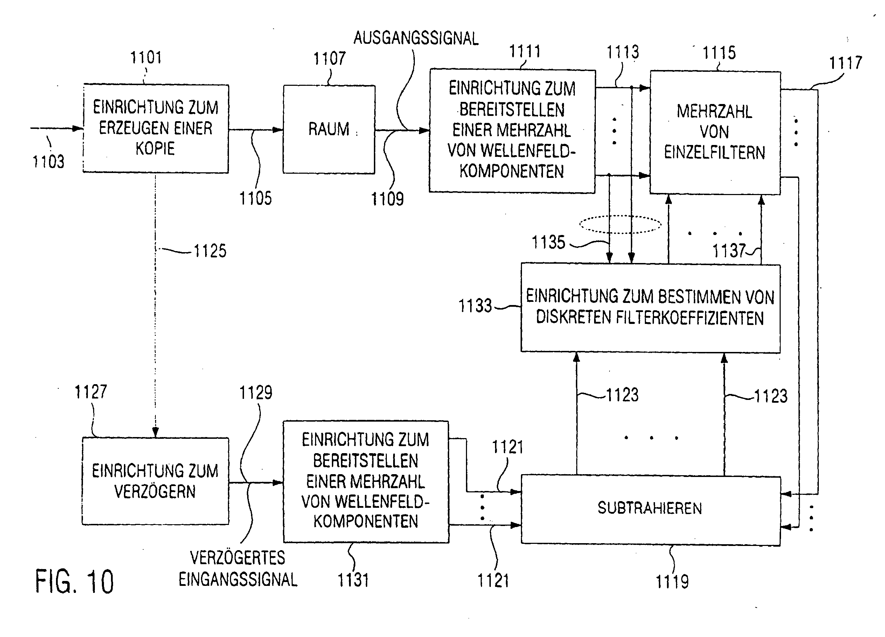

Figur 10 zeigt ein Ausführungsbeispiel einer Vorrichtung zum Erfassen einer inversen Übertragungscharakteristik eines Raumes bei einer Ausbreitung eines Wellenfeldes, wobei das Wellenfeld, ansprechend auf ein Eingangssignal, von an bestimmten geometrischen Positionen angeordneten diskreten Sendeeinrichtungen erzeugt wird. Das Wellenfeld breitet sich aus, und ein

Empfangswellenfeld wird an vorbestimmten geometrischen Positionen des Raumes angeordneten Empfangseinrichtungen erfasst, wie es bereits diskutiert worden ist. Die Empfangs-einrichtungen liefern, ansprechend auf das Empfangswellenfeld, ein Ausgangssignal, das als Systemausgangssignal betrachtet wird. Bei dem Wellenfeld kann es sich um ein elektromagnetisches Wellenfeld oder auch um ein akustisches Wellenfeld handeln, wie es bereits diskutiert worden ist.

Die in Figur 10 dargestellte Vorrichtung zeigt eine Einrichtung 1101 zum Erzeugen einer Kopie des Eingangssignals, das an einem Eingang 1103 der Einrichtung 1101 zum Erzeugen der Kopie anliegt. Die Einrichtung 1101 zum Erzeugen der Kopie hat ferner einen Ausgang 1105, über den eine Mehrzahl von diskreten Sendeeinrichtungen angesteuert wird, die in einem Raum 1107 angeordnet sind. In dem Raum 1107 ist eine Mehrzahl von diskreten Empfangseinrichtungen angeordnet, die mit einem Ausgang 1109, an dem, ansprechend auf das Empfangswellenfeld, das Ausgangssignal lieferbar ist, verbunden sind. Der Ausgang 1109 ist mit einer Einrichtung 1111 zum Bereitstellen einer Mehrzahl von Wellenfeldkomponenten gekoppelt, wobei die Einrichtung 1111 zum Bereitstellen der Mehrzahl von Wellenfeldkomponenten eine Mehrzahl von Ausgängen 1113 aufweist, die mit einer Mehrzahl von Einzelfiltern 1115 gekoppelt ist. Die Einrichtung 1111 zum Bereitstellen der Mehrzahl von Wellenfeldkomponenten und die Mehrzahl von Einzelfiltern 1115 ergeben zusammen die bereits diskutierte Vorrichtung zum Verarbeiten eines Eingangssignals. Die Mehrzahl 1115 von Einzelfiltern hat eine Mehrzahl 1117 von Ausgängen, die mit einer Mehrzahl von Eingängen eines Subtrahierers 1119, der auch ein Addierer sein kann, gekoppelt sind. Der Subtrahierer 1119 hat ferner eine Mehrzahl von weiteren Eingängen 1121 sowie eine Mehrzahl von Ausgängen 1123.

Die Einrichtung 1101 zum Erzeugen der Kopie hat einen weiteren Ausgang 1125, der mit einem Eingang einer Einrichtung 1127 zum Verzögern verbunden ist. Die Einrichtung 1127 zum Verzögern hat einen Ausgang 1129, der mit einer Einrichtung 1131 zum Bereitstellen einer Mehrzahl von Wellenfeldkomponenten gekoppelt ist. Die Einrichtung 1131 zum Bereitstellen der Mehrzahl von Wellenfeldkomponenten hat eine Mehrzahl von Ausgängen, die mit den Eingängen 1121 des Subtrahierers 1119 verbunden sind. Die Mehrzahl der Ausgänge 1123 des Subtrahierers 1119 ist mit einer Mehrzahl von Eingängen einer Einrichtung 1133 zum Bestimmen von diskreten Filterkoeffizienten gekoppelt. Die Einrichtung 1133 zum Bestimmen von diskreten Filterkoeffizienten hat eine Mehrzahl von weiteren Eingängen 1135, die mit den Ausgängen 1113 der Einrichtung 1111 zum Bereitstellen der Mehrzahl von Wellenfeldkomponenten gekoppelt sind. Die Einrichtung 1133 zum Bestimmen von diskreten Filterkoeffizienten hat ferner eine Mehrzahl von Ausgängen 1137, die mit der Mehrzahl von Einzelfiltern 1115 gekoppelt sind.

Die Einrichtung 1101 zum Erzeugen der Kopie kann beispielsweise ein Verzweiger sein, das an den Ausgängen 1105 und 1125 exakte Kopien des Eingangssignals 1103 liefert. In dem unteren Zweig der in Figur 10 dargestellten Vorrichtung befindet sich die Einrichtung 1127 zum Verzögern, die die Kopie des Eingangssignals derart verzögert, dass eine Signalverzögerung in dem oberen Zweig der in Figur 10 dargestellten Vorrichtung, bestehend ausdem Raum 1107 der Einrichtung 1111 zum Bereitstellen der Mehrzahl von Wellenfeldkomponenten sowie der Mehrzahl von Einzelfiltern 1115, ausgeglichen wird..

Der Subtrahierer 1119 erzeugt aus den verzögerten Wellenfeldkomponenten sowie aus den an den Ausgängen von Einzelfiltern anliegenden gefilterten Wellenfeldkomponenten Referenzwellenfeldkomponenten, die über die Ausgänge 1123 der Einrichtung 1133 zum Bestimmen von diskreten Filterkoeffizienten zugeführt werden. Die Differenzwellenfeldkomponenten werden aus einer Differenz zwischen den gefilterten Wellenfeldkomponenten und den verzögerten Wellenfeldkomponenten gebildet. Die Einrichtung 1133 zum Bestimmen von diskreten Filterkoeffizienten ist ausgebildet, um aus den Differenzwellenfeldkomponenten und den Wellenfeldkomponenten, die von der Einrichtung 1111 zum Bereitstellen der Mehrzahl von Wellenfeldkomponenten geliefert werden, die diskreten Filterkoeffizienten adaptiv zu bestimmen, und um die diskreten Filterkoeffizienten an die Vorrichtung zum Verarbeiten des Eingangssignals (an die Mehrzahl von Einzelfiltern 1115) zu liefern, wobei die diskreten Filterkoeffizienten die erfasste inverse Übertragungscharakteristik des Raumes sind. Die Adaption der Filterkoeffizienten wird solange durchgeführt, bis der Einfluss des Raumes auf die Wellenfeldkoeffizienten des Empfangswellenfeldes durch die Mehrzahl von Einzelfiltern 1115 rückgängig gemacht worden ist.

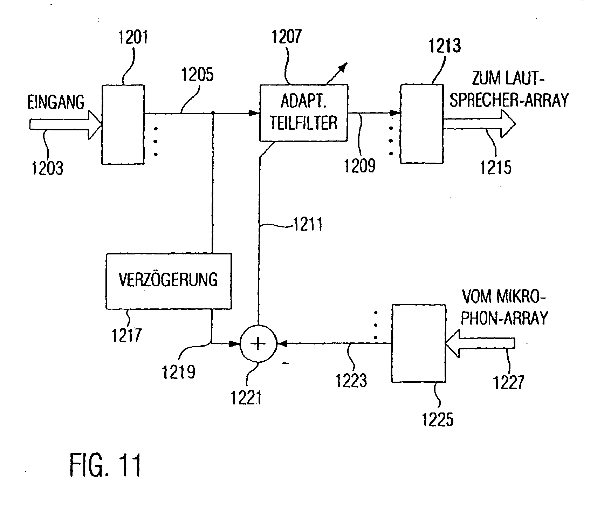

In Figur 11 ist ein weiteres Ausführungsbeispiel einer Vorrichtung zur inversen Modellierung dargestellt, wobei übersichtlichkeitshalber die Struktur nur für eine Mode dargestellt ist. Die in Figur 11 dargestellte Vorrichtung umfasst einen Transformationsblock 1201 mit einem Eingang 1203 und einem Ausgang 1205. Der Ausgang 1205 ist mit einem Eingang eines adaptiven Teilfilters 1207 gekoppelt, das einen Ausgang 1209 sowie einen Adaptionseingang 1211 aufweist. Der Ausgang 1209 des adaptiven Teilfilters 1207 ist mit einem Transformationsblock 1213 gekoppelt, der einen Ausgang 1215 aufweist.

Der Ausgang 1205 des Transformationsblocks 1201 ist ferner mit einem Eingang eines Verzögerungsglieds 1217 gekoppelt, wobei das Verzögerungsglied 1217 einen Ausgang 1219 aufweist, der mit einem Eingang eines Subtrahierers 1221 gekoppelt ist, der auch ein Addierer sein kann. Der Subtrahierer 1221 hat ferner einen weiteren Eingang 1223, der mit einem Ausgang eines Transformationsblocks 1225, der einen Eingang 1227 aufweist, gekoppelt ist. Der Ausgang des Subtrahierers 1221 ist mit dem Eingang 1211 des adaptiven Teilfilters 1207 gekoppelt.

Die Funktionalität der in Figur 11 dargestellten Komponenten wurde bereits im Zusammenhang mit den diskutierten Ausführungsbeispielen beschrieben. Der Transformationsblock 1201 führt beispielsweise die Transformation 1 durch, bei der aus dem Eingangssignal Wellenfeldkomponenten abgeleitet werden, die dem adaptiven Teilfilter 1207 zugeführt werden. Nach der Filterung werden die gefilterten Wellenfeldkomponenten dem Transformationsblock 1213 zugeführt, der eine Rekonstruktion der Wellenfeldkomponenten durchführt, um ein Wellenfeld zu erzeugen, das in Form eines Anregungssignals zu einem Lautsprecher-Array verschickt wird. Das Verzögerungsglied 1217 dient dazu, die Signalverzögerungen auszugleichen. Ein von einem Mikrofon-Array erfasstes Empfangswellenfeld wird als ein Empfangssignal dem Transformationsblock 1225 zugeführt, der beispielsweise die Transformation 2 durchführt und an den Ausgängen die Wellenfeldkomponenten des empfangenen Wellenfeldes liefert. Der Subtrahierer 1221 bestimmt dann eine Differenz zwischen den verzögerten Wellenfeldkomponenten sowie den Wellenfeldkomponenten des Empfangswellenfeldes und liefert Differenzwellenfeldkomponenten an die Adaptionseingänge der adaptiven Teilfilter. Das von dem Mikrofon-Array gelieferte Signal dient beispielsweise dazu, ein Fehlersignal zu erzeugen, um eine Adaption anzutreiben, so dass die Filterkoeffizienten richtig bestimmt werden. Die in Figur 11 dargestellte räumliche Entzerrungs-Raumkompensations-Struktur dient dazu, das an einem Lautsprecher-Array abgestrahlte Schallfeld so zu modifizieren, dass bei einem Zuhörer der Einfluss des Wiedergaberaums, z.B. in Form der Reflektionen an den Wänden, minimiert wird. Das Verzögerungsglied 1217 erzeugt eine zeitliche Verzögerung der Wellenfeldkomponenten, damit das adaptive System kausal ist.

In Abhängigkeit von einer Anordnung der Transformationsblöcke sind mehrere Varianten einer Raumkompensation möglich. Liegt an dem Eingang 1203 beispielsweise ein Lautsprechersignal an, so werden die Lautsprechersignale, wie es bereits diskutiert worden ist, dazu herangezogen, um die Wellenfeldkomponenten des abzustrahlenden Wellenfeldes zu bestimmen. Der Transformationsblock 1213 führt beispielsweise die Extrapolation des Wellenfeldes an den Lautsprecherpositionen durch, wie es bereits im Zusammenhang mit der Echokompensation beschrieben worden ist. Der Transformationsblock 1225 zerlegt die Mikrofonsignale, wie es bereits beschrieben worden ist.

Alternativ können an dem Eingang 1203 virtuelle Quellen anliegen, wie es bereits diskutiert worden ist. Der Transformationsblock 1201 liefert dabei eine Zerlegung der virtuellen Quellen, wie es bereits beschrieben worden ist Die Transformationsblöcke 1213 sowie 1225 ändern dann ihre Funktionalität nicht.

Alternativ ist es jedoch auch denkbar, dass an dem Eingang 1203 bereits ein zerlegtes Wellenfeld in Form von Wellenfeldkomponenten anliegt. In diesem Fall kann auf den Transformationsblock 1201 verzichtet werden. Die Transformationsblöcke 1213 und 1225 behalten jedoch weiterhin ihre Funktionalität. Die inverse Modellierung, wie sie bereits beschrieben worden ist, spielt eine wichtige Rolle bei einer mehrdimensionalen Raumkompensation für akustische Wiedergabesysteme, basierend auf einer Wellenfeldsynthese. Dabei sollen hochqualitative akustische Wiedergabesysteme ein aufgenommenes oder synthetisch erzeugtes Schallfeld so realitätsgetreu wie möglich wiedergeben. Gegenüber den auf stereophonischen Prinzipien basierenden Wiedergabesystemen bietet Wellenfeldsynthese viele Vorteile. Der theoretische Ansatz der Wellenfeldsynthese geht aber von einer Freiraumausbreitung der Lautsprechersignale aus. In realen Wiedergaberäumen sind diese Voraussetzungen allerdings in den meisten Fällen nicht gegeben, jedes Lautsprechersignal erzeugt bei der Wiedergabe Reflektionen an den Wänden des Wiedergaberaumes, die nicht in den theoretischen Grundlagen der reinen Wellenfeldsynthese berücksichtigt sind. Diese ungewollten Anteile im Schallfeld können dann zu Verfälschungen bei der Wiedergabe führen. Die Grundidee der Lautsprecherkompensation ist, die vorhandenen Lautsprecher auch zu einer Kompensation der Akustik des Wiedergaberaums zu nutzen. Gegenüber den klassischen Verfahren zur Raumkompensation, die aus der Schrift L.D. Fielder, "Practical limits for room equalization", Audio engineering society 110th convention, New York, September 2001 bekannt sind, bietet die Wellenfeldsynthese dabei die Möglichkeit, Raumkompensation für einen großen räumlichen Hörbereich durchzuführen.

In der praktischen Umsetzung wird das gewünschte Wellenfeld mit einem gemessenen real vorhandenen Wellenfeld verglichen, um Kompensationsfilter zu adaptieren, was der inversen Modellierung entspricht. Auch hier gelten die bereits erwähnten Probleme bezüglich des Aufwandes und der Konvergenz-Eigenschaften bei der Adaption der Kompensationsfilter.

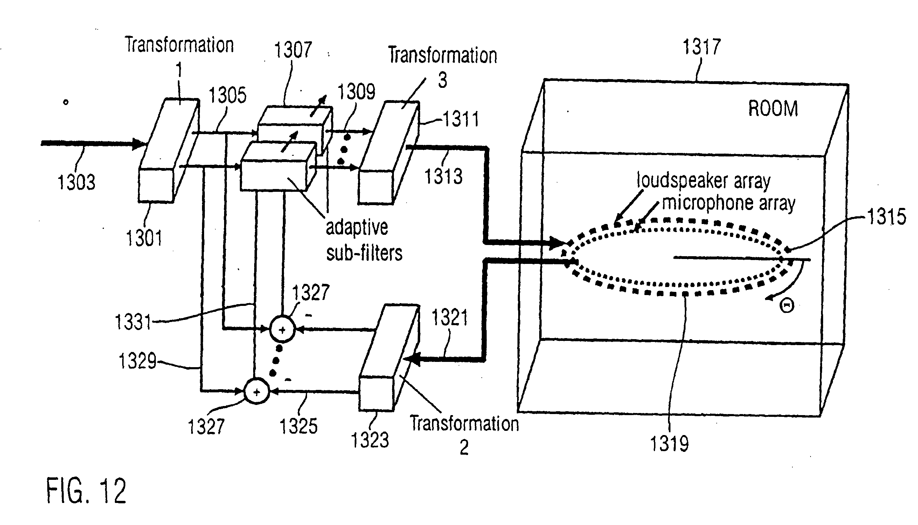

Figur 12 zeigt ein Ausführungsbeispiel einer Vorrichtung zur akustischen Raumkompensation.

Die in Figur 12 dargestellte Vorrichtung weist einen Transformationsblock 1301 auf, der einen Eingang 1303 sowie eine Mehrzahl von Ausgängen 1305 aufweist. Jeder der Ausgänge 1305 ist mit einem adaptiven Subfilter 1307 gekoppelt, wobei die Mehrzahl der Ausgänge des jeweiligen Filters mit einer Mehrzahl von Eingängen 1309 des Transformationsblocks 1311 gekoppelt ist. Der Transformationsblock 1311 hat einen Ausgang 1313, der mit einem Lautsprecher-Array 1315, das in einem Raum 1317 angeordnet ist, gekoppelt ist.

In dem Raum 1317 ist ferner ein Mikrofon-Array 1319 angeordnet, das einen Ausgang hat, der mit einem Eingang 1321 eines Transformationsblocks 1323 gekoppelt ist. Der Transformationsblock 1323 hat eine Mehrzahl von Ausgängen 1325, die mit einer Mehrzahl von Subtrahierem 1327 gekoppelt sind, die auch Addierer sein können. Die Mehrzahl der Subtrahierer 1327 weist ferner jeweils einen weiteren Eingang 1329 auf, der mit einem jeweiligen Adaptionseingang 1331 eines jeweiligen adaptiven Filters 1307 gekoppelt ist. Zwischen den Eingängen 1329 und den Subtrahierern 1327 können auch Verzögerungsglieder angeordnet sein.

Die in Figur 12 dargestellten Einrichtungen weisen eine Struktur auf, wie sie bereits im Zusammenhang mit den oben stehend diskutierten Ausführungsbeispielen beschrieben worden ist. Die Aufgabe der adaptiven Filter 1307 besteht darin, die von dem Transformationsblock 1301 gelieferten Wellenfeldkomponenten (Transformation 1) derart zu filtern, dass der Raumeinfluss die durch die adaptiven Filter 1307 eingebrachte Charakteristik gerade kompensiert, so dass die Wellenfeldkomponenten, die von dem Transformationsblock 1323, der die Transformation 2 durchführt, den ursprünglichen Wellenfeldkomponenten entsprechen.

Die in Figur 12 dargestellte Vorrichtung zeigt eine effiziente Realisierung einer Raumkompensation mit den bereits beschriebenen Techniken zur Signalverarbeitung gemäß der vorliegenden Erfindung. Das gewünschte Wellenfeld wird zunächst beispielsweise in ebene Wellenfeldkomponenten zerlegt. Die Raum-Kompensationsfilter 1307 wirken dann unabhängig voneinander auf diesen ebenen Wellenfeldkomponenten, die im Idealfall orthogonal zueinander sind. Aus den gefilterten ebenen Wellenfeldkomponenten werden dann die Lautsprechersignale entsprechend der Geometrie des Lautsprecher-Arrays 1315 gewonnen. In diesem Anwendungsbeispiel sind das verwendete Lautsprecher-Array 1315 und das Mikrofon-Array 1319, das zu einer Analyse des Raumeinflusses herangezogen wird, zirkulär. Aus den Mikrofonsignalen kann durch eine effiziente Implementierung das gemessene Signal wieder in ebene Wellenfeldkomponenten zerlegt werden, beispielsweise unter Verwendung der Transformation 2. Durch einen Vergleich des gewünschten Wellenfeldes in diesem Bereich mit dem real gemessenen Wellenfeld können die Kompensationsfilter 1307 effizient adaptiert werden. Durch eine Orthogonalität der Wellenfeldkomponenten können auch in diesem Fall wieder einkanalige Adaptions-Algorithmen, wie sie bereits beschrieben worden sind, angewandt werden, so dass eine effiziente mehrdimensionale akustische Raumkompensation durchgeführt werden kann.

Gemäß einem weiteren Aspekt der vorliegenden Erfindung kann 15 das erfinderische Konzept in Prädiktionsstrukturen eingesetzt werden.

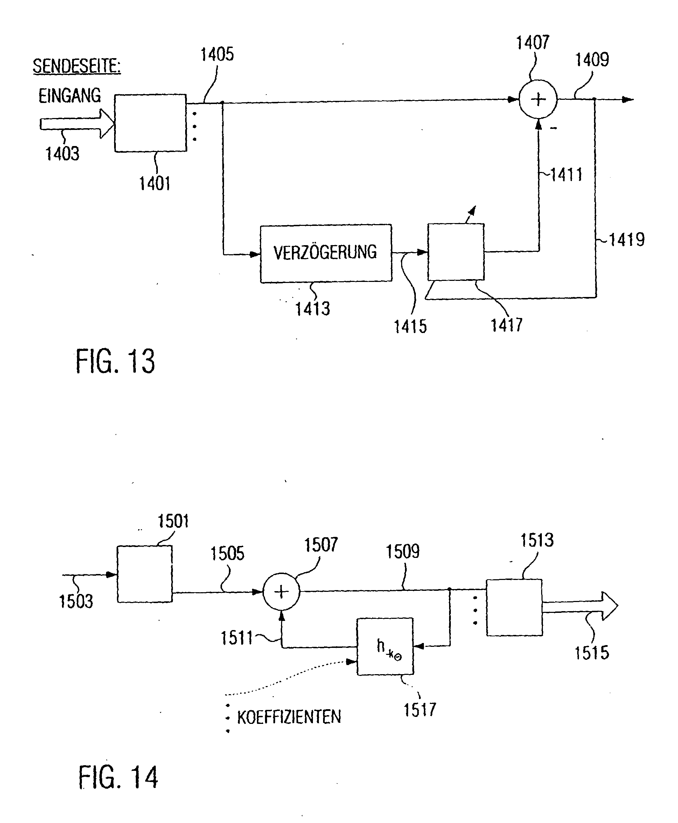

Figur 13 zeigt ein erstes Ausführungsbeispiel einer Prädiktionsvorrichtung mit einem Transformationsblock 1401, der einen Eingang 1403 sowie einen Ausgang 1405 aufweist. Der Ausgang 1405 ist mit einem Subtrahierer 1407 gekoppelt, der auch ein Addierer sein kann. Der Subtrahierer 1407 weist ferner einen Ausgang 1409 sowie einen weiteren Eingang 1411 auf. Der Ausgang 1405 des Transformationsblocks 1401 ist ferner mit einem Verzögerungsglied 1413 gekoppelt, das einen Ausgang 1415 aufweist, der mit einem Adaptionsfilter 1417 gekoppelt ist. Das Adaptionsfilter 1417 weist einen Ausgang auf, der mit dem weiteren Eingang 1411 des Subtrahierers 1407 gekoppelt ist, sowie einen Adaptionseingang 1419, der mit dem Ausgang des Subtrahierers 1407 verbunden ist. Der Transformationsblock 1401 ist beispielsweise ausgebildet, um das an dem Eingang 1403 anliegende Signal, das beispielsweise ein auszusendendes Wellenfeld charakterisiert, zu einer Zerlegung des auszusendenden Wellenfeldes in Wellenfeldkomponenten heranzuziehen. Die Eingangssignale sind die wiederzugebenden Lautsprecherinhalte auf der Sendeseite bzw. Aufnahmekanäle eines Mikrofon-Arrays. Handelt es sich bei dem Wellenfeld um ein akustisches Schallfeld, so kann, wie es bereits erwähnt worden ist, aus dem Eingangssignal eine Information über die Schalldruckverteilung und über die Schallgeschwindigkeit gewonnen werden. Transformationsblock 1401 führt dabei eine Zerlegung des Wellenfeldes in räumlich orthogonale Komponenten durch, wie es bereits im Fall der Echokompensation beschrieben worden ist. Umfasst das Eingangssignal einen informationstragenden Anteil (Informationsanteil) und eine Redundanz, die vorhersehbar ist, so besteht das Ziel der Filteradaption darin, die verzögerten Wellenfeldkomponenten am Ausgang des Verzögerungsglieds 1413 derart zu filtern, dass nach einer Subtraktion, die in dem Subtrahierer 1407 durchgeführt wird, an dem Ausgang 1409 ein Signal entsteht, das im Idealfall nur den Informationsanteil umfasst. Dieses Signal 1419 (Prädiktionsfehlersignal) wird ferner dazu verwendet, um eine Adaption des adaptiven Filters 1417 zu steuern.

Empfangsseitig werden alle Komponenten des Prädiktionsfehlersignals erfasst und ein Ausgangssignal wird derart gefiltert, dass die im Sender durchgeführte Prädiktion rückgängig gemacht wird, d.h., dass das ursprüngliche Signal aus dem Empfangssignal aus dem nicht vorhersehbaren Informationsanteil und der vorhersehbaren Redundanz wieder zusammengesetzt wird.

In Figur 14 ist eine Vorrichtung zum Wiedergewinnen eines Signals aus einem empfangenen Prädiktionsfehlersignal dargestellt. Die in Figur 14 dargestellte Vorrichtung zeigt einen Transformationsblock 1501 mit einem Eingang 1503 und einem Ausgang 1505. Der Ausgang 1505 ist mit einem Addierer 1507 gekoppelt, der einen Ausgang 1509 sowie einen weiteren Eingang 1511 aufweist. Der Ausgang 1509 des Addierers 1507 ist mit einem Eingang eines Transformationsblocks 1513 gekoppelt, der einen Ausgang 1515 aufweist. Mit dem Ausgang 1509 des Addierers 1507 ist ferner ein adaptives Filter 1517 gekoppelt, das einen Ausgang hat, der mit dem weiteren Eingang 1511 des Addierers verbunden ist.

Ein Empfangssignal, das an dem Eingang 1503 anliegt, wird dazu verwendet, um ein zugrundeliegendes Empfangswellenfeld gegebenenfalls in Wellenfeldkomponenten zu zerlegen. Die als Empfangssignal anliegenden Wellenfeldkomponenten werden einem Addierer zugeführt, der eine Addition der Wellenfeldkomponenten des Empfangswellenfeldes und den gefilterten Komponenten am Ausgang des adaptiven Filters 1517 durchführt. Das adaptive Filter 1517 verarbeitet dabei die zusammengesetzten Wellenfeldkomponenten, die am Ausgang des Addierers 1507 geliefert werden. Wenn die in Figur 14 dargestellte Vorrichtung einer zu der in Figur 13 dargestellten Vorrichtung inverse Operation durchführt, ist das adaptive Filter 1517 ausgebildet, um die Filterkoeffizienten zu empfangen, wie es in Figur 14 angedeutet ist, um die Filterung durchzuführen. Bei den Filterkoeffizienten handelt es sich dann um die adaptiv eingestellten Filterkoeffizienten von dem Filter aus Figur 13. Der Transformationsblock 1513 führt beispielsweise die Transformation 3 durch, um eine Extrapolation durchzuführen, wie es bereits im Zusammenhang mit der Echokompensation beschrieben worden ist. In diesem Fall liegt an dem Ausgang 1515 ein zusammengesetztes, rekonstruiertes Wellenfeld vor.

Als eine Variante zu der in Figur 14 dargestellten Vorwärts-Prädiktion kann auch eine Rückwärts-Prädiktion eingesetzt werden. Dazu wird analog zu Fig. 13 die Rückwärts-Prädiktion, wie sie beispielsweise in B. Sklar, "Digital Communications", Prentica Hall, Englewood Cliffs, NJ, USA, 1988 beschrieben ist, für jede Wellenfeldkomponente einzeln nach der Transformationseinheit 1401 angewandt.

Die in Figuren 13 und 14 dargestellten Vorrichtungen verdeutlichen die Signalverarbeitung am Beispiel einer Mode (einer Wellenfeldkomponente). Eine mehrdimensionale Erweiterung ist möglich, in dem die in Figur 13 und 14 dargestellten Vorrichtungen vervielfacht und jeder Mode zugeordnet werden.

Wie es bereits erwähnt worden ist, umfasst das in Figur 13 bereits diskutierte Eingangssignal einen Informationsanteil und einen Redundanzanteil, wobei das zu liefernde Prädiktionsfehlersignal nur den Informationsanteil umfassen soll. Ansprechend auf das Prädiktionsfehlersignal wird ein Wellenfeld von an vorbestimmten geometrischen Positionen angeordneten diskreten Sendeeinrichtungen erzeugt, wobei das Wellenfeld ein akustisches Schallfeld oder auch ein elektromagnetisches Feld sein kann. Gemäß einem weiteren Ausführungsbeispiel der vorliegenden Erfindung umfasst die in Figur 13 dargestellte Einrichtung bei einer mehrdimensionalen Erweiterung einer Einrichtung zum Erzeugen einer Kopie des Eingangssignals, eine Einrichtung zum Bereitstellen einer Mehrzahl von Wellenfeldkomponenten aus dem Eingangssignal, eine Einrichtung zum Verzögern der Kopie des Eingangssignals sowie eine Einrichtung zum Verarbeiten der verzögerten Kopie des Eingangssignals und zum Liefern einer Mehrzahl von gefilterten Wellenfeldkomponenten aus der verzögerten Kopie des Eingangssignals. Die Vorrichtung zum Verarbeiten der verzögerten Kopie hat beispielsweise einen Aufbau, wie er bereits mehrmals diskutiert worden ist. Darüber hinaus umfasst die erfindungsgemäße Vorrichtung einen Subtrahierer zum Erzeugen einer Mehrzahl von Differenzwellenfeldkomponenten aus einer Differenz zwischen der Mehrzahl der Wellenfeldkomponenten und der Mehrzahl der gefilterten Wellenfeldkomponenten. Die Subtraktionsoperation kann jedoch auch durch einen Addierer durchgeführt werden, wobei die entsprechenden Wellenfeldkomponenten mit einem entgegengesetzten Vorzeichen versehen werden. Die erfindungsgemäße Vorrichtung zum Erzeugen eines Prädiktionsfehlersignals umfasst ferner eine Einrichtung zum Bestimmen von diskreten Filterkoeffizienten, wobei die Einrichtung zum Bestimmen von diskreten Filterkoeffizienten mit der Vorrichtung zum verarbeiten des Eingangssignals gekoppelt ist, wie es bereits diskutiert worden ist. Die Einrichtung zum Bestimmen von diskreten Filterkoeffizienten ist ferner ausgebildet, um die von der Vorrichtung zum Verarbeiten des Eingangssignals abgeleiteten Wellenfeldkomponenten zu empfangen. Die erfindungsgemäße Einrichtung zum Bestimmen von diskreten Filterkoeffizienten ist ferner mit der Mehrzahl der Einzelfilter der Vorrichtung zum Verarbeiten des Eingangssignals gekoppelt, um die diskreten Filterkoeffizienten zu liefern. Die Einrichtung zum Bestimmen von diskreten Filterkoeffizienten ist ausgebildet, um aus der Mehrzahl der Differenzwellenfeldkomponenten und aus der Mehrzahl der Wellenfeldkomponenten, die dem verzögerten Empfangssignal zugeordnet sind, die diskreten Filterkoeffizienten zu liefern, um das Prädiktionsfehlersignal durch eine Unterdrückung des Redundanzanteils bei einer Filterung zu erzeugen. Das Prädiktionsfehlersignal kann bereits aus den gefilterten Wellenfeldkomponenten bestehen. Alternativ ist es jedoch denkbar, dass das Prädiktionsfehlersignal zu einer Rekonstruktion eines Wellenfeldes herangezogen wird, wobei das rekonstruierte Wellenfeld in diesem Fall das Prädiktionsfehlersignal ist.

Ansprechend auf das Prädiktionsfehlersignal wird ein Ausgangswellenfeld von an vorbestimmten geometrischen Positionen eines Raumes angeordneten diskreten Sendeeinrichtungen erzeugt. Das Ausgangswellenfeld breitet sich in dem Raum aus, so dass ein Empfangswellenfeld von einer Mehrzahl von an vorbestimmten geometrischen Positionen des Raumes angeordneten Empfangseinrichtungen erfasst werden kann. Die Empfangseinrichtungen liefern, ansprechend auf das Empfangswellenfeld, ein Eingangssignal, aus dem ein Nutzsignal, das einen Informationsanteil und einen Redundanzanteil umfasst, rekonstruiert werden soll, wie es bereits im Zusammenhang mit der in Figur 14 dargestellten Vorrichtung diskutiert worden ist.

Gemäß einem weiteren Ausführungsbeispiel umfasst die erfindungsgemäße Vorrichtung zum Wiedergewinnen eines Nutzsignals eine Vorrichtung zum Verarbeiten des Eingangssignals, wie sie bereits diskutiert worden ist. Die Vorrichtung zum Verarbeiten des Eingangssignals weist eine Einrichtung zum Bereitstellen von Wellenfeldkomponenten auf, wie sie bereits diskutiert worden ist. Die Einrichtung zum Bereitstellen der Wellenfeldkomponenten ist verbunden mit einem Summierer, der ausgebildet ist, um die Mehrzahl der Wellenfeldkomponenten und die Mehrzahl der gefilterten Wellenfeldkomponenten, die von der Mehrzahl der Einzelfilter geliefert werden, zu addieren, und um die addierte Mehrzahl von Wellenfeldkomponenten an die Mehrzahl der Einzelfilter zum Filtern zu liefern, wobei die Mehrzahl der Einzelfilter ausgebildet ist, um die addierten Wellenfeldkomponenten unter Verwendung der diskreten Filterkoeffizienten, die bereits zum Erzeugen eines Prädiktionsfehlersignals verwendet worden sind, zu filtern. Die diskreten Filterkoeffizienten können von einer Einrichtung zum Bereitstellen von Filterkoeffizienten bereitgestellt werden. Die Einrichtung zum Bereitstellen der Filterkoeffizienten kann beispielsweise ausgebildet sein, um die Filterkoeffizienten von einem Sender, in dem eine Prädiktion durchgeführt worden ist, zu empfangen, wie das im Zusammenhang mit einer Verwendung von Prädiktionsstrukturen stets der Fall ist. Die addierte Mehrzahl von Wellenfeldkomponenten stellt in diesem Ausführungsbeispiel das wiedergewonnene Nutzsignal dar.

Wie es bereits erwähnt worden ist, kann das erfindungsgemäße Konzept auch zu einer Interferenz-Unterdrückung, oder generell zur Unterdrückung von Störsignalen, herangezogen werden. Wird beispielsweise ein Nutzwellenfeld von innerhalb eines Raumes angeordneten Sendeeinrichtungen ausgestrahlt, so kann es durch ein Störwellenfeld, das dem Nutzwellenfeld überlagert ist, gestört werden. Das Störwellenfeld kann beispielsweise von einem Störsender erzeugt werden, der in dem Raum angeordnet ist. Bei dem Störsender kann es sich beispielsweise um eine fremde Sendeeinrichtung handeln, die ebenfalls Wellenfelder ausstrahlt. Aufgrund der Überlagerung des Nutzwellenfeldes und des Störwellenfeldes entsteht ein gestörtes Empfangswellenfeld, das von innerhalb des Raumes angeordneten diskreten Empfangseinrichtungen abgegriffen werden kann. Ansprechend auf das Empfangswellenfeld wird, wie es bereits beschrieben worden ist, ein Empfangssignal generiert, das einen Störanteil und einen Nutzanteil umfasst. Das Ziel einer Interferenz-Unterdrückung besteht nun darin, den Störanteil zu minimieren.

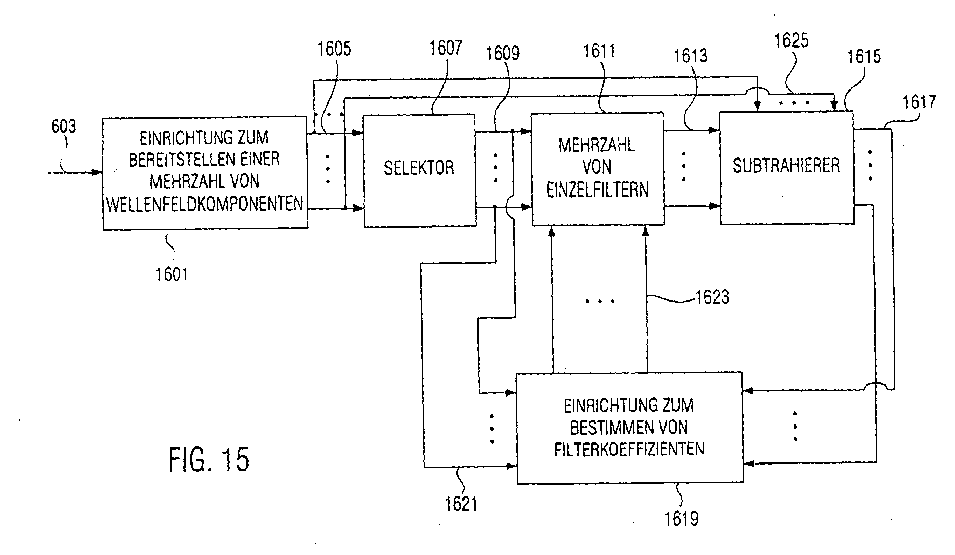

In Figur 15 ist ein Ausführungsbeispiel einer Vorrichtung zum Unterdrücken eines Störanteils in einem Empfangssignal, das einen Störanteil und einen Nutzanteil umfasst, dargestellt. Die in Figur 15 dargestellte Vorrichtung umfasst eine Einrichtung 1601 zum Bereitstellen einer Mehrzahl von Wellenfeldkomponenten, die einen Eingang 1603 sowie eine Mehrzahl von Ausgängen 1605 aufweist. Die Mehrzahl der Ausgänge 1605 sind mit einer Mehrzahl von Eingängen eines Selektors 1607 gekoppelt, wobei der Selektor 1607 eine Mehrzahl von Ausgängen 1609 aufweist. Die Mehrzahl von Ausgängen 1609 ist mit einer Mehrzahl von Einzelfiltern 1611 gekoppelt. Die Mehrzahl von Einzelfiltern 1611 hat eine Mehrzahl von Ausgängen 1613, die mit einer Mehrzahl von Eingängen eines Subtrahierers 1615 gekoppelt sind. Der Subtrahierer hat eine Mehrzahl von Ausgängen 1617, die mit einer Mehrzahl von Eingängen einer Einrichtung 1619 zum Bestimmen von Filterkoeffizienten gekoppelt ist. Die Einrichtung zum Bestimmen von Filterkoeffizienten hat ferner eine Mehrzahl von weiteren Eingängen 1621, die mit der Mehrzahl von Ausgängen 1609 des Selektors 1607 gekoppelt ist. Die Einrichtung 1619 zum Bestimmen von Filterkoeffizienten weist ferner eine Mehrzahl von Ausgängen 1623 auf, die jeweils mit einem der Mehrzahl von Einzelfiltern 1611 gekoppelt sind.

Die in Figur 15 dargestellten Einrichtungen haben einen Aufbau, wie er bereits im Zusammenhang mit den bereits besprochenen Ausführungsbeispielen erklärt worden ist, Insbesondere ist die Einrichtung 1601 zum Bereitstellen der Mehrzahl von Wellenfeldkomponenten sowie die Mehrzahl von Einzelfiltern 1611 ein Teil einer Vorrichtung zum Liefern eines verarbeiteten Eingangssignals, wie sie bereits beispielsweise im Zusammenhang mit dem in Figur 1 dargestellten Ausführungsbeispiel diskutiert worden ist. Der Selektor 1607 kann beispielsweise in der Einrichtung zum Bereitstellen integriert sein. An dem Eingang 1603 liegt ein Empfangssignal an, das, ansprechend auf das gestörte Empfangswellenfeld, von der Mehrzahl der diskreten Empfangseinrichtungen erzeugt worden ist. Die Einrichtung 1601 zum Bereitstellen der Mehrzahl von Wellenfeldkomponenten ist ausgebildet, die Wellenfeldkomponenten des Empfangssignals bereitzustellen. Die Wellenfeldkomponenten des Empfangssignals umfassen dabei die Nutzwellenfeldkomponenten, die geometrischen Positionen zugeordnet werden können, an denen die diskreten Sendeeinrichtungen angeordnet sind, sowie die Störwellenfeldkomponenten, die geometrischen Gebieten innerhalb des Raumes zugeordnet werden können, an denen beispielsweise Störquellen angeordnet sind. Der Selektor 1607 ist ausgebildet, um die Störwellenfeldkomponenten zu selektieren, um eine Schätzung der Störwellenfeldkomponenten zu erzeugen. Die Selektion kann insbesondere Zeit- , Raum- und Frequenz-selektiv stattfinden, beispielsweise auf der Basis der bekannten weiteren geometrischen Positionen des Raumes, z.B. eines Aufstellungswinkels der Störsender. Die selektierten Störwellenfeldkomponenten werden nach der Filterung durch die Mehrzahl von Einzelfiltern dem Subtrahierer 1615 zugeführt. Der Subtrahierer bildet dabei eine Differenz zwischen den gefilterten Störwellenfeldkomponenten und den Wellenfeldkomponenten, die sowohl Störwellenfeldkomponenten als auch die Nutzwellenfeldkomponenten umfassen. Die Wellenfeldkomponenten, die von der Einrichtung 1601 zum Bereitstellen der Mehrzahl von Wellenfeldkomponenten geliefert werden, liegen an einer Mehrzahl von Eingängen 1625 des Subtrahierers 1615 an. Der Subtrahierer 1615 zieht somit eine gefilterte Schätzung der Störwellenfeldkomponenten von den Wellenfeldkomponenten des Empfangswellenfeldes ab. Am Ausgang des Subtrahierers werden somit im Idealfall, das bedeutet bei einer vollständigen Adaption der Filterkoeffizienten, Wellenfeldkomponenten geliefert, die nur aus den Nutzwellenfeldkomponenten bestehen. Die Einrichtung 1619 zum Bestimmen von Filterkoeffizienten ist dabei ausgebildet, um die Filterkoeffizienten adaptiv derart einzustellen, dass die selektierten Störwellenfeldkomponenten derart gefiltert werden, dass sie durch Bildung einer Differenz unterdrückt werden können.

Ein adaptives Filter, das aus der Mehrzahl von Einzelfiltern und der Einrichtung zum Bestimmen von Filterkoeffizienten besteht, erzeugt somit eine Schätzung des Störsignals, die beispielsweise als ein Referenzsignal von der Mischung aus Nutz- und Störsignalen abgezogen wird.

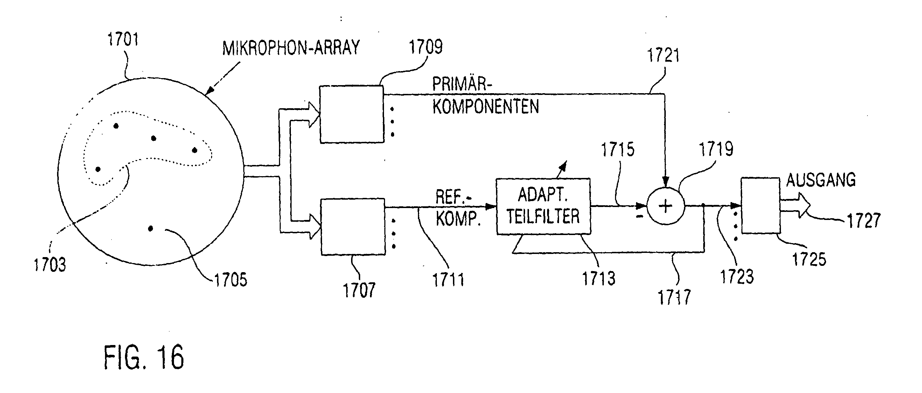

Gemäß einem weiteren Ausführungsbeispiel der vorliegenden Erfindung können die Signale, die die Mischung aus Nutz-und Störsignalen sowie die Schätzung des Störanteils repräsentieren, vertauscht werden. Figur 16 zeigt ein weiteres Ausführungsbeispiel einer erfindungsgemäßen Vorrichtung zum Unterdrücken eines Störanteils.

Figur 16 zeigt einen Raum 1701, in dem an geometrischen Positionen diskrete Sendeeinrichtungen 1703 angeordnet sind. In dem Raum 1703 befindet sich an einer weiteren geometrischen Position eine Quelle 1705, deren Wellenfeldkomponenten unterdrückt werden sollen. Eine Mehrzahl der in Figur 16 nicht eingezeichneten Empfangseinrichtungen erfasst ein Empfangswellenfeld, und, ansprechend auf das erfasste Empfangswellenfeld, erzeugt ein Ausgangssignal, das sowohl einem Transformationsblock 1707 als auch einem Transformationsblock 1709 zugeführt wird.

Der Transformationsblock 1707 hat einen Ausgang 1711, der mit einem Eingang eines Adaptionsteilfilters 1713 gekoppelt ist. Das Adaptionsteilfilter hat einen Ausgang 1715 sowie einen Adaptionseingang 1717. Der Ausgang 1715 des Adaptionsteilfilters 1717 ist mit einem Eingang 1721 eines Subtrahierers 1719 gekoppelt. Der Subtrahierer 1719 umfaßt ferner einen weiteren Eingang, mit dem ein Ausgang des Transformationsblocks 1709 gekoppelt ist. Der Ausgang 1723 des Subtrahierers 1719 ist sowohl mit dem Adaptionseingang 1717 des Adaptionsteilfilters als auch mit einem Eingang eines Transformationsblocks 1725, der einen Ausgang 1727 aufweist, gekoppelt.

Die Transformationsblöcke 1709 und 1707 sind ausgebildet, um aus dem Eingangssignal die Wellenfeldkomponenten des Empfangswellenfeldes zu bestimmen.

Die diskreten Sendeeinrichtungen 1703 (die Wunschquellen) erzeugen ein Wellenfeld, das möglichst erhalten bleiben soll. Hierzu werden die Wellenfeldkomponenten, die von dem Transformationsblock 1707 erzeugt werden (Referenzkomponenten), nach einer Filterung durch das adaptive Teilfilter 1713, von den Wellenfeldkomponenten abgezogen, die von dem Transformationsblock 1709 erzeugt worden sind. Am Ausgang des Subtrahierers 1719 entstehen Wellenfeldkomponenten, die im Idealfall von den Störwellenfeldkomponenten befreit sind. Nach einer optionalen Rekonstruktion der Wellenfeldkomponenten durch den Transformationsblock 1725 entsteht ein Signal, das beispielsweise gespeichert oder weiter verarbeitet werden kann.

Die Transformationsblöcke 1709 bzw. 1707 sind ausgebildet, um die bereits beschriebene Transformation 1 bzw. Transformation 2 durchzuführen. Gemäß einem weiteren Aspekt der vorliegenden Erfmdung kann der Transformationsblock 1707 ausgebildet sein, um zusätzlich eine räumliche Filterung der Wellenfeldkomponenten durchzuführen, um beispielsweise nur die Komponenten, in Abhängigkeit vom Winkel $\Theta$ zu übernehmen, die die zu entfernenden Quellen beinhalten. Statt einer räumlichen Filterung kann direkt bei der adaptiven Filterung eine Nebenbedingung berücksichtigt werden, so dass beispielsweise die bereits beschriebene Selektion in dem adaptiven Teilfilter stattfindet. Der Transformationsblock 1725 kann die bereits beschriebene Transformation 3 durchführen. Alternativ können alle Wellenfeldkomponenten gewichtet aufsummiert werden.

Gemäß einem weiteren Ausführungsbeispiel der vorliegenden Erfindung kann auf den oberen Zweig, der in Figur 16 dargestellt ist, und der die Primärkomponenten liefert, verzichtet werden. In diesem Fall ist auch der Subtrahierer 1719 nicht notwendig. Die Störkomponenten werden entfernt, indem der Transformationsblock 1707 beispielsweise eine räumliche Filterung durchführt, bei der die Störkomponenten unterdrückt werden. Alternativ kann bei der adaptiven Filterung eine Nebenbedingung eingebaut werden, beispielsweise in Form eines Winkels $\Theta$, der die Anordnung der Störquellen angibt, so dass beispielsweise nur die Störwellenfeldkomponenten aus den Wellenfeldkomponenten des Empfangswellenfeldes herausgenommen werden.

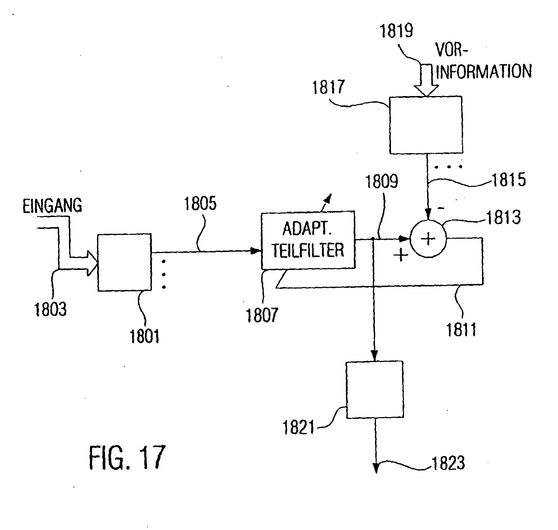

Figur 17 zeigt ein weiteres Ausführungsbeispiel einer Vorrichtung zur Interferenz-Unterdrückung. Die in Figur 17 dargestellte Vorrichtung umfasst einen Transformationsblock 1801, der einen Eingang 1803 sowie einen Ausgang 1805 umfasst. Der Ausgang 1805 ist mit einem Eingang eines adaptiven Teilfilters 1807 gekoppelt. Das adaptive Teilfilter 1807 hat einen Ausgang 1809, sowie einen Adaptionseingang 1811. Der Ausgang 1809 des adaptiven Teilfilters 1807 ist mit einem Eingang eines Transformationsblocks 1821 gekoppelt, der einen Ausgang 1823 aufweist. Der Ausgang 1809 ist ferner mit einem Subtrahierer 1813 verbunden, der einen weiteren Eingang 1815 sowie einen Ausgang aufweist, der mit dem Adaptionseingang 1811 des Adaptionsteilfilters gekoppelt ist.

Die in Figur 17 dargestellte Vorrichtung umfasst ferner einen Transformationsblock 1817, der einen Ausgang aufweist, der mit dem Eingang 1815 des Subtrahierers 1813 gekoppelt ist. Der Transformationsblock 1817 umfasst ferner einen Eingang 1819, an dem eine Vorinformation anliegt.

Die Vorinformation kann beispielsweise aus einer Schätzung des Nutzwellenfeldes gewonnen werden. Beispielsweise wird eine Schätzung eines nur langsam veränderlichen Störwellenfeldes in zeitlichen Pausen des Nutzwellenfeldes (Source Activity Detection) im Transformationsbereich durchgeführt. Daraus wird dann eine Schätzung des Nutzwellenfeldes im Transformationsbereich erhalten. Die in Figur 17 dargestellte Struktur verdeutlicht dabei die Verarbeitung einer einzelnen Mode. Der Transformationsblock 1801 sowie der Transformationsblock 1817 sind dabei ausgebildet, um die Wellenfeldkomponenten aus den anliegenden Signalen zu erzeugen. Der (optionale) Transformationsblock 1821 ist ausgebildet, um das Wellenfeld zu rekonstruieren.

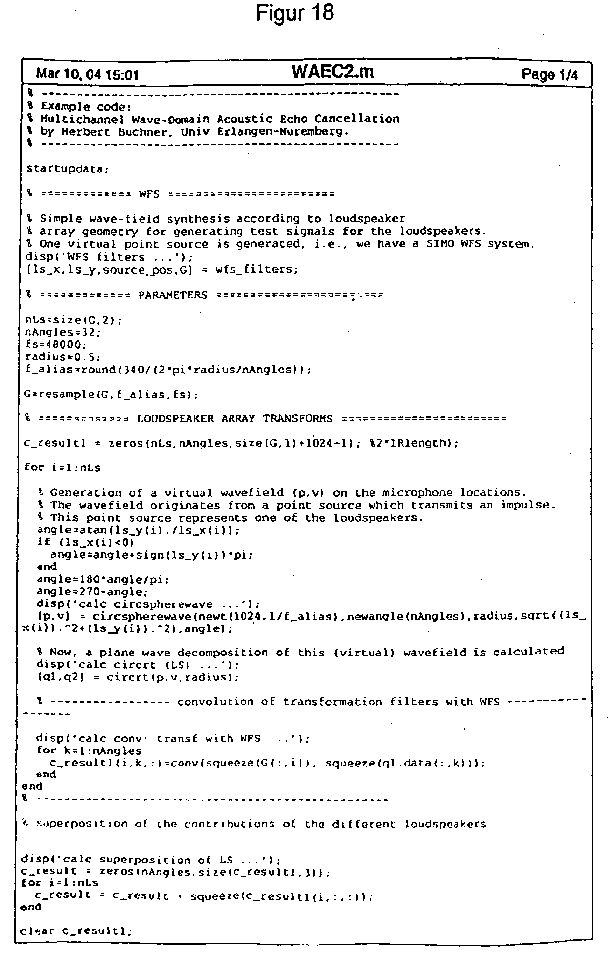

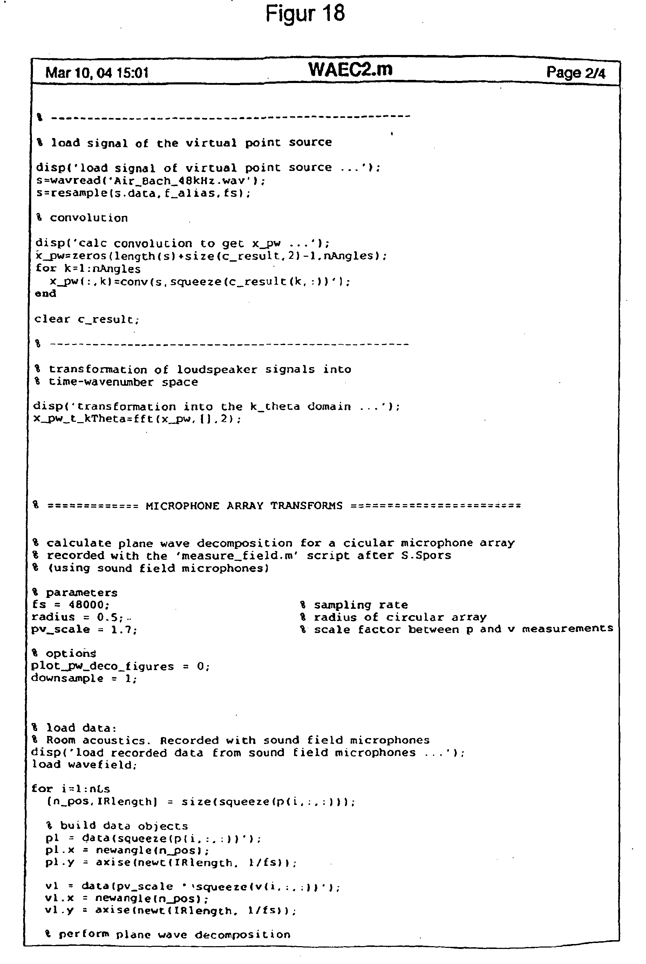

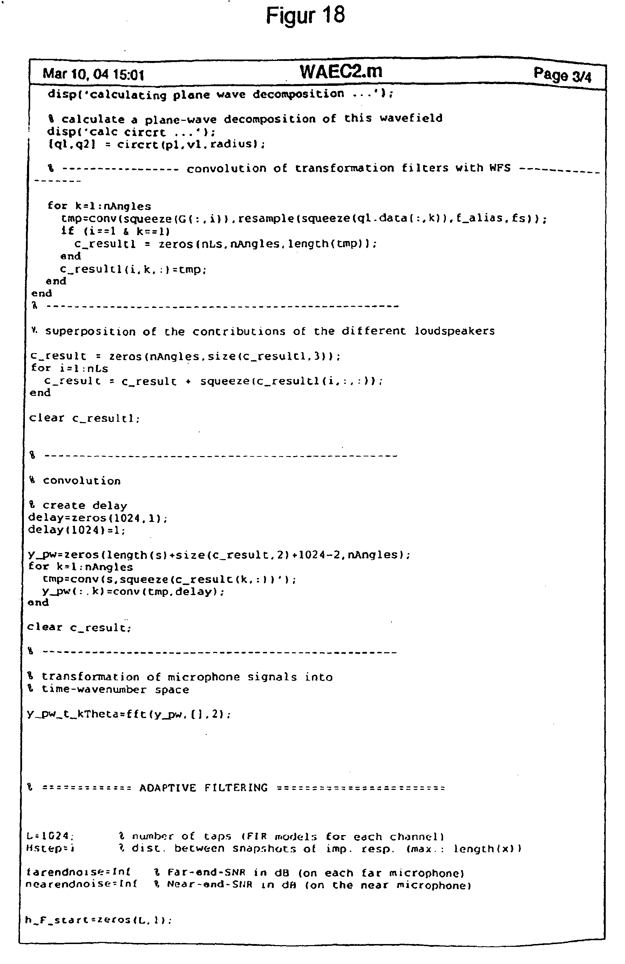

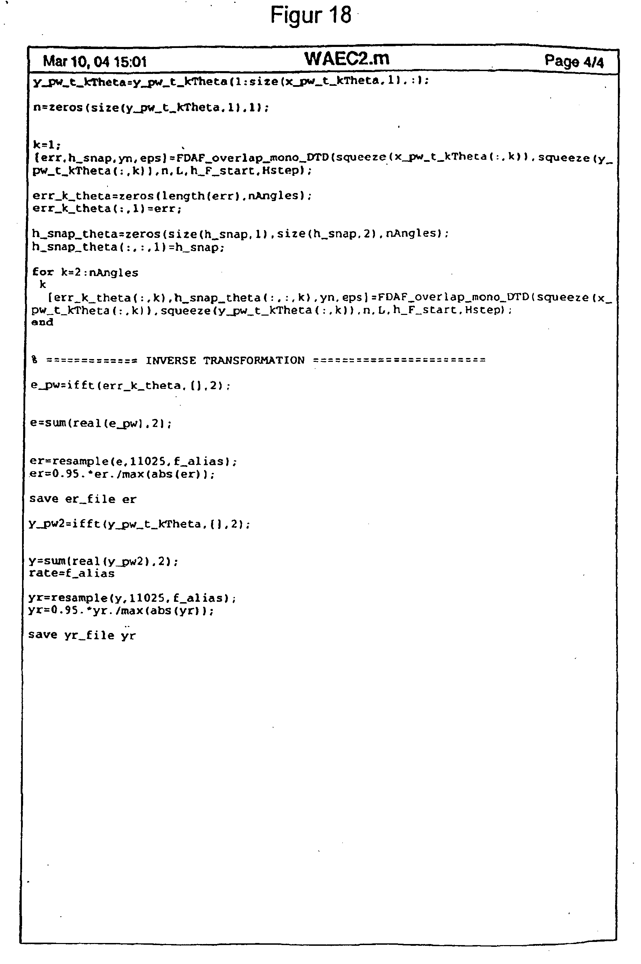

Fig. 18 zeigt ein Ausführungsbeispiel eines Computer-25 Programms zur Echokompensation.

Gemäß einem weiteren Ausführungsbeispiel umfasst eine erfindungsgemäße Vorrichtung zum Unterdrücken eines Störanteils in einem Empfangssignal, das den Störanteil und einen Nutzanteil umfasst, wobei das Empfangssignal von an vorbestimmten geometrischen Positionen eines Raumes angeordneten Empfangseinrichtungen, ansprechend auf ein erfassbares Wellenfeld, erzeugbar ist, wobei das erfassbare Wellenfeld eine Überlagerung eines Nutzwellenfeldes und eines Störwellenfeldes ist, eine Vorrichtung zum Verarbeiten des Eingangssignals, wobei die Einrichtung zum Bereitstellen von Wellenfeldkomponenten einen Selektor aufweist, der ausgebildet ist, um zu selektierende Wellenfeldkomponenten, aufgrund der räumlichen, zeitlichen oder spektralen Charakteristik, zu selektieren, und um selektierte Wellenkomponenten an die Mehrzahl der Einzelfilter zu liefern, wobei die Mehrzahl der Einzelfilter ausgebildet ist, um die selektierten Wellenfeldkomponenten zu beeinflussen und um beeinflusste selektierte Wellenfeldkomponenten als gefilterte Wellenfeldkomponenten auszugeben, einen Subtrahierer, der mit der erfindungsgemäßen Vorrichtung zum Verarbeiten des Eingangssignals gekoppelt ist, wobei der Subtrahierer ausgebildet ist, um eine Differenz zwischen den Wellenfeldkomponenten und den gefilterten Wellenfeldkomponenten zu erzeugen sowie eine Einrichtung zum Bestimmen von diskreten Filterkoeffizienten aus den selektierten Wellenfeldkomponenten und der Differenz, wobei die Einrichtung zum Bestimmen von diskreten Filterkoeffizienten ausgebildet ist, um die Filterkoeffizienten an die Mehrzahl der Einzelfilter der Vorrichtung zu liefern, um die selektierten Wellenfeldkomponenten derart zu filtern, dass der Störanteil in den von dem Subtrahierer gelieferten Wellenfeldkomponenten unterdrückt ist. Die zu selektierenden Wellenfeldkomponenten können dabei Störwellenfeldkomponenten oder Nutzwellenfeldkomponenten sein. Dabei wird der Störanteil entweder durch eine Differenzbildung oder durch die Filterung unterdrückt.

Gemäß einem weiteren Ausführungsbeispiel umfasst eine erfindungsgemäße Vorrichtung zum Unterdrücken eines Störanteils in einem Empfangssignal, das den Störanteil und einen Nutzanteil umfasst, wobei das Empfangssignal von an vorbestimmten geometrischen Positionen eines Raumes angeordneten Empfangseinrichtungen, ansprechend auf ein erfassbares Wellenfeld, erzeugbar ist, wobei das erfassbare Wellenfeld eine Überlagerung eines Nutzwellenfeldes und eines Störwellenfeldes ist, eine Vorrichtung zum Verarbeiten des Eingangssignals und zum Liefern von gefilterten Wellenfeldkomponenten, einen Selektor, der mit der Einrichtung zum Bestimmen von Wellenfeldkomponenten gekoppelt ist, wobei der Selektor ausgebildet ist, um zu selektierende Wellenfeldkomponenten aufgrund der räumlichen, zeitlichen oder spektralen Charakteristik aus den Wellenfeldkomponenten zu selektieren, und um selektierte Wellenfeldkomponenten zu liefern, einen Subtrahierer, der mit der Vorrichtung zum Verarbeiten des Eingangssignals gekoppelt ist, wobei der Subtrahierer ausgebildet ist, um eine Differenz zwischen den selektierten Wellenfeldkomponenten und den gefilterten Wellenfeldkomponenten zu erzeugen, und eine Einrichtung zum Bestimmen von diskreten Filterkoeffizienten aus den Wellenfeldkomponenten und der Differenz, wobei die Einrichtung zum Bestimmen von diskreten Filterkoeffizienten ausgebildet ist, um die Filterkoeffizienten an die Mehrzahl der Einzelfilter der Vorrichtung zum Verarbeiten des Eingangssignals zu liefern, um die Wellenfeldkomponenten derart zu filtern, dass der Störanteil in den von dem Subtrahierer gelieferten Wellenfeldkomponenten unterdrückt ist. Dabei können die zu selektierenden Wellenfeldkomponenten Störwellenfeldkomponenten oder Nutzwellenfeldkomponenten sein.

Abhängig von den Gegebenheiten können die erfindungsgemäßen Verfahren in Hardware oder auch in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computer-Programm-Produkt mit auf einem maschinenlesbaren Träger gespeichertem Programm-Code zur Durchführung des erfindungsgemäßen Verfahrens, wenn das Computer-Programm-Produkt auf einem Rechner abläuft. In anderen Worten ausgedrückt, kann die Erfindung somit als ein Computer-Programm mit einem Programm-Code zur Durchführung des Verfahrens realisiert werden, wenn das ComputerProgramm auf einem Computer abläuft.

**EP 1 680 910 B1**

**Patentansprüche**

1. Vorrichtung zum Verarbeiten eines Eingangssignals, wobei das Eingangssignal eine Anzahl von Untersignalen aufweist, die diskreten Sende- oder Empfangseinrichtungen zugeordnet sind, wobei die diskreten Sende- oder Empfangseinrichtungen an vorbestimmten geometrischen Positionen bezüglich eines Raumes angeordnet sind, mit folgenden Merkmalen:

   einer Einrichtung (101, 409, 431, 1111, 1131, 1601) zum Bereitstellen einer Mehrzahl von Wellenfeldkomponenten aus dem Eingangssignal, das die Anzahl von Untersignalen aufweist, wobei die Einrichtung (101, 409, 431, 1111, 1131, 1601) zum Bereitstellen ausgebildet ist, um eine Mehrzahl von Wellenfeldkomponenten bereitzustellen, wobei eine Überlagerung der Mehrzahl von Wellenfeldkomponenten ein zusammengesetztes Wellenfeld ergibt, wobei das zusammengesetzte Wellenfeld in dem Raum ausbreitungsfähig ist, wobei die Mehrzahl der Wellenfeldkomponenten durch eine Wellenfeldzerlegung auf der Basis von orthogonalen Wellenfeldbasisfunktionen und den bezüglich des Raumes vorbestimmten geometrischen Positionen der diskreten Sende- oder Empfangseinrichtungen aus dem Eingangssignal unter Verwendung einer Transformation, die eine Orthogonalisierung der räumlichen und zeitlichen Komponenten herbeiführt, abgeleitet ist;
   einer Mehrzahl (107, 201, 301, 413, 507, 607, 707, 901, 1115, 1207, 1307, 1417, 1517, 1611, 1713, 1807) von Einzelfiltern, wobei ein Einzelfilter einer Wellenfeldkomponente der Mehrzahl von Wellenfeldkomponenten zugeordnet ist, so dass eine Filterung der Wellenfeldkomponenten getrennt voneinander erreicht wird, wobei jede Wellenfeldkomponente durch den der Wellenfeldkomponente zugeordneten Einzelfilter gefiltert wird, und wobei ein Einzelfilter ausgebildet ist, um die zugeordnete Wellenfeldkomponente zu beeinflussen, derart, dass ausgangsseitig bezüglich der Mehrzahl (107, 201, 301, 413, 507, 607, 707, 901, 1007, 1115, 1207, 1307, 1417, 1517, 1611, 1713, 1807) von Einzelfiltern eine Mehrzahl von gefilterten Wellenfeldkomponenten erhalten wird, die ein verarbeitetes Eingangssignal darstellt, wobei die Anzahl der Wellenfeldkomponenten und damit der Einzelfilter nicht durch eine Anzahl von Sende- oder Empfangseinrichtungen vorgegeben ist, sondern durch das räumliche Abasttheorem begrenzt ist.

2. Vorrichtung gemäß Anspruch 1, bei der das zusammengesetzte Wellenfeld ein akustisches Schallfeld ist, das von den diskreten Sendeeinrichtungen an den vorbestimmten geometrischen Positionen erzeugbar ist, oder das von den diskreten Empfangseinrichtungen an den vorbestimmten geometrischen Positionen erfassbar ist, wobei ein Untersignal einen Schalldruck und/oder eine Schallschnelle des Schallfeldes an einer vorbestimmten geometrischen Position bezüglich des Raumes umfasst, wobei die Einrichtung zum Bereitstellen ausgebildet ist, um die Wellenfeldkomponenten aus einer Verknüpfung aus einer auf den Schalldrücken basierenden Größe und/oder einer auf den Schallschnellen basierenden Größe mit den orthogonalen Wellenfeld-Basisfunktionen zu bestimmen.

3. Vorrichtung gemäß Anspruch 2, bei der die Einrichtung (101, 409, 431, 1111, 1131, 1601) zum Bereitstellen der Mehrzahl von Wellenfeldkomponenten einen Transformator zum Erzeugen einer räumlichen Fouriertransformierten der Schalldrücke als die auf den Schalldrücken basierende Größe und/oder zum Erzeugen einer räumlichen Fouriertransformierten der Schallschnellen als die auf die Schallschnellen basierende Größe aufweist.

4. Vorrichtung gemäß einem der Ansprüche 1 bis 3, bei der die Einrichtung (101, 409, 431, 1111, 1131, 1601) zum Bereitstellen der Mehrzahl von Wellenfeldkomponenten ferner eine Einrichtung zum Liefern von diskreten Funktionswerten aufweist, die ausgebildet ist, um diskrete Funktionswerte von orthogonalen Wellenfeldfunktionen zu liefern.

5. Vorrichtung gemäß Anspruch 4, bei der die Einrichtung zum Liefern von diskreten Funktionswerten einen Speicher umfasst, in dem die diskreten Funktionswerte speicherbar sind.

6. Vorrichtung gemäß einem der Ansprüche 1 bis 5, bei der die Mehrzahl der Einzelfilter diskrete Filterkoeffizienten aufweist, wobei ein Einzelfilter ausgebildet ist, um die diskreten Filterkoeffizienten zum Filtern der Wellenfeldkomponenten zu empfangen.

7. Vorrichtung gemäß einem der Ansprüche 1 bis 6, die ferner eine Einrichtung (423, 1029, 1133, 1619) zum Bestimmen von diskreten Filterkoeffizienten aufweist, wobei die Einrichtung (423, 1029, 1133, 1619) zum Bestimmen von diskreten Filterkoeffizienten ausgebildet ist, um, für ein Einzelfilter, eine Differenzwellenfeldkomponente zu empfangen, und um durch eine Minimierung eines Unterschieds zwischen der Referenzwellenfeldkomponente und der Wellenfeldkomponente die diskreten Filterkoeffizienten zu bestimmen.

8. Vorrichtung gemäß Anspruch 7, bei der die Einrichtung zum Bestimmen (423, 1029, 1133, 1619) von diskreten Filterkoeffizienten ausgebildet ist, um die diskreten Filterkoeffizienten adaptiv im Zeit- oder im Frequenzbereich auf der Basis eines der folgenden Algorithmen zu bestimmen: MSE-Algorithmus (MSE = Mean-Squared Error, mittleres Fehlerquadrat), MMSE-Algorithmus (MMSE = Minimum Mean-Squared Error; minimales mittleres Fehlerquadrat), LMS-Algorithmus (LMS = Least Mean-Square, kleinstes Fehlerquadrat), RLS-Algorithmus (RLS = Recursive Least-Squares, rekursive kleinste Quadrate), FDAF-Algorithmus (FDAF = Frequency-Domain Adaptive Filtering), Affiner Projektionsalgorithmus, Newton Algorithmus, NLMSAlgorithmus (NLMS=normalized LMS).

9. Vorrichtung gemäß einem der Ansprüche 1 bis 8, die ferner eine Einrichtung zum Rekonstruieren eines Wellenfeldes aufweist, wobei die Einrichtung zum Rekonstruieren ausgebildet ist, um durch eine Überlagerung von auf den gefilterten Wellenfeldkomponenten basierenden Größen ein gefiltertes Wellenfeld zu rekonstruieren, und um ein verarbeitetes Eingangssignal zu liefern, ansprechend auf welches das rekonstruierte Wellenfeld von einer Mehrzahl von diskreten Sendeeinrichtungen erzeugbar ist.

10. Vorrichtung gemäß Anspruch 9, bei der die Einrichtung zum Rekonstruieren ausgebildet ist, um das gefilterte Wellenfeld durch eine Fourierbasierte Transformation der Wellenfeldkomponenten zu rekonstruieren.

11. Vorrichtung zum Erfassen einer Übertragungscharakteristik eines Raumes bei einer Ausbreitung eines Wellenfeldes, wobei das Wellenfeld, ansprechend auf ein Eingangssignal, von an vorbestimmten geometrischen Positionen des Raumes angeordneten diskreten Sendeeinrichtungen erzeugbar ist, wobei ein Empfangswellenfeld von an bestimmten geometrischen Positionen des Raumes angeordneten Empfangseinrichtungen erfassbar ist, wobei die Empfangseinrichtungen, ansprechend auf das Empfangswellenfeld, ein Ausgangssignal erzeugen, mit folgenden Merkmalen:

   einer Einrichtung (401, 1101) zum Erzeugen einer Kopie, die ausgebildet ist, um eine Kopie eines Eingangssignals zu erzeugen;
   einer Einrichtung (101, 409, 431, 1111, 1131, 1601) zum Bereitstellen einer Mehrzahl von Wellenfeldkomponenten, die ausgebildet ist, um eine Mehrzahl von Wellenfeldkomponenten des Ausgangswellenfeldes aus dem Ausgangssignal bereitzustellen;
   einer Vorrichtung gemäß einem der Ansprüche 1-10 zum Verarbeiten der Kopie des Eingangssignals, wobei die Vorrichtung zum Verarbeiten ausgebildet ist, um eine Mehrzahl von gefilterten Wellenfeldkomponenten des Wellenfeldes als ein verarbeitetes Eingangssignal zu liefern;
   einem Subtrahierer zum Erzeugen einer Mehrzahl von Differenzwellenfeldkomponenten aus einer Differenz zwischen der Mehrzahl der gefilterten Wellenfeldkomponenten des Wellenfeldes und der Mehrzahl der Wellenfeldkomponenten des Ausgangswellenfeldes;
   einer Einrichtung (423, 1133, 1619) zum Bestimmen von diskreten Filterkoeffizienten, die mit der Vorrichtung zum Verarbeiten des Eingangssignals zum Empfangen der Wellenfeldkomponenten des Wellenfeldes und zum Liefern des diskreten Filterkoeffizienten gekoppelt ist, wobei die Einrichtung (423, 1029, 1133, 1619) zum Bestimmen von diskreten Filterkoeffizienten ausgebildet ist, um die diskreten Filterkoeffizienten aus den Differenzwellenfeldkomponenten und den Wellenfeldkomponenten des Wellenfeldes adaptiv zu bestimmen, und um die diskreten Filterkoeffizienten an die Vorrichtung zum Verarbeiten des Eingangssignals zu liefern, wobei die diskreten Filterkoeffizienten die erfasste Übertragungscharakteristik des Raumes sind.

12. Vorrichtung gemäß Anspruch 11, die ferner eine Einrichtung zum Rekonstruieren eines Wellenfeldes aus den Differenzwellenfeldkomponenten aufweist, die ausgebildet ist, um ein Wellenfeld aus den Differenzwellenfeldkomponenten zu rekonstruieren, wobei das rekonstruierte Wellenfeld eine geringere Beeinflussung durch das Eingangssignal aufweist, als das Ausgangswellenfeld.

13. Vorrichtung zum aktiven Unterdrücken von Störungen in einem Anregungssignal, ansprechend auf welches eine Mehrzahl von an geometrischen Positionen eines Raumes angeordneten Sendeeinrichtungen ein Wellenfeld erzeugt, das sich in den Raum ausbreitet, wobei ein Empfangswellenfeld von einer Mehrzahl von an vorbestimmten geometrischen Positionen des Raumes angeordneten diskreten Empfangseinrichtungen erfassbar ist, wobei die diskreten Empfangseinrichtungen, ansprechend auf das Empfangswellenfeld, ein Ausgangssignal liefern, mit folgenden Merkmalen:

   einer Vorrichtung gemäß einem der Ansprüche 1-11 zum Verarbeiten des Anregungssignals als das Eingangssignal, die ausgebildet ist, um eine Mehrzahl von gefilterten Wellenfeldkomponenten des Wellenfeldes zu liefern;
   einer Einrichtung zum Rekonstruieren des Wellenfeldes aus den gefilterten Wellenfeldkomponenten, die ausgebildet ist, um ein Wellenfeld aus den gefilterten Wellenfeldkomponenten zu rekonstruieren, wobei die Einrichtung zum Rekonstruieren ferner ausgebildet ist, um ein gefiltertes Anregungssignal an die diskreten Sendeeinrichtungen zu liefern; einer Einrichtung (101, 409, 431, 1111, 1131, 1601) zum Bereitstellen einer Mehrzahl von Wellenfeldkomponenten des Empfangswellenfeldes;

einer Einrichtung (423, 1133, 1619) zum Bestimmen von diskreten Filterkoeffizienten, die mit der Vorrichtung gemäß einem der Ansprüche 1-10 zum Verarbeiten des Eingangssignals, zum Empfangen der Wellenfeldkomponenten des Wellenfeldes und zum Liefern der diskreten Filterkoeffizienten gekoppelt ist, wobei die Einrichtung zum Bestimmen der Filterkoeffizienten ausgebildet ist, um aus den Differenzwellenfeldkomponenten und den Wellenfeldkomponenten des Wellenfeldes die diskreten Filterkoeffizienten adaptiv zu bestimmen, und um die diskreten Filterkoeffizienten an die Einrichtung zum Verarbeiten des Eingangssignals zu liefern, um die Störungen durch Filterung der Wellenfeldkomponenten zu unterdrücken.

**14.** Vorrichtung zum Erfassen einer inversen Übertragungscharakteristik eines Raumes bei einer Ausbreitung eines Wellenfeldes, wobei das Wellenfeld, ansprechend auf ein Eingangssignal, von an vorbestimmten geometrischen Positionen des Raumes angeordneten diskreten Sendeeinrichtungen erzeugbar ist, wobei ein Empfangswellenfeld von an vorbestimmten geometrischen Positionen des Raumes angeordneten Empfangseinrichtungen erfassbar ist, wobei die Empfangseinrichtungen, ansprechend auf das Empfangswellenfeld, ein Ausgangssignal erzeugen, mit folgenden Merkmalen:

einer Einrichtung (401, 1101) zum Erzeugen einer Kopie, die ausgebildet ist, um eine Kopie des Eingangssignals zu erzeugen;
einer Einrichtung zum Verzögern, die ausgebildet ist, um die Kopie des Eingangssignals zu verzögern;
einer Einrichtung (101, 409, 431, 913, 1111, 1131 1601) zum Bereitstellen einer Mehrzahl von Wellenfeldkomponenten, die ausgebildet ist, um eine Mehrzahl von Wellenfeldkomponenten aus der verzögerten Kopie des Eingangssignals als Referenzwellenfeldkomponenten bereitzustellen;
einer Vorrichtung gemäß einem der Ansprüche 1-10 zum Verarbeiten des Ausgangssignals und zum Liefern einer Mehrzahl von gefilterten Wellenfeldkomponenten des Empfangswellenfeldes;
einem Subtrahierer, der ausgebildet ist, um eine Mehrzahl von Differenzwellenfeldkomponenten aus einer Differenz zwischen den gefilterten Wellenfeldkomponenten und den verzögerten Wellenfeldkomponenten zu erzeugen;
einer Einrichtung (423, 1133, 1619) zum Bestimmen von diskreten Filterkoeffizienten, die mit der Vorrichtung gemäß einem der Ansprüche 1-10 zum Empfangen der Wellenfeldkoeffizienten des Wellenfeldes und zum Liefern der diskreten Filterkoeffizienten gekoppelt ist, wobei die Einrichtung (423, 1133, 1619) zum Bestimmen von diskreten Filterkoeffizienten ausgebildet ist, um die diskreten Filterkoeffizienten aus den Differenzwellenfeldkomponenten und den Wellenfeldkomponenten des Wellenfeldes adaptiv zu bestimmen, und um die diskreten Filterkoeffizienten an die Vorrichtung gemäß einem der Ansprüche 1-11 zu liefern, wobei die diskreten Filterkoeffizienten die erfasste inverse Übertragungscharakteristik des Raumes sind.

**15.** Vorrichtung zum Erzeugen eines Prädiktionsfehlersignals aus einem Eingangssignal, wobei das Eingangssignal einen Informationsanteil und einen Redundanzanteil aufweist, und wobei das Prädiktionsfehlersignal den Informationsanteil umfasst, wobei, ansprechend auf das Prädiktionsfehlersignal ein Wellenfeld von an vorbestimmten geometrischen Positionen des Raumes angeordneten diskreten Sendeeinrichtungen erzeugbar ist, mit folgenden Merkmalen:

einer Einrichtung (401, 1101) zum Erzeugen einer Kopie, die ausgebildet ist, um eine des Eingangssignals zu erzeugen;
einer Einrichtung (101, 409, 431, 1111, 1131, 1601) zum Bereitstellen einer Mehrzahl von Wellenfeldkomponenten, die ausgebildet ist, um eine Mehrzahl von Wellenfeldkomponenten aus dem Eingangssignal bereitzustellen;
einer Einrichtung zum Verzögern, die ausgebildet ist, um die Kopie des Eingangssignals zu verzögern;
einer Vorrichtung gemäß einem der Ansprüche 1-10 zum Verarbeiten der verzögerten Kopie des Eingangssignals und zum Liefern einer Mehrzahl von gefilterten Wellenfeldkomponenten aus der verzögerten Kopie des Eingangssignals;
einem Subtrahierer, der ausgebildet ist, um eine Mehrzahl von Differenzwellenfeldkomponenten aus einer Differenz zwischen der Mehrzahl der Wellenfeldkomponenten und der Mehrzahl von gefilterten Wellenfeldkomponenten zu Erzeugen;
einer Einrichtung (423, 1133, 1619) zum Bestimmen von diskreten Filterkoeffizienten, wobei die Vorrichtung zum Bestimmen von diskreten Filterkoeffizienten mit der Vorrichtung gemäß Anspruch 1 zum Empfangen der Wellenfeldkomponenten und zum Liefern der diskreten Filterkoeffizienten gekoppelt ist, wobei die Einrichtung (423, 1133, 1619) zum Bestimmen von diskreten Filterkoeffizienten ausgebildet ist, um aus der Mehrzahl der Differenzwellenfeldkomponenten und aus der Mehrzahl der Wellenfeldkomponenten, die dem verzögerten Eingangssignal zugeordnet sind, die diskreten Filterkoeffizienten zu liefern, um das Prädiktionsfehlersignal durch eine Unterdrückung des Redundanzanteils bei Filterung zu erzeugen, wobei die Mehrzahl der gefilterten Wellenfeldkomponenten das Prädiktionsfehlersignal ist.

16. Vorrichtung zum Wiedergewinnen eines Nutzsignals aus einem Eingangssignal, wobei das Nutzsignal einen Informationsanteil und einen Redundanzanteil umfasst, wobei das Nutzsignal eine Mehrzahl von Wellenfeldkomponenten eines Wellenfeldes umfasst, wobei der Redundanzanteil durch eine Filterung der Mehrzahl der Wellenfeldkomponenten unterdrückbar ist, wobei die Mehrzahl der gefilterten Wellenfeldkomponenten ein Prädiktionsfehlersignal ergibt, ansprechend auf welches ein Ausgangswellenfeld von an vorbestimmten geometrischen Positionen eines Raumes angeordneten diskreten Sendeeinrichtungen erzeugbar ist, wobei das Ausgangswellenfeld in dem Raum ausbreitbar ist, wobei ein Empfangswellenfeld von einer Mehrzahl von an vorbestimmten geometrischen Positionen des Raumes angeordneten Empfangseinrichtungen erfassbar ist, wobei die diskreten Empfangseinrichtungen, ansprechend auf das Empfangswellenfeld, das Eingangssignal erzeugen, mit folgenden Merkmalen:

einer Einrichtung zum Bereitstellen der Filterkoeffizienten, die ausgebildet ist, um Filterkoeffizienten bereitzustellen;
einer Vorrichtung gemäß einem der Ansprüche 1-11 zum Verarbeiten des Eingangssignals, wobei die Einrichtung zum Bereitstellen von Wellenfeldkomponenten einen Summierer aufweist, der ausgebildet ist, um die Mehrzahl der Wellenfeldkomponenten und um die Mehrzahl der gefilterten Wellenfeldkomponenten zu addieren, und um die addierte Mehrzahl von Wellenfeldkomponenten an die Mehrzahl der Einzelfilter zu liefern, wobei die Mehrzahl der Einzelfilter ausgebildet ist, um die addierte Mehrzahl von Wellenfeldkomponenten unter Verwendung der diskreten Filterkoeffizienten zu filtern,
wobei die addierte Mehrzahl von Wellenfeldkomponenten das wiedergewonnene Nutzsignal ist.

17. Vorrichtung zum Unterdrücken eines Störanteils in einem Empfangssignal, das den Störanteil und einen Nutzanteil umfasst, wobei das Empfangssignal von an vorbestimmten geometrischen Positionen eines Raumes angeordneten Empfangseinrichtungen, ansprechend auf ein erfassbares Wellenfeld, erzeugbar ist, wobei das erfassbare Wellenfeld eine Überlagerung eines Nutzwellenfeldes und eines Störwellenfeldes ist, mit folgenden Merkmalen:

einer Vorrichtung gemäß einem der Ansprüche 1-10 zum Verarbeiten des Eingangssignals, wobei die Einrichtung zum Bereitstellen von Wellenfeldkomponenten einen Selektor aufweist, der ausgebildet ist, um zu selektierende Wellenfeldkomponenten, aufgrund der räumlichen, zeitlichen oder spektralen Charakteristik, zu selektieren, und um selektierte Wellenfeldkomponenten an die Mehrzahl der Einzelfilter zu liefern, wobei die Mehrzahl der Einzelfilter ausgebildet ist, um die selektierten Wellenfeldkomponenten zu beeinflussen und um beeinflusste selektierte Wellenfeldkomponenten als gefilterte Wellenfeldkomponenten auszugeben;
einem Subtrahierer, der mit der Vorrichtung gemäß einem der Ansprüche 1-10 gekoppelt ist, wobei der Subtrahierer ausgebildet ist, um eine Differenz zwischen den Wellenfeldkomponenten und den gefilterten Wellenfeldkomponenten zu erzeugen;
einer Einrichtung (423, 1133, 1619) zum Bestimmen von diskreten Filterkoeffizienten, die ausgebildet ist, um diskrete Filterkoeffizienten aus den selektierten Wellenfeldkomponenten und der Differenz zu bestimmen, wobei die Einrichtung (423, 1133, 1619) zum Bestimmen von diskreten Filterkoeffizienten ferner ausgebildet ist, um die Filterkoeffizienten an die Mehrzahl der Einzelfilter der Vorrichtung gemäß einem der Ansprüche 1-10 zu liefern, um die selektierten Wellenfeldkomponenten derart zu filtern, dass der Störanteil in den von dem Subtrahierer gelieferten Wellenfeldkomponenten unterdrückt ist.

18. Vorrichtung gemäß Anspruch 17, wobei die zu selektierenden Wellenfeldkomponenten Störwellenfeldkomponenten oder Nutzwellenfeldkomponenten sind.

19. Vorrichtung gemäß Anspruch 17 oder 18, wobei die Einrichtung zum Bereitstellen von Wellenfeldkomponenten einen weiteren Selektor aufweist, wobei der weitere Selektor ausgebildet ist, um weitere zu selektierende Wellenfeldkomponenten, aufgrund der räumlichen, zeitlichen oder spektralen Charakteristik, zu selektieren, und um weitere selektierte Wellenfeldkomponenten als die Wellenfeldkomponenten zu liefern.

20. Vorrichtung gemäß Anspruch 19, wobei die weiteren selektierten Komponenten Nutzwellenfeldkomponenten oder Störwellenfeldkomponenten sind.

**EP 1 680 910 B1**

21. Vorrichtung zum Unterdrücken eines Störanteils in einem Empfangssignal, das den Störanteil und einen Nutzanteil umfasst, wobei das Empfangssignal von an vorbestimmten geometrischen Positionen eines Raumes angeordneten Empfangseinrichtungen, ansprechend auf ein erfassbares Wellenfeld, erzeugbar ist, wobei das erfassbare Wellenfeld eine Überlagerung eines Nutzwellenfeldes und eines Störwellenfeldes ist, mit folgenden Merkmalen:

einer Vorrichtung gemäß einem der Ansprüche 1-10 zum Verarbeiten des Eingangssignals und zum Liefern von gefilterten Wellenfeldkomponenten;
einem Selektor, der mit der Einrichtung zum Bestimmen von Wellenfeldkomponenten gekoppelt ist, wobei der Selektor ausgebildet ist, um zu selektierende Wellenfeldkomponenten aufgrund der räumlichen, zeitlichen oder spektralen Charakteristik aus den Wellenfeldkomponenten zuselektieren, und um selektierte Wellenfeldkomponenten zu liefern;
einem Subtrahierer, der mit der Vorrichtung gemäß einem der Ansprüche 1-10 gekoppelt ist, wobei der Subtrahierer ausgebildet ist, um eine Differenz zwischen den selektierten Wellenfeldkomponenten und den gefilterten Wellenfeldkomponenten zu erzeugen;
einer Einrichtung (423, 1133, 1619) zum Bestimmen von diskreten Filterkoeffizienten, die ausgebildet ist, um diskrete Filterkoeffizienten aus den Wellenfeldkomponenten und der Differenz zu bestimmen, wobei die Einrichtung {432, 1133, 1619) zum Bestimmen von diskreten Filterkoeffizienten ausgebildet ist, um die Filterkoeffizienten an die Mehrzahl der Einzelfilter der Vorrichtung gemäß einem der Ansprüche 1-10 zu liefern, um die Wellenfeldkomponenten derart zu filtern, dass der Störanteil in den von dem Subtrahierer gelieferten Wellenfeldkomponenten unterdrückt ist.

22. Vorrichtung gemäß Anspruch 21, wobei die zu selektierenden Wellenfeldkomponenten Störwellenfeldkomponenten oder Nutzwellenfeldkomponenten sind.

23. Verfahren zum Verarbeiten eines Eingangssignals, wobei das Eingangssignal eine Anzahl von Untersignalen aufweist, die diskreten Sende- oder Empfangseinrichtungen zugeordnet sind, wobei die diskreten Sende- oder Empfangseinrichtungen an vorbestimmten geometrischen Positionen eines Raumes angeordnet sind, mit folgenden Merkmalen:

Bereitstellen einer Mehrzahl von Wellenfeldkomponenten aus dem Eingangssignals, das die Anzahl von Untersignalen aufweist, wobei eine Überlagerung der Mehrzahl der Wellenfeldkomponenten ein zusammengesetztes Wellenfeld ergibt, wobei das zusammengesetzte Wellenfeld in dem Raum ausbreitbar ist, wobei die Mehrzahl der Wellenfeldkomponenten durch eine Wellenfeldzerlegung auf der Basis von orthogonalen Wellenfeldbasisfunktionen und den bezüglich des Raumes vorbestimmten geometrischen Positionen der diskreten Sende- oder Empfangseinrichtungen unter Verwendung einer Transformation, die eine Orthogonalisierung der räumlichen und zeitlichen Komponenten herbeiführt, aus dem Eingangssignal abgeleitet ist; und
Filtern von Wellenfeldkomponenten unter Verwendung einer Mehrzahl (107, 201, 301, 413, 507, 607, 707, 901, 1115, 1207, 1307, 1417, 1517, 1611, 1713, 1807) von Einzelfiltern, wobei ein Einzelfilter einer Wellenfeldkomponente der Mehrzahl von Wellenfeldkomponenten zugeordnet ist, so dass eine Filterung der Wellenfeldkomponenten getrennt voneinander erreicht wird, wobei jede Wellenfeldkomponente durch den der Wellenfeldkomponente zugeordneten Einzelfilter gefiltert wird, wobei die Wellenfeldkomponenten der Mehrzahl von Wellenfeldkomponenten derart beeinflusst werden, dass ausgangsseitig eine Mehrzahl von gefilterten Wellenfeldkomponenten erhalten wird, die ein verarbeitetes Eingangssignal darstellt, wobei die Anzahl der Wellenfeldkomponenten und damit der Einzelfilter nicht durch eine Anzahl von Sende- oder Empfangseinrichtungen vorgegeben ist, sondern durch das räumliche Abtasttheorem begrenzt ist.

24. Verfahren zum Erfassen einer Übertragungscharakteristik eines Raumes bei einer Ausbreitung eines Wellenfeldes, wobei das Wellenfeld, ansprechend auf ein Eingangssignal, von an vorbestimmten geometrischen Positionen des Raumes angeordneten diskreten Sendeeinrichtungen erzeugbar ist, und wobei ein Empfangswellenfeld von an vorbestimmten geometrischen Positionen des Raumes angeordneten Empfangseinrichtungen detektierbar ist, wobei die Empfangseinrichtungen, ansprechend auf das Empfangswellenfeld, ein Ausgangssignal erzeugen, mit folgenden Schritten:

Erzeugen einer Kopie des Eingangssignals;
Bereitstellen einer Mehrzahl von Wellenfeldkomponenten des Ausgangswellenfeldes aus dem Ausgangssignal;
Verarbeiten der Kopie des Eingangssignals gemäß Anspruch 23, um eine Mehrzahl von gefilterten Wellenfeldkomponenten des Wellenfeldes als ein verarbeitetes Eingangssignal zu erhalten;
Bilden einer Differenz zwischen der Mehrzahl der gefilterten Wellenfeldkomponenten des Wellenfeldes und der Mehrzahl der Wellenfeldkomponenten des Ausgangswellenfeldes, um Differenzwellenfeldkomponenten zu erzeugen;

Bestimmen von diskreten Filterkoeffizienten aus den Differenzwellenfeldkomponenten und aus den Wellenfeldkomponenten des Wellenfeldes, wobei die Filterkoeffizienten adaptiv bestimmt werden;

Verwenden der adaptiv bestimmten diskreten Filterkoeffizienten zum Filtern der Wellenfeldkomponenten, wobei die diskreten Filterkoeffizienten die erfasste Übertragungscharakteristik des Raumes sind.

**25.** Verfahren zum aktiven Unterdrücken von Störungen in einem Anregungssignal, ansprechend auf welches eine Mehrzahl von an vorbestimmten geometrischen Positionen eines Raumes angeordneten diskreten Sendeeinrichtungen ein Wellenfeld erzeugt, das in dem Raum ausbreitungsfähig ist, wobei ein Empfangswellenfeld von einer Mehrzahl von an vorbestimmten geometrischen Positionen des Raumes angeordneten diskreten Empfangseinrichtungen detektierbar ist, wobei die diskreten Empfangseinrichtungen, ansprechend auf das Empfangswellenfeld, ein Ausgangssignal liefern, mit folgenden Schritten:

Verarbeiten des Anregungssignals gemäß Anspruch 23, um eine Mehrzahl von gefilterten Wellenfeldkomponenten des Wellenfeldes zu erhalten;

Rekonstruieren des Wellenfeldes aus den gefilterten Wellenfeldkomponenten, um ein gefiltertes Anregungssignal zum Anregen der diskreten Sendeeinrichtungen zu erhalten;

Bereitstellen einer Mehrzahl von Wellenfeldkomponenten des Empfangswellenfeldes;

Empfangen der Wellenfeldkomponenten des Wellenfeldes;

Bestimmen von diskreten Filterkoeffizienten aus den Differenzwellenfeldkomponenten und der Wellenfeldkomponenten des Wellenfeldes, wobei die Filterkoeffizienten adaptiv bestimmt werden;

Filtern der Wellenfeldkomponenten unter Verwendung der adaptiv bestimmten Filterkoeffizienten, um die Störungen zu unterdrücken.

**26.** Verfahren zum Erfassen einer inversen Übertragungscharakteristik eines Raumes bei einer Ausbreitung eines Wellenfeldes, wobei das Wellenfeld, ansprechend auf ein Eingangssignal, von an vorbestimmten geometrischen Positionen angeordneten diskreten Sendeeinrichtungen erzeugbar ist, wobei ein Empfangswellenfeld von an vorbestimmten geometrischen Positionen des Raumes angeordneten Empfangseinrichtungen erfassbar ist, wobei die Empfangseinrichtungen, ansprechend auf das Empfangswellenfeld, ein Ausgangssignal erzeugen, mit folgenden Schritten:

Erzeugen einer Kopie des Eingangssignals;

Verzögern der Kopie des Eingangssignals;

Bereitstellen einer Mehrzahl von Wellenfeldkomponenten aus der verzögerten Kopie des Eingangssignals;

Verarbeiten des Eingangssignals gemäß Anspruch 23, um eine Mehrzahl von gefilterten Wellenfeldkomponenten des Empfangswellenfeldes zu liefern;

Bilden einer Differenz zwischen den gefilterten Wellenfeldkomponenten und den verzögerten Wellenfeldkomponenten, um Differenzwellenfeldkomponenten zu erzeugen;

Bestimmen von diskreten Filterkoeffizienten aus den Referenzwellenfeldkomponenten und aus den Wellenfeldkomponenten des Wellenfeldes, wobei die Filterkoeffizienten adaptiv bestimmt werden;

Filtern der Wellenfeldkomponenten unter Verwendung der adaptiv bestimmten Filterkoeffizienten;

wobei die diskreten Filterkoeffizienten die erfasste inverse Übertragungscharakteristik des Raumes sind.

**27.** Verfahren zum Erzeugen eines Prädiktionsfehlersignals aus einem Eingangssignal, wobei das Eingangssignal einen Informationsanteil und einen Redundanzanteil aufweist, und wobei das Prädiktionsfehlersignal den Informationsanteil umfasst, wobei, ansprechend auf das Prädiktionsfehlersignal, ein Wellenfeld von an vorbestimmten geometrischen Positionen eines Raumes angeordneten diskreten Sendeeinrichtungen erzeugbar ist, mit folgenden Schritten:

Erzeugen einer Kopie des Eingangssignals;

Bereitstellen einer Mehrzahl von Wellenfeldkomponenten aus dem Eingangssignal;

Verzögern der Kopie des Eingangssignals;

Verarbeiten der verzögerten Kopie unter Verwendung des Verfahrens gemäß Anspruch 23, um eine Mehrzahl von gefilterten Wellenfeldkomponenten aus der verzögerten Kopie des Eingangssignals zu erhalten;

Bilden einer Differenz zwischen der Mehrzahl der Wellenfeldkomponenten und der Mehrzahl von gefilterten Wellenfeldkomponenten, um Differenzwellenfeldkomponenten zu erhalten;

Bestimmen von diskreten Filterkoeffizienten aus der Mehrzahl der Wellenfeldkomponenten, die dem verzögerten Empfangssignal zugeordnet sind, und aus den Differenzwellenfeldkomponenten;
Erzeugen eines Prädiktionsfehlersignals durch eine Unterdrückung des Redundanzanteils bei einer Filterung der verzögerten Wellenfeldkomponenten unter Verwendung der diskreten Filterkoeffizienten, wobei das Prädiktionssignal die Mehrzahl der gefilterten Wellenfeldkomponenten ist.

28. Verfahren zum Wiedergewinnen eines Nutzsignals aus einem Eingangssignal, wobei das Nutzsignal einen Informationsanteil und einen Redundanzanteil umfasst, wobei das Nutzsignal eine Mehrzahl von Wellenfeldkomponenten eines Wellenfeldes umfasst, wobei der Redundanzanteil für eine Filterung der Mehrzahl der Wellenfeldkomponenten unterdrückbar ist, wobei die Mehrzahl der gefilterten Wellenfeldkomponenten ein Prädiktionsfehlersignal ergibt, ansprechend auf welches ein Ausgangswellenfeld von an vorbestimmten geometrischen Positionen eines Raumes angeordneten diskreten Sendeeinrichtungen erzeugbar ist, wobei das Ausgangswellenfeld in dem Raum ausbreitbar ist, wobei ein Empfangswellenfeld von einer Mehrzahl von an vorbestimmten geometrischen Positionen des Raumes angeordneten Empfangseinrichtungen detektierbar ist, wobei die diskreten Empfangseinrichtungen, ansprechend auf das Empfangswellenfeld, das Eingangssignal erzeugen, mit folgenden Merkmalen:

Bereitstellen der Filterkoeffizienten;
Verarbeiten des Eingangssignals unter Verwendung des Verfahrens gemäß Anspruch 23;
Bilden einer Summe zwischen der Mehrzahl der Wellenfeldkomponenten und der Mehrzahl der gefilterten Wellenfeldkomponenten, um eine addierte Mehrzahl von Wellenfeldkomponenten zu erhalten;
Filtern der addierten Mehrzahl von Wellenfeldkomponenten unter Verwendung der diskreten Filterkoeffizienten, wobei die addierte Mehrzahl von Wellenfeldkomponenten das wiedergewonnene Nutzsignal ist.

29. Verfahren zum Unterdrücken eines Störanteils in einem Empfangssignal, das den Störanteil und einen Nutzanteil umfasst, wobei das Empfangssignal von an vorbestimmten geometrischen Positionen eines Raumes angeordneten Empfangseinrichtungen, ansprechend auf ein detektierbares Wellenfeld erzeugbar ist, wobei das detektierbare Wellenfeld eine Überlagerung eines Nutzwellenfeldes und eines Störwellenfeldes ist, wobei das Störwellenfeld einer weiteren geometrischen Position des Raumes zugeordnet ist, mit folgenden Schritten:

Verarbeiten des Empfangssignals unter Verwendung des Verfahrens gemäß Anspruch 23;
Selektieren der Störwellenfeldkomponenten aufgrund der räumlichen, zeitlichen oder spektralen Charakteristik aus den bereitgestellten Wellenfeldkomponenten;
Filtern der selektierten Störwellenfeldkomponenten, um die selektierten Störwellenfeldkomponenten zu beeinflussen;
Bilden einer Differenz zwischen den Wellenfeldkomponenten und den gefilterten Störwellenfeldkomponenten, um den Störanteil in den Wellenfeldkomponenten zu unterdrücken;
Bestimmen von diskreten Filterkoeffizienten aus den selektierten Störwellenfeldkomponenten und der Differenz;
Filtern der Wellenfeldkomponenten unter Verwendung der diskreten Filterkoeffizienten, um den Störanteil zu unterdrücken.

30. Verfahren zum Unterdrücken eines Störanteils in einem Empfangssignal, das den Störanteil und einen Nutzanteil umfasst, wobei das Empfangssignal von an vorbestimmten geometrischen Positionen eines Raumes angeordneten Empfangseinrichtungen, ansprechend auf ein erfassbares Wellenfeld, erzeugbar ist, wobei das erfassbare Wellenfeld eine Überlagerung eines Nutzwellenfeldes und eines Störwellenfeldes ist, mit folgenden Schritten:

Verarbeiten des Eingangssignals gemäß Anspruch 23, um gefilterte Wellenfeldkomponenten zu liefern;
Selektieren von zu selektierenden Wellenfeldkomponenten aufgrund der räumlichen, zeitlichen oder spektralen Charakteristik aus den Wellenfeldkomponenten und liefern von selektierten Wellenfeldkomponenten;
Bilden einer Differenz zwischen den selektierten Wellenfeldkomponenten und den gefilterten Wellenfeldkomponenten;
Bestimmen von diskreten Filterkoeffizienten aus den Wellenfeldkomponenten und der Differenz;
Filtern der Wellenfeldkomponenten unter Verwendung der diskreten Filterkoeffizienten, um den Störanteil zu unterdrücken.

31. Computerprogramm mit einem Programm-Code zur Durchführung eines Verfahrens gemäß einem der Ansprüchen 23 bis 30, wenn das Programm auf einem Computer abläuft.

**Claims**

1. An apparatus for processing an input signal, wherein the input signal comprises a plurality of subsignals associated to discrete transmit or receive means, wherein the discrete transmit or receive means are disposed at predetermined geometrical positions with regard to a room, comprising:

a means (101, 409, 431, 1111, 1131, 1601) for providing a plurality of wave-field components from the input signal comprising the number of subsignals, wherein the means (101, 409, 431, 1111, 1131, 1601) for providing is formed for providing a plurality of wave field components, wherein a superposition of the plurality of wave-field components results in a composite wave field, wherein the composite wave field can be propagated in the room, wherein the plurality of wave-field components is derived from the input signal using a transformation causing an orthogonalization of the spatial and temporal components, by a wave-field decomposition based on orthogonal wave field base functions and the geometrical positions of the discrete transmit or receive means predetermined with respect to the room;

a plurality (107, 201, 301, 413, 507, 607, 707, 901, 1115, 1207, 1307, 1417, 1517, 1611, 1713, 1807) of single filters, wherein a single filter is associated to a wave-field component of the plurality of wave-field components so that a filtering of the wave field components is acquired separately, wherein each wave field component is filtered by the single filter associated with the wave field component; and

wherein a single filter is formed to influence the associated wave-field component such that with regard to the plurality (107, 201, 301, 413, 507, 607, 707, 901, 1007, 1115, 1207, 1307, 1417, 1517, 1611, 1713, 1807) of single filters, a plurality of filtered wave-field components representing a processed input signal are obtained on the output side, wherein the plurality of the wave field components and thus the single filters is not predetermined by a number of transmit or receive means but is restricted by the spatial sampling theorem.

2. The apparatus according to claim 1, wherein the composite wave field is an acoustic sound field, which can be generated by the discrete transmit means at the predetermined geometrical positions, or that can be detected by the discrete receive means at the predetermined geometrical positions, wherein a subsignal comprises a sound pressure and/or a sound velocity of the sound field at a predetermined geometrical position with regard to the room, wherein the means for providing is formed to determine the wave-field components from a combination of a quantity based on sound pressures and/or a quantity based on sound velocities with the orthogonal wave field base functions.

3. The apparatus according to claim 2, wherein the means (101, 409, 431, 1111, 1131, 1601) for providing the plurality of wave-field components comprises a transformer for generating a spatial Fourier transform of the sound pressures as the quantity based on the sound pressures and/or for generating a spatial Fourier transform of the sound velocities as the quantity based on the sound velocities.

4. The apparatus according to one of claims 1 to 3, wherein the means (101, 409, 431, 1111, 1131, 1601) for providing the plurality of wave-field components further comprises a means for providing discrete function values formed for providing discrete function values of orthogonal wave-field functions.

5. The apparatus according to claim 4, wherein the means for providing discrete function values comprises a memory wherein the discrete function values can be stored.

6. The apparatus according to one of claims 1 to 5, wherein the plurality of single filters comprises discrete filter coefficients, wherein a single filter is formed to receive the discrete filter coefficients for filtering the wave-field components.

7. The apparatus according to one of claims 1 to 6, further comprising a means (423, 1029, 1133, 1619) for determining discrete filter coefficients, wherein the means (423, 1029, 1133, 1619) for determining discrete filter coefficients is formed to receive a difference wave-field component for a single filter and to determine the discrete filter coefficients by minimizing a difference between the reference wave-field component and the wave-field component.

8. The apparatus according to claim 7, wherein the means for determining (423, 1029, 1133, 1619) is formed by discrete filter coefficients to determine the discrete filter coefficients adaptively in the time or frequency domain based on one of the following algorithms: MSE algorithm (MSE = mean-squared error), MMSE algorithm (MMSE = minimum mean-squared error), LMS algorithm (LMS = least mean-square), RLS algorithm (RLS = recursive least-squares), FDAF algorithm (FDAF = frequency-domain adaptive filtering), affine projection algorithm, Newton algorithm, NLMS algorithm (NLMS = normalized LMS).

9. The apparatus according to one of claims 1 to 8, further comprising a means for reconstructing a wave field, wherein the means for reconstructing is formed to reconstruct a filtered wave field by superposing quantities based on the filtered wave-field components, and to provide a processed input signal in response to which the reconstructed wave field can be generated by a plurality of discrete transmit means.

10. The apparatus according to claim 9, wherein the means for reconstructing is formed to reconstruct the filtered wave field by a Fourier-based transform of the wave-field components.

11. An apparatus for detecting a transmission characteristic of a room during propagation of a wave field, wherein the wave field can be generated by discrete transmit means disposed at predetermined geometrical positions of the room in response to an input signal, wherein a receive wave field can be detected by receive means disposed at predetermined geometrical positions of the room, wherein the receive means generate an output signal in response to the receive wave field, comprising:

   a means (401, 1101) for generating a copy of an input signal;
   a means (101, 409, 431, 1111, 1131, 1601) for providing a plurality of wave-field components formed for providing a plurality of wave-field components of the output wave field from the output signal;
   an apparatus according to one of claims 1 to 10 for processing the copy of the input signal, wherein the apparatus for processing is formed to provide a plurality of filtered wave-field components of the wave field as a processed input signal;
   a subtracter for generating a plurality of difference wave-field components from a difference between the plurality of filtered wave-field components of the wave field and the plurality of wave-field components of the output wave field;
   a means (423, 1133, 1619) for determining discrete filter coefficients coupled to the apparatus for processing the input signal for receiving the wave-field components of the wave field and for providing the discrete filter coefficients, wherein the means (423, 1029, 1133, 1619) for determining discrete filter coefficients is formed to adaptively determine the discrete filter coefficients from the difference wave-field components and the wave-field components of the wave field, and to provide the discrete filter coefficients to the apparatus for processing the input signals, wherein the discrete filter coefficients are the detected transmission characteristic of the room.

12. The apparatus according to claim 11, further comprising a means for reconstructing a wave field from the difference wave-field components formed for reconstructing a wave field from the difference wave-field components, wherein the reconstructed wave field is less influenced by the input signal than by the output wave field.

13. An apparatus for actively suppressing interferences in an excitation signal, in response to which a plurality of transmit means disposed at geometrical positions of a room generate a wave field, which propagates in the room, wherein a receive wave field can be detected by a plurality of discrete receive means disposed at predetermined geometrical positions of the room, wherein the discrete receive means provide an output signal in response to the receive wave field, comprising:

   an apparatus according to one of claims 1 to 11 for processing the excitation signal as the input signal, which is formed to provide a plurality of filtered wave-field components of the wave field;
   a means for reconstructing the wave field from the filtered wave-field components formed for reconstructing the wave field from the filtered wave-field components, wherein the means for reconstructing is formed to provide a filtered excitation signal to the discrete transmit means;
   a means (101, 409, 431, 1111, 1131, 1601) for providing a plurality of wave-field components of the receive wave field;
   a means (423, 1133, 1619) for determining discrete filter coefficients coupled to the apparatus according to one of claims 1 to 10 for processing the input signal, for receiving the wave-field components of the wave field and for providing the discrete filter coefficients, wherein the means for determining the filter coefficients is formed to adaptively determine the discrete filter coefficients from the difference wave-field components and the wave-field components of the wave field, and to provide the discrete filter coefficients to the means for processing the input signal to suppress the interferences by filtering the wave-field components.

14. An apparatus for detecting an inverse transmission characteristic of a room during propagation of a wave field, wherein the wave field can be generated by discrete transmit means disposed at predetermined geometrical positions in the room in response to an input signal, wherein a receive wave field can be detected by receive means disposed at predetermined geometrical positions of the room, wherein the receive means generate an output signal in response to the receive wave field, comprising:

a means (401, 1101) for generating a copy formed for generating a copy of the input signal;

a means for delaying formed for delaying the copy of the input signal;

a means (101, 409, 431, 913, 1111, 1131, 1601) for providing a plurality of wave-field components formed for providing a plurality of wave-field components from the delayed copy of the input signal as reference wave-field components;

an apparatus according to one of claims 1 to 10 for processing the output signal and for providing a plurality of filtered wave-field components of the receive wave field;

a subtracter formed for generating a plurality of difference wave-field components from a difference between the filtered wave-field components and the delayed wave-field components;

a means (423, 1133, 1619) for determining discrete filter coefficients, coupled to the apparatus according to one of claims 1 to 10 for receiving the wave-field coefficients of the wave field and for providing the discrete filter coefficients, wherein the means (423, 1133, 1619) for determining discrete filter coefficients is formed to adaptively determine the discrete filter coefficients from the difference wave-field components and the wave-field components of the wave field, and to provide the discrete filter coefficients to the apparatus according to one of claims 1 to 11, wherein the discrete filter coefficients are the detected inverse transmission characteristic of the room.

15. An apparatus for generating a prediction error signal from an input signal, wherein the input signal has an information portion and a redundancy portion, and wherein the prediction error signal comprises the information portion, wherein a wave field can be generated by discrete transmit means disposed at predetermined geometrical positions of the room in response to the prediction error signal, comprising:

a means (401; 1101) for generating a copy formed for generating a copy of the input signal;

a means (101, 409, 431, 1111, 1131, 1601) for providing a plurality of wave-field components formed for providing a plurality of wave-field components from the input signal;

a means for delaying formed for delaying the copy of the input signal;

an apparatus according to one of claims 1 to 10 for processing the delayed copy of the input signal and for providing a plurality of filtered wave-field components from the delayed copy of the input signal;

a subtracter formed for generating a plurality of difference wave-field components from a difference between the plurality of wave-field components and the plurality of filtered wave-field components;

a means (423, 1133, 1619) for determining discrete filter coefficients, wherein the means for determining discrete filter coefficients is coupled to the apparatus according to claim 1 for receiving the wave-field components and for providing

the discrete filter coefficients, wherein the means (423, 1133, 1619) for determining discrete filter coefficients is formed to provide the discrete filter coefficients from the plurality of difference wave-field components and the plurality of wave-field components associated to the delayed input signal, to generate the prediction error signal by suppressing the redundancy portion during filtering, wherein the plurality of filtered wave-field components is the prediction error signal.

16. An apparatus for retrieving a useful signal from an input signal, wherein the useful signal comprises an information portion and a redundancy portion, wherein the useful signal comprises a plurality of wave-field components of a wave field, wherein the redundancy portion can be suppressed by filtering the plurality of wave-field components, wherein the plurality of filtered wave-field components results in a prediction error signal, in response to which an output wave field can be generated by discrete transmit means disposed at predetermined geometrical positions of a room, wherein the output wave field can be propagated in the room, wherein a receive wave field can be detected by a plurality of receive means disposed at predetermined geometrical positions of the room, wherein the discrete receive means generate the input signal in response to the receive wave field, comprising:

a means for providing the filter coefficients formed for providing filter coefficients;

an apparatus according to one of claims 1 to 11 for processing the input signal, wherein the means for providing wave-field components comprises a summer, which is formed to add the plurality of wave-field components and the plurality of filtered wave-field components and to provide the added plurality of wave-field components to the plurality of single filters, wherein the plurality of single filters is formed to filter the added plurality of wave-field components by using the discrete filter coefficients,

wherein the added plurality of wave-field components is the retrieved useful signal.

17. An apparatus for suppressing an interference portion in a received signal comprising the interference portion and a useful portion, wherein the received signal can be generated by receive means disposed at predetermined geometrical positions of a room in response to a detectable wave field, wherein the detectable wave field is a superposition of a useful wave field and an interference wave field, comprising:

an apparatus according to one of claims 1 to 10 for processing the input signal, wherein the means for providing wave-field components comprises a selector formed to select wave-field components to be selected based on the spatial, temporal or spectral characteristic, and to provide selected wave-field components to the plurality of single filters, wherein the plurality of single filters is formed to influence the selected wave-field components and to output influenced selected wave-field components as filtered wave-field components;
a subtracter coupled to the apparatus according to one of claims 1 to 10, wherein the subtracter is formed to generate a difference between the wave-field components and the filtered wave-field components;
a means (423, 1133, 1619) for determining discrete filter coefficients formed for determining discrete filter coefficients from the selected wave-field components and the difference, wherein the means (423, 1133, 1619) for determining discrete filter coefficients is further formed to provide the filter coefficients to the plurality of single filters of the apparatus according to one of claims 1 to 10, to filter the selected wave-field components such that the interference portion in the wave-field components provided by the subtracter is suppressed.

18. The apparatus according to claim 17, wherein the wave-field components to be selected are interference wave-field components or useful wave-field components.

19. The apparatus according to claim 17 or 18, wherein the means for providing wave-field components has a further selector, wherein the further selector is formed to select further wave-field components to be selected based on the spatial, temporal or spectral characteristic, and to provide further selected wave-field components as the wave-field components.

20. The apparatus according to claim 19, wherein the further selected components are useful wave-field components or interference wave-field components.

21. An apparatus for suppressing an interference portion in a received signal comprising the interference portion and a useful portion, wherein the received signal can be generated by receive means disposed at predetermined geometrical positions of a room in response to a detectable wave field, wherein the detectable wave field is a superposition of a useful wave field and an interference wave field, comprising:

an apparatus according to one of claims 1 to 10 for processing the input signal and for providing filtered wave-field components;
a selector coupled to the means for determining wave-field components, wherein the selector is formed to select wave-field components to be selected based on the spatial, temporal or spectral characteristic from the wave-field components, and to provide the selected wave-field components;
a subtracter coupled to the apparatus according to one of claims 1 to 10, wherein the subtracter is formed to generate a difference between the selected wave-field components and the filtered wave-field components;
a means (423, 1133, 1619) for determining discrete filter coefficients formed for determining discrete filter coefficients from the wave-field components and the difference, wherein the means (423, 1133, 1619) for determining discrete filter coefficients is formed to provide the filter coefficients to the plurality of single filters of the apparatus according to one of claims 1 to 10, to filter the wave-field components such that the interference portion in the wave-field components provided by the subtracter is suppressed.

22. The apparatus according to claim 21, wherein the wave-field components to be selected are interference wave-field components or useful wave-field components.

23. A method for processing an input signal, wherein the input signal comprises a plurality of subsignals associated to discrete transmit or receive means, wherein the discrete transmit or receive means are disposed at predetermined geometrical positions of a room, comprising the steps of:

providing a plurality of wave-field components from the input signal comprising the number of subsignals, wherein a superposition of the plurality of wave-field components results in a composite wave field, wherein the composite wave field can be propagated in the room, wherein the plurality of wave-field components is derived from the input signal by a wave-field decomposition based on orthogonal wave field base functions and the predetermined geometrical positions, with respect to the room, of the discrete transmit or receive means using a transformation causing an orthogonalization of the spatial and temporal components; and

filtering wave-field components using a plurality (107, 201, 301, 413, 507, 607, 707, 901, 1115, 1207, 1307, 1417, 1517, 1611, 1713, 1807) of single filters, wherein a single filter is associated to a wave-field component of the plurality of wave-field components so that a filtering of the wave field components is acquired separately, wherein each wave field component is filtered by the single filter associated with the wave field component, wherein the wave field components of the plurality of wave field components are influenced such that on the output side a plurality of filtered wave field components is acquired representing a processed input signal, wherein the number of the wave field components and thus of the single filters is not given by a number of transmit or receive means but is limited by the spatial sampling theorem.

24. A method for detecting a transmission characteristic of a room during propagation of a wave field, wherein the wave field can be generated by discrete transmit means disposed at predetermined geometrical positions in the room in response to an input signal, and wherein a receive wave field can be detected by receive means disposed at predetermined geometrical positions of the room, wherein the receive means generate an output signal in response to the receive wave field, comprising the steps of:

generating a copy of the input signal;

providing a plurality of wave-field components of the output wave field from the output signal;

processing the copy of the input signal according to claim 23 to obtain a plurality of filtered wave-field components of the wave field as a processed input signal;

forming a difference between the plurality of filtered wave-field components of the wave field and the plurality of wave-field components of the output wave field to generate difference wave-field components;

determining discrete filter coefficients from the difference wave-field components and the wave-field components of the wave field, wherein the filter coefficients are determined adaptively;

using the adaptively determined discrete filter coefficients for filtering the wave-field components, wherein the discrete filter coefficients are the detected transmission characteristic of the room.

25. A method for actively suppressing interferences in an excitation signal, in response to which a plurality of discrete transmit means disposed at predetermined geometrical positions of a room generates a wave field, which can be propagated in the room, wherein a receive wave field can be detected by a plurality of discrete receive means disposed at predetermined geometrical positions of the room, wherein the discrete receive means provide an output signal in response to the receive wave field, comprising the steps of:

processing the excitation signal according to claim 23 to obtain a plurality of filtered wave-field components of the wave field;

reconstructing the wave field from the filtered wave-field components to obtain a filtered excitation signal for exciting the discrete transmit means;

providing a plurality of wave-field components of the receive wave field;

receiving the wave-field components of the wave field;

determining discrete filter coefficients from the difference wave-field components and the wave-field components of the wave field, wherein the filter coefficients are determined adaptively;

filtering the wave-field components by using the adaptively determined filter coefficients to suppress the interferences.

26. A method for detecting an inverse transmission characteristic of a room during propagation of a wave field, wherein the wave field can be generated by discrete transmit means disposed at predetermined geometrical positions in response to an input signal, wherein a receive wave field can be detected by receive means disposed at predetermined geometrical positions of the room, wherein the receive means generate an output signal in response to the receive wave field, comprising the steps of:

generating a copy of the input signal;

delaying the copy of the input signal;

providing a plurality of wave-field components from the delayed copy of the input signal;

processing the input signal according to claim 23 to provide a plurality of filtered wave-field components of the receive wave field;

forming a difference between the filtered wave-field components and the delayed wave-field components to generate difference wave-field components;

determining discrete filter coefficients from the reference wave-field components and the wave-field components of the wave field, wherein the filter coefficients are determined adaptively;

filtering the wave-field components by using the adaptively determined filter coefficients;

wherein the discrete filter coefficients are the detected inverse transmission characteristic of the room.

27. A method for generating a prediction error signal from an input signal, wherein the input signal comprises an information portion and a redundancy portion, and wherein the prediction error signal comprises the information portion, wherein a wave field can be generated by discrete transmit means disposed at predetermined geometrical positions of a room in response to the prediction error signal, comprising the steps of:

generating a copy of the input signal;

providing a plurality of wave-field components from the input signal;

delaying the copy of the input signal;

processing the delayed copy by using the method according to claim 23 to obtain a plurality of filtered wave-field components from the delayed copy of the input signal;

forming a difference between the plurality of wave-field components and the plurality of filtered wave-field components to obtain difference wave-field components;

determining discrete filter coefficients from the plurality of wave-field components associated to the delayed received signal, and from the difference wave-field components;

generating a prediction error signal by suppressing the redundancy portion during filtering the delayed wave-field components by using the discrete filter coefficients, wherein the prediction signal is the plurality of filtered wave-field components.

28. A method for retrieving a useful signal from an input signal, wherein the useful signal comprises an information portion and a redundancy portion, wherein the useful signal comprises a plurality of wave-field components of a wave field, wherein the redundancy portion can be suppressed for filtering the plurality of wave-field components, wherein the plurality of filtered wave-field components results in a prediction error signal, in response to which an output wave field can be generated by discrete transmit means disposed at predetermined geometrical positions of a room, wherein the output wave field can be propagated in the room, wherein a receive wave field can be detected by a plurality of receive means disposed at predetermined geometrical positions of the room, wherein the discrete receive means generate the input signal in response to the receive wave field, comprising the steps of:

providing the filter coefficients;

processing the input signal by using the method according to claim 23;

forming a sum between the plurality of wave-field components and the plurality of filtered wave-field components to obtain an added plurality of wave-field components;

filtering the added plurality of wave-field components by using the discrete filter coefficients, wherein the added plurality of wave-field components is the retrieved useful signal.

29. A method for suppressing an interference portion in a received signal comprising the interference portion and a useful portion, wherein the received signal can be generated by receive means disposed at predetermined geometrical positions of a room in response to a detectable wave field, wherein the detectable wave field is a superposition of a useful wave field and an interference wave field, wherein the interference wave field is associated to a further geometrical position of the room, comprising the steps of:

processing the received signal by using the method according to claim 23;

selecting the interference wave-field components based on the spatial, temporal or spectral characteristic from the provided wave-field components;

filtering the selected interference wave-field components to influence the selected interference wave-field components;

forming a difference between the wave-field components and the filtered interference wave-field components to suppress the interference portion in the wave-field components;

determining discrete filter coefficients from the selected interference wave-field components and the difference;

filtering the wave-field components by using the discrete filter coefficients to suppress the interference portion.

30. A method for suppressing an interference portion in a received signal comprising the interference portion and a useful portion, wherein the received signal can be generated by receive means disposed at predetermined geometrical positions in a room in response to a detectable wave field, wherein the detectable wave field is a superposition of a useful wave field and an interference wave field, comprising the steps of:

> processing the input signal according to claim 23 to provide filtered wave-field components;
> selecting wave-field components to be selected based on the spatial, temporal or spectral characteristic from the wave-field components and providing selected wave-field components;
> forming a difference between the selected wave-field components and the filtered wave-field components;
> determining discrete filter coefficients from the wave-field components and the difference;
> filtering the wave-field components by using the discrete filter coefficients to suppress the interference portion.

31. A computer program with a program code for performing a method according to one of claims 23 to 30 when the program runs on a computer.


**Revendications**

1. Dispositif pour traiter un signal d'entrée, le signal d'entrée présentant un certain nombre de sous-signaux associés à des moyens d'émission ou de réception discrets, les moyens d'émission ou de réception discrets étant disposés à des positions géométriques prédéterminées par rapport à un espace, aux caractéristiques suivantes:

> un moyen (101, 409, 431, 1111, 1131, 1601) destiné à mettre à disposition une pluralité de composantes de champ d'onde à partir du signal d'entrée présentant le nombre de sous-signaux, le moyen (101, 409, 431, 1111, 1131, 1601) destiné à mettre à disposition étant réalisé pour mettre à disposition une pluralité de composantes de champ d'onde, une superposition de la pluralité de composantes de champ d'onde ayant pour résultat un champ d'onde composé, le champ d'onde composé étant à même de se propager dans l'espace, la pluralité de composantes de champ d'onde étant dérivées du signal d'entrée par une décomposition de champ d'onde sur base de fonctions de base de champ d'onde orthogonales et des positions géométriques prédéterminées par rapport à l'espace des moyens d'émission ou de réception discrets à l'aide d'une transformation qui entraîne une orthogonalisation des composantes spatiales et temporelles;
> une pluralité (107, 201, 301, 413, 507, 607, 707, 901, 1115, 1207, 1307, 1417, 1517, 1611, 1713, 1807) de filtres individuels, un filtre individuel étant associé à une composante de champ d'onde de la pluralité de composantes de champ d'onde, de sorte que soit obtenue une filtration des composantes de champ d'onde séparément l'une de l'autre, chaque composante de champ d'onde étant filtrée par le filtre individuel associé à la composante de champ d'onde, et un filtre individuel étant réalisé pour influencer la composante de champ d'onde associée de sorte que soient obtenues, du côté de la sortie, par rapport à la pluralité (107, 201, 301, 413, 507, 607, 707, 901, 1115, 1207, 1307, 1417, 1517, 1611, 1713, 1807) de filtres individuels, une pluralité de composantes de champ d'onde filtrées représentant un signal d'entrée traité, le nombre de composantes de champ d'onde et, de ce fait, de filtres individuels n'étant pas prédéterminé par un nombre de moyens d'émission ou de réception, mais est limité par le théorème de balayage spatial.

2. Dispositif selon la revendication 1, dans lequel le champ d'onde composé est un champ acoustique pouvant être généré par les moyens d'émission discrets aux positions géométriques prédéterminées, ou pouvant être détecté par les moyens de réception discrets aux positions géométriques prédéterminées, un sous-signal comportant une pression acoustique et/ou une vitesse du son du champ acoustique à une position géométrique prédéterminée par rapport à l'espace, le moyen destiné à mettre à disposition étant réalisé pour déterminer les composantes de champ d'onde à partir d'un couplage d'une grandeur basée sur les pressions acoustiques et/ou d'une grandeur basée sur les vitesses du son avec les fonctions de base de champ d'onde orthogonales.

3. Dispositif selon la revendication 2, dans lequel le moyen (101, 409, 431, 1111, 1131, 1601) destiné à mettre à disposition la pluralité de composantes de champ d'onde présente un transformateur destiné à générer une transformée de Fourier spatiale des pressions acoustiques comme grandeur basée sur les pressions acoustiques et/ou à générer une transformée de Fourier spatiale des vitesses du son comme grandeur basée sur les vitesses du son.

4. Dispositif selon l'une des revendications 1 à 3, dans lequel le moyen (101, 409, 431, 1111, 1131, 1601) destiné à mettre à disposition la pluralité de composantes de champ d'onde présente par ailleurs un moyen destiné à fournir des valeurs de fonction discrètes qui est réalisé pour fournir des valeurs de fonction discrètes de fonctions de champ d'onde orthogonales.

5. Dispositif selon la revendication 4, dans lequel le moyen destiné à fournir des valeurs de fonction discrètes comporte une mémoire dans laquelle peuvent être mémorisées les valeurs de fonction discrètes.

6. Dispositif selon l'une des revendications 1 à 5, dans lequel la pluralité de filtres individuels présentent des coefficients de filtre discrets, un filtre individuel étant réalisé pour recevoir les coefficients de filtre discrets pour filtrer les composantes de champ d'onde.

7. Dispositif selon l'une des revendications 1 à 6, présentant par ailleurs un moyen (423, 1029, 1133, 1619) destiné à déterminer des coefficients de filtre discrets, le moyen (423, 1029, 1133, 1619) destiné à déterminer des coefficients de filtre discrets étant réalisé pour recevoir, pour un filtre individuel, une composante de champ d'onde de différence, et pour déterminer les coefficients de filtre discrets par une minimisation d'une différence entre la composante de champ d'onde de référence et la composante de champ d'onde.

8. Dispositif selon la revendication 7, dans lequel le moyen destiné à déterminer (423, 1029, 1133, 1619) des coefficients de filtre discrets est réalisé pour déterminer les coefficients de filtre discrets de manière adaptative dans le domaine temporel ou le domaine fréquentiel sur base de l'un des algorithmes suivants: algorithme MSE (MSE = Mean-Squared Error, erreur au carré moyenne), algorithme MMSE (MMSE = Minimum Mean-Squared Error; erreur au carré moyenne minimale), algorithme LMS (LMS = Least Mean-Square, moindre carré moyen), algorithme RLS (RLS = Recursive Least-Squares, moindres carrés récursifs), algorithme FDAF (FDAF = Frequency-Domain Adaptive Filtering), algorithme de projection affine, algorithme de Newton, algorithme NLMS (NLMS = LMS normalisé).

9. Dispositif selon l'une des revendications 1 à 8, présentant par ailleurs un moyen destiné à reconstruire un champ d'onde, le moyen destiné à reconstruire étant réalisé pour reconstruire un champ d'onde filtré par superposition de grandeurs basées sur les composantes de champ d'onde filtrées, et pour fournir un signal d'entrée traité en réponse auquel le champ d'onde reconstruit peut être généré par une pluralité de moyens d'émission discrets.

10. Dispositif selon la revendication 9, dans lequel le moyen destiné à reconstruire est réalisé pour reconstruire le champ d'onde filtré par une transformation à base de Fourier des composantes de champ d'onde.

11. Dispositif pour détecter une caractéristique de transmission d'un espace lors d'une propagation d'un champ d'onde, le champ d'onde pouvant être généré en réponse à un signal d'entrée par des moyens d'émission discrets disposés à des positions géométriques prédéterminées de l'espace, le champ d'onde de réception pouvant être détecté par des moyens de réception disposés à des positions géométriques déterminées de l'espace, les moyens de réception générant un signal de sortie en réponse au champ d'onde de réception, aux caractéristiques suivantes:

   un moyen (401, 1101) destiné à générer une copie, qui est réalisé pour générer une copie d'un signal d'entrée;
   un moyen (101, 409, 431, 1111, 1131, 1601) destiné à mettre à disposition une pluralité de composantes de champ d'onde, qui est réalisé pour mettre à disposition une pluralité de composantes du champ d'onde de sortie à partir du signal de sortie;
   un dispositif selon l'une des revendications 1 à 10 destiné à traiter la copie du signal d'entrée, le dispositif destiné à traiter étant réalisé pour fournir une pluralité de composantes de champ d'onde filtrées du champ d'onde comme signal d'entrée traité;
   un soustracteur destiné à générer une pluralité de composantes de champ d'onde de différence à partir d'une différence entre la pluralité de composantes de champ d'onde filtrées du champ d'onde et de la pluralité de composantes de champ d'onde du champ d'onde de sortie;
   un moyen (423, 1133, 1619) destiné à déterminer des coefficients de filtre discrets, qui est couplé au dispositif pour traiter le signal d'entrée pour recevoir les composantes du champ d'onde et pour fournir le coefficient de filtre discret, le moyen (423, 1029, 1133, 1619) pour déterminer les coefficients de filtre discrets étant réalisé pour déterminer de manière adaptative les coefficients de filtre discrets à partir des composantes de champ d'onde de différence et des composantes du champ d'onde, et pour fournir les coefficients de filtre discrets au dispositif pour traiter le signal d'entrée, les coefficients de filtre discrets étant la caractéristique de transmission détectée de l'espace.

12. Dispositif selon la revendication 11, présentant par ailleurs un moyen destiné à reconstruire un champ d'onde à partir des composantes de champ d'onde de différence, lequel est réalisé pour reconstruire un champ d'onde à partir des composantes de champ d'onde de différence, le champ d'onde reconstruit présentant une moindre influence par le signal d'entrée que le champ d'onde de sortie.

13. Dispositif pour supprimer de manière active les parasites dans un signal d'excitation, en réponse auquel une pluralité de moyens d'émission disposés à des positions géométriques d'un espace génèrent un champ d'onde qui se propage dans l'espace, un champ d'onde de réception pouvant être détecté par une pluralité de moyens de réception discrets disposés à des positions géométriques prédéterminées de l'espace, les moyens de réception discrets fournissant un signal de sortie en réponse au champ d'onde de réception, aux caractéristiques suivantes:

un dispositif selon l'une des revendications 1 à 11 pour traiter le signal d'excitation comme signal d'entrée, lequel est réalisé pour fournir une pluralité de composantes de champ d'onde filtrées du champ d'onde;

un moyen destiné à reconstruire le champ d'onde à partir des composantes de champ d'onde filtrées, lequel est réalisé pour reconstruire un champ d'onde à partir des composantes de champ d'onde filtrées, le moyen destiné à reconstruire étant par ailleurs réalisé pour fournir un signal d'excitation filtré aux moyens d'émission discrets;

un moyen (101, 409, 431, 1111, 1131, 1601) destiné à mettre à disposition une pluralité de composantes de champ d'onde du champ d'onde de réception;

un moyen (423, 1133, 1619) destiné à déterminer des coefficients de filtre discrets qui est couplé au dispositif selon l'une des revendications 1 à 10 pour traiter le signal d'entrée, pour recevoir les composantes du champ d'onde et pour fournir les coefficients de filtre discrets, le moyen destiné à déterminer les coefficients de filtre étant réalisé pour déterminer de manière adaptative, à partir des composantes de champ d'onde de différence et des composantes du champ d'onde, les coefficients de filtre discrets, et pour fournir les coefficients de filtre discrets au moyen destiné à traiter le signal d'entrée, pour supprimer les parasites par filtration des composantes de champ d'onde.

**14.** Dispositif pour détecter une caractéristique de transmission inverse d'un espace lors d'une propagation d'un champ d'onde, le champ d'onde pouvant être généré, en réponse à un signal d'entrée, par des moyens d'émission discrets disposés à des positions géométriques prédéterminées de l'espace, un champ d'onde de réception pouvant être détecté par des moyens de réception disposés à des positions géométriques prédéterminées de l'espace, les moyens de réception générant un signal de sortie en réponse au champ d'onde de réception, aux caractéristiques suivantes:

un moyen (401, 1101) destiné à générer une copie, lequel est réalisé pour générer une copie du signal d'entrée;

un moyen destiné à retarder, qui est réalisé pour retarder la copie du signal d'entrée;

un moyen (101, 409, 431, 913, 1111, 1131, 1601) destiné à mettre à disposition une pluralité de composantes de champ d'onde, lequel est réalisé pour mettre à disposition une pluralité de composantes de champ d'onde à partir de la copie retardée du signal d'entrée, comme composantes de champ d'onde de référence;

un dispositif selon l'une des revendications 1 à 10 pour traiter le signal de sortie et fournir une pluralité de composantes de champ d'onde filtrées du champ d'onde de réception;

un soustracteur réalisé pour générer une pluralité de composantes de champ d'onde de différence à partir d'une différence entre les composantes de champ d'onde filtrées et les composantes de champ d'onde retardées;

un moyen (423, 1133, 1619) destiné à déterminer des coefficients de filtre discrets, couplé au dispositif selon l'une des revendications 1 à 10 pour recevoir les coefficients du champ d'onde et pour fournir les coefficients de filtre discrets, le moyen (423, 1133, 1619) destiné à déterminer des coefficients de filtre discret étant réalisé pour déterminer de manière adaptative les coefficients de filtre discrets à partir des composantes de champ d'onde de différence et des composants du champ d'onde, et pour fournir les coefficient de filtre discrets au dispositif selon l'une des revendication 1 à 11, les coefficients de filtre discrets étant la caractéristique de transmission inverse détectée de l'espace.

**15.** Dispositif pour générer un signal d'erreur de prédiction à partir d'un signal d'entrée, le signal d'entrée présentant une partie d'information et une partie de redondance, et le signal d'erreur de prédiction comportant la partie d'information, un champ d'onde pouvant être généré, en réponse au signal d'erreur de prédiction, par des moyens d'émission discrets disposés à des positions géométriques déterminées de l'espace, aux caractéristiques suivantes:

un moyen (401, 1101) destiné à générer une copie, lequel est réalisé pour générer une copie du signal d'entrée;

un moyen (101, 409, 431, 1111, 1131, 1601) destiné à mettre à disposition une pluralité de composantes de champ d'onde, lequel est réalisé pour mettre à disposition une pluralité de composantes de champ d'onde à partir du signal d'entrée;

un moyen destiné à retarder, qui est réalisé pour retarder la copie du signal d'entrée;

un dispositif selon l'une des revendications 1 à 10 pour traiter la copie retardée du signal d'entrée et pour fournir une pluralité de composantes de champ d'onde filtrées à partir de la copie retardée du signal d'entrée;

un soustracteur, qui est réalisé pour générer une pluralité de composantes de champ d'onde de différence à partir d'une différence entre la pluralité de composantes de champ d'onde et la pluralité de composantes de champ d'onde filtrées;

un moyen (423, 1133, 1619) destiné à déterminer des coefficients de filtre discrets, le dispositif pour déterminer des coefficients de filtre discrets étant couplé au dispositif selon la revendication 1 pour recevoir les composantes de champ d'onde et pour fournir les coefficients de filtre discrets, le moyen (423, 1133, 1619) destiné à déterminer les coefficients de filtre discrets étant réalisé pour fournir, à partir de la pluralité des composantes de champ d'onde de différence et de la pluralité de composantes de champ d'onde associées au signal d'entrée retardé, les coefficients de filtre discrets, pour générer le signal d'erreur de prédiction par une suppression de la partie de redondance lors de la filtration, la pluralité de composantes de champ d'onde filtrées étant le signal d'erreur de prédiction.

**16.** Dispositif pour récupérer un signal utile à partir d'un signal d'entrée, le signal utile comportant une partie d'information et une partie de redondance, le signal utile comportant une pluralité de composantes d'un champ d'onde, la partie de redondance pouvant être supprimée par une filtration de la pluralité de composantes de champ d'onde, la pluralité de composantes de champ d'onde filtrées donnant un signal d'erreur de prédiction en réponse auquel un champ d'onde de sortie peut être généré par des moyens d'émission discrets disposés à des positions géométriques prédéterminées d'un espace, le champ d'onde de sortie pouvant se propager dans l'espace, un champ d'onde de réception pouvant être détecté par une pluralité de moyens de réception disposés à des positions géométriques prédéterminées de l'espace, les moyens de réception discrets générant le signal d'entrée en réponse au champ d'onde de réception, aux caractéristiques suivantes:

un moyen destiné à mettre à disposition les coefficients de filtre, qui est réalisé pour mettre à disposition des coefficients de filtre;

un dispositif selon l'une des revendications 1 à 11 pour traiter le signal d'entrée, le moyen destiné à mettre à disposition des composantes de champ d'onde présentant un additionneur qui est réalisé pour additionner la pluralité de composantes de champ d'onde et la pluralité de composantes de champ d'onde filtrées, et pour fournir la pluralité additionnée de composantes de champ d'onde à la pluralité de filtres individuels, la pluralité de filtres individuels étant réalisés pour filtrer la pluralité additionnée de composantes de champ d'onde à l'aide des coefficients de filtre discrets,

la pluralité additionnée de composantes de champ d'onde étant le signal utile récupéré.

**17.** Dispositif pour supprimer une partie parasite dans un signal de réception comportant la partie parasites et une partie utile, le signal de réception pouvant être généré par des moyens de réception disposés à des positions géométriques prédéterminées d'un espace en réponse à un champ d'onde pouvant être détecté, le champ d'onde pouvant être détecté étant une superposition d'un champ d'onde utile et d'un champ d'onde parasite, aux caractéristiques suivantes:

un dispositif selon l'une des revendications 1 à 10 pour traiter le signal d'entrée, le moyen destiné à mettre à disposition des composantes de champ d'onde présentant un sélecteur qui est réalisé pour sélectionner les composantes de champ d'onde à sélectionner sur base de la caractéristique spatiale, temporelle ou spectrale, et pour fournir des composantes de champ d'onde sélectionnées à la pluralité de filtres individuels, la pluralité de filtres individuels étant réalisés pour influencer les composantes de champ d'onde sélectionnées et pour sortir des composantes de champ d'onde sélectionnées influencées comme composantes de champ d'onde filtrées;

un soustracteur couplé au dispositif selon l'une des revendications 1 à 10, le soustracteur étant réalisé pour générer une différence entre les composantes de champ d'onde et les composantes de champ d'onde filtrées;

un moyen (423, 1133, 1619) destiné à déterminer des coefficients de filtre discrets, qui est réalisé pour déterminer des coefficients de filtre discrets à partir des composantes de champ d'onde sélectionnées et de la différence, le moyen (423, 1133, 1619) destiné à déterminer des coefficients de filtres discrets étant par ailleurs réalisé pour fournir les coefficients de filtre à la pluralité de filtres individuels du dispositif selon l'une des revendications 1 à 10, pour filtrer les composantes de champ d'onde sélectionnées de sorte que soit supprimée la partie parasite dans les composantes de champ d'onde fournies par le soustracteur.

**18.** Dispositif selon la revendication 17, dans lequel les composantes de champ d'onde à sélectionner sont des composantes de champs d'ondes parasites ou des composantes de champ d'onde utiles.

**19.** Dispositif selon la revendication 17 ou 18, dans lequel le moyen destiné à mettre à disposition des composantes de champ d'onde présente un autre sélecteur, dans lequel l'autre sélecteur est réalisé pour sélectionner d'autres composantes de champ d'onde à sélectionner sur base de la caractéristique spatiale, temporelle ou spectrale, et pour fournir d'autres composantes de champ d'onde sélectionnées comme composantes de champ d'onde.

20. Dispositif selon la revendication 19, dans lequel les autres composantes sélectionnées sont des composantes de champ d'onde utiles ou des composantes de champ d'onde parasites.

21. Dispositif pour supprimer une partie parasite dans un signal de réception comportant la partie parasite et une partie utile, le signal de réception pouvant être généré, en réponse à un champ d'onde pouvant être détecté, par des moyens de réception disposés à des positions géométriques prédéterminées d'un espace, le champ d'onde pouvant être détecté étant une superposition d'un champ d'onde utile et d'un champ d'onde parasite, aux caractéristiques suivantes:

un dispositif selon l'une des revendication 1 à 10 pour traiter le signal d'entrée et pour fournir des composantes de champ d'onde filtrées;

un sélecteur couplé au moyen destiné à déterminer des composantes de champ d'onde, le sélecteur étant réalisé pour sélectionner les composantes de champ d'onde à sélectionner sur base de la caractéristique spatiale, temporelle ou spectrale à partir des composantes de champ d'onde, et pour fournir les composantes de champ d'onde sélectionnées;

un soustracteur couplé au dispositif selon l'une des revendications 1 à 10, le soustracteur étant réalisé pour générer une différence entre les composantes de champ d'onde et les composantes de champ d'onde filtrées; un moyen (423, 1133, 1619) destiné à déterminer des coefficients de filtre discrets, qui est réalisé pour déterminer des coefficients de filtre discrets à partir des composantes de champ d'onde et de la différence, le moyen (423, 1133, 1619) destiné à déterminer des coefficients de filtres discrets étant par ailleurs réalisé pour fournir les coefficients de filtre à la pluralité de filtres individuels du dispositif selon l'une des revendications 1 à 10, pour filtrer les composantes de champ d'onde de sorte que soit supprimée la partie parasite dans les composantes de champ d'onde fournies par le soustracteur.

22. Dispositif selon la revendication 21, dans lequel les composantes de champ d'onde à sélectionner sont des composantes de champ d'onde parasites ou des composantes de champ d'onde utiles.

23. Procédé pour traiter un signal d'entrée, le signal d'entrée présentant un certain nombre de sous-signaux associés à des moyens d'émission ou de réception discrets, les moyens d'émission ou de réception discrets étant disposés à des positions géométriques prédéterminées d'un espace, aux caractéristiques suivantes:

mettre à disposition une pluralité de composantes de champ d'onde à partir du signal d'entrée présentant le nombre de sous-signaux, une superposition de la pluralité de composantes de champ d'onde ayant pour résultat un champ d'onde composé, le champ d'onde composé étant à même de se propager dans l'espace, la pluralité de composantes de champ d'onde étant dérivées du signal d'entrée par une décomposition de champ d'onde sur base de fonctions de base de champ d'onde orthogonales et des positions géométriques prédéterminées par rapport à l'espace des moyens d'émission ou de réception discrets à l'aide d'une transformation qui entraîne une orthogonalisation des composantes spatiales et temporelles; et
filtrer des composantes de champ d'onde à l'aide d'une pluralité (107, 201, 301, 413, 507, 607, 707, 901, 1115, 1207, 1307, 1417, 1517, 1611, 1713, 1807) de filtres individuels, un filtre individuel étant associé à une composante de champ d'onde de la pluralité de composantes de champ d'onde, de sorte que soit obtenue une filtration des composantes de champ d'onde séparément l'une de l'autre, chaque composante de champ d'onde étant filtrée par le filtre individuel associé à la composante de champ d'onde, les composantes de champ d'onde de la pluralité de composantes de champ d'onde étant influencées de sorte que soient obtenues, du côté de la sortie, une pluralité de composantes de champ d'onde filtrées représentant un signal d'entrée traité, le nombre de composantes de champ d'onde et, de ce fait, de filtres individuels n'étant pas prédéterminé par un nombre de moyens d'émission ou de réception, mais est limité par le théorème de balayage spatial.

24. Procédé pour détecter une caractéristique de transmission d'un espace lors d'une propagation d'un champ d'onde, le champ d'onde pouvant être généré en réponse à un signal d'entrée par des moyens d'émission discrets disposés à des positions géométriques prédéterminées de l'espace, et le champ d'onde de réception pouvant être détecté par des moyens de réception disposés à des positions géométriques déterminées de l'espace, les moyens de réception générant un signal de sortie en réponse au champ d'onde de réception, aux étapes suivantes consistant à:

générer une copie du signal d'entrée;

mettre à disposition une pluralité de composantes du champ d'onde de sortie à partir du signal de sortie;

traiter la copie du signal d'entrée selon la revendication 23, pour obtenir une pluralité de composantes de champ d'onde filtrées du champ d'onde comme signal d'entrée traité;

former une différence entre la pluralité de composantes de champ d'onde filtrées du champ d'onde et la pluralité de composantes du champ d'onde de sortie, pour générer des composantes de champ d'onde de différence;

déterminer des coefficients de filtre discrets à partir des composantes de champ d'onde de différence et des composantes du champ d'onde, les coefficients de filtre étant déterminés de manière adaptative;

utiliser les coefficients de filtre discrets déterminés de manière adaptative pour filtrer les composantes de champ d'onde, les coefficients de filtre discrets étant la caractéristique de transmission détectée de l'espace.

**25.** Procédé pour supprimer de manière active les parasites dans un signal d'excitation, en réponse auquel une pluralité de moyens d'émission disposés à des positions géométriques prédéterminées d'un espace génèrent un champ d'onde à même de se propager dans l'espace, un champ d'onde de réception pouvant être détecté par une pluralité de moyens de réception discrets disposés à des positions géométriques prédéterminées de l'espace, les moyens de réception discrets fournissant un signal de sortie en réponse au champ d'onde de réception, aux étapes suivantes consistant à:

traiter le signal d'excitation selon la revendication 23, pour obtenir une pluralité de composantes de champ d'onde filtrées du champ d'onde;

reconstruire le champ d'onde à partir des composantes de champ d'onde filtrées, pour obtenir un signal d'excitation filtré pour exciter les moyens d'émission discrets;

mettre à disposition une pluralité de composantes de champ d'onde du champ d'onde de réception;

recevoir les composantes de champ d'onde du champ d'onde;

déterminer des coefficients de filtre discrets à partir des composantes de champ d'onde de différence et des composantes du champ d'onde, les coefficients de filtre étant déterminés de manière adaptative;

filtrer les composantes de champ d'onde à l'aide des coefficients de filtre déterminés de manière adaptative, pour supprimer les parasites.

**26.** Procédé pour détecter une caractéristique de transmission inverse d'un espace lors d'une propagation d'un champ d'onde, le champ d'onde pouvant être généré, en réponse à un signal d'entrée, par des moyens d'émission discrets disposés à des positions géométriques prédéterminées, un champ d'onde de réception pouvant être détecté par des moyens de réception disposés à des positions géométriques prédéterminées de l'espace, les moyens de réception générant un signal de sortie en réponse au champ d'onde de réception, aux étapes suivantes consistant à:

générer une copie du signal d'entrée;

retarder la copie du signal d'entrée;

mettre à disposition une pluralité de composantes de champ d'onde à partir de la copie retardée du signal d'entrée;

traiter le signal de sortie selon la revendication 23, pour fournir une pluralité de composantes de champ d'onde filtrées du champ d'onde de réception;

former une différence entre les composantes de champ d'onde filtrées et les composantes de champ d'onde retardées, pour générer des composantes de champ d'onde de différence;

déterminer des coefficients de filtre discrets à partir des composantes de champ d'onde de référence et des composantes du champ d'onde, les coefficients de filtre étant déterminés de manière adaptative;

filtrer les composants de champ d'onde à l'aide des coefficients de filtre déterminés de manière adaptative;

les coefficients de filtre discrets étant la caractéristique de transmission inverse détectée de l'espace.

**27.** Procédé pour générer un signal d'erreur de prédiction à partir d'un signal d'entrée, le signal d'entrée présentant une partie d'information et une partie de redondance, et le signal d'erreur de prédiction comportant la partie d'information, un champ d'onde pouvant être généré, en réponse au signal d'erreur de prédiction, par des moyens d'émission discrets disposés à des positions géométriques déterminées de l'espace, aux étapes suivantes consistant à:

générer une copie du signal d'entrée;

mettre à disposition une pluralité de composantes de champ d'onde à partir du signal d'entrée;

retarder la copie du signal d'entrée;

traiter la copie retardée du signal d'entrée à l'aide du procédé selon la revendication 23, pour obtenir une pluralité de composantes de champ d'onde filtrées à partir de la copie retardée du signal d'entrée;

former une différence entre la pluralité de composantes de champ d'onde et la pluralité de composantes de champ d'onde filtrées, pour générer des composantes de champ d'onde de différence;

déterminer des coefficients de filtre discrets à partir des composantes de champ d'onde associées au signal de réception retardé et à partir des composantes du champ d'onde de référence;

générer un signal d'erreur de prédiction par une suppression de la partie de redondance lors de la filtration des composantes de champ d'onde retardées à l'aide des coefficients de filtre discrets, le signal de prédiction étant la pluralité de composantes de champ d'onde filtrées.

28. Procédé pour récupérer un signal utile à partir d'un signal d'entrée, le signal utile comportant une partie d'information et une partie de redondance, le signal utile comportant une pluralité de composantes d'un champ d'onde, la partie de redondance pouvant être supprimée pour une filtration de la pluralité de composantes de champ d'onde, la pluralité de composantes de champ d'onde filtrées donnant un signal d'erreur de prédiction en réponse auquel un champ d'onde de sortie peut être généré par des moyens d'émission discrets disposés à des positions géométriques prédéterminées d'un espace, le champ d'onde de sortie pouvant se propager dans l'espace, un champ d'onde de réception pouvant être détecté par une pluralité de moyens de réception disposés à des positions géométriques prédéterminées de l'espace, les moyens de réception discrets générant le signal d'entrée en réponse au champ d'onde de réception, aux caractéristiques suivantes:

mettre à disposition des coefficients de filtre;

traiter le signal d'entrée à l'aide du procédé selon la revendication 23;

former une somme entre la pluralité de composantes de champ d'onde et la pluralité de composantes de champ d'onde filtrées, pour obtenir une pluralité additionnée de composantes de champ d'onde;

filtrer la pluralité additionnée de composantes de champ d'onde à l'aide des coefficients de filtre discrets, la pluralité additionnée de composantes de champ d'onde étant le signal utile récupéré.

29. Procédé pour supprimer une partie parasite dans un signal de réception comportant la partie parasite et une partie utile, le signal de réception pouvant être généré par des moyens de réception disposés à des positions géométriques prédéterminées d'un espace en réponse à un champ d'onde pouvant être détecté, le champ d'onde pouvant être détecté étant une superposition d'un champ d'onde utile et d'un champ d'onde parasite, le champ d'onde parasite étant associé à une autre position géométrique, aux étapes suivantes consistant:

traiter le signal d'entrée à l'aide du procédé selon la revendication 23;

sélectionner les composantes de champ d'onde parasites sur base de la caractéristique spatiale, temporelle ou spectrale à partir des composantes de champ d'onde mises à disposition;

filtrer les composantes de champ d'onde sélectionnées, pour influencer les composantes de champ d'onde sélectionnées;

former une différence entre les composantes de champ d'onde et

les composantes de champ d'onde filtrées, pour supprimer la partie parasite dans les composantes de champ d'onde;

déterminer des coefficients de filtre discrets à partir des composantes de champ d'onde parasites sélectionnées et de la différence;

filtrer les composantes de champ d'onde à l'aide des coefficients de filtre discrets, pour supprimer la partie parasite.

30. Procédé pour supprimer une partie parasite dans un signal de réception comportant la partie parasite et une partie utile, le signal de réception pouvant être généré par des moyens de réception disposés à des positions géométriques prédéterminées d'un espace en réponse à un champ d'onde pouvant être détecté, le champ d'onde pouvant être détecté étant une superposition d'un champ d'onde utile et d'un champ d'onde parasite, aux étapes suivantes consistant:

traiter le signal d'entrée selon la revendication 23, pour fournir des composantes de champ d'onde filtrées;

sélectionner les composantes de champ d'onde à sélectionner sur base de la caractéristique spatiale, temporelle ou spectrale à partir des composantes de champ d'onde et fournir les composantes de champ d'onde sélectionnées;

former une différence entre les composantes de champ d'onde sélectionnées et les composantes de champ d'onde filtrées;

déterminer des coefficients de filtre discrets à partir des composantes de champ d'onde et de la différence;

filtrer les composantes de champ d'onde à l'aide des coefficients de filtre discrets, pour supprimer la partie parasite.

31. Programme d'ordinateur avec un code de programme pour réaliser un procédé selon l'une des revendications 23 à 30 lorsque le programme est exécuté sur un ordinateur.

EINGANGSSIGNAL 103

EINRICHTUNG ZUM BEREITSTELLEN EINER MEHRZAHL VON WELLENFELDKOMPONENTEN

101

105 EINZELFILTER 107 109

105 EINZELFILTER 109

107

107 EINZELFILTER 109

105

MEHRZAHL VON WELLENFELDKOMPONENTEN

MEHRZAHL VON GEFILTERTEN WELLENFELDKOMPONENTEN

FIG. 1

FIG. 2a

FIG. 2b

$303 \longrightarrow q_{LS}(k_\Theta, n)$

ADAPTIVER
FILTER:
$h(k_\Theta, n)$

$307$     $301$

$305$

$q_{out}(k_\Theta, n)$    $309$    $311$    $313$    $q_{MIC}(k_\Theta, n)$

ADAPTIONSGLEICHUNG:

$$q_{out}(k_\Theta, n) = q_{MIC}(k_\Theta, n) - H^T(k_\Theta, n) \cdot Q_{LS}(k_\Theta, n)$$

MIT:

$$H(k_\Theta, n+1) = H(k_\Theta, n) + \mu \frac{Q_{LS}(k_\Theta, n)}{\left\| Q_{LS}(k_\Theta, n) \right\|^2} \cdot q_{out}(k_\Theta, n)$$

$\mu$: SCHNITTSTELLE

# FIG. 3

EINRICHTUNG ZUM VERARBEITEN EINES EINGANGSSIGNALS

109

107

EINRICHTUNG ZUM BEREITSTELLEN EINER MEHRZAHL VON WELLEN-FELDKOMPONENTEN

411

MEHRZAHL VON EINZELFILTERN

411

413

415

MEHRZAHL VON GEFILTERTEN WELLENFELDKOMPONENTEN

SUBTRAHIERER

415

419

419

417

MEHRZAHL VON WELLEN-FELDKOMPONENTEN DES WELLENFELDES

425

KOPIE DES EINGANGSSIGNALS

405

MEHRZAHL VON DIFFERENZWELLEN-FELDKOMPONENTEN

423

421

421

425

EINRICHTUNG ZUM BE-STIMMEN VON DISKRETEN FILTERKOEFFIZIENTEN

423

403

EINRICHTUNG ZUM ERZEUGEN EINER KOPIE

404

RAUM

429

EINRICHTUNG ZUM BEREITSTELLEN EINER MEHRZAHL VON WELLEN-FELDKOMPONENTEN

EINGANGSSIGNAL

401

EINGANGSSIGNAL

427

AUSGANGSSIGNAL

431

MEHRZAHL VON WELLENFELDKOMPONENTEN DES AUSGANGS-WELLENFELDES

FIG. 4

EP 1 680 910 B1

EINGANG

ZUM
LAUTSPR.-
ARRAY

503

$T_1$ — 501

$q_{LS}(k_\Theta,t)$ — 507

505

ADAPT.
TEILFILTER

511

AUSGANG

$T_3$

509

517

VOM
MIC.-
ARRAY

521

519

$q_{out}(k_\Theta,t)$

513

$T_2$

$q_{MIC}(k_\Theta,t)$

515

FIG. 5

FIG. 6

EP 1 680 910 B1

FIG. 7

801

MIKROPHON-ARRAY

LAUTSPRECHER-ARRAY

MIKROPHON-ARRAY

807

803

805

## FIG. 8

ZU LAUT-
VON MIK.-ARRAY 801     SPRECHER-ARRAY 803     VON MIK.-ARRAY 805

909          911          913

903          905

APAPT.
TEILFILTER

901

907

## FIG. 9

AUSGANGSSIGNAL

1101 EINRICHTUNG ZUM ERZEUGEN EINER KOPIE

1103

1107 RAUM

1105

1111 EINRICHTUNG ZUM BEREITSTELLEN EINER MEHRZAHL VON WELLENFELD-KOMPONENTEN

1109

1115 MEHRZAHL VON EINZELFILTERN

1113

1117

1137

1135

1133 EINRICHTUNG ZUM BESTIMMEN VON DISKRETEN FILTERKOEFFIZIENTEN

1123

1123

1119 SUBTRAHIEREN

1121

1121

1131 EINRICHTUNG ZUM BEREITSTELLEN EINER MEHRZAHL VON WELLENFELD-KOMPONENTEN

1129

1127 EINRICHTUNG ZUM VERZÖGERN

1125

VERZÖGERTES EINGANGSSIGNAL

FIG. 10

54

EINGANG

1201
1205
1203

1207
ADAPT.
TEILFILTER

1213
ZUM LAUT-
SPRECHER-ARRAY

1209

1215

1211

VERZÖGERUNG

1217

1219

1221

+
−

1223

VOM MIKRO-
PHON-ARRAY

1225

1227

FIG. 11

FIG. 12

EP 1 680 910 B1

SENDESEITE:

EINGANG

1403

1401

1405

1407

1409

−

~1411

~1419

VERZÖGERUNG

1413

1415     1417

FIG. 13

1501

1505     1507     1509     1513

1503

1511~

$h_{*\Theta}$

1517

KOEFFIZIENTEN

1515

FIG. 14

FIG. 15

EP 1 680 910 B1

FIG. 16

EP 1 680 910 B1

FIG. 17

# Figur 18

```matlab
% --------------------------------------------------------
% Example code:
% Multichannel Wave-Domain Acoustic Echo Cancellation
% by Herbert Buchner, Univ Erlangen-Nuremberg.
% --------------------------------------------------------

startupdata;

% ============== WFS ==========================

% Simple wave-field synthesis according to loudspeaker
% array geometry for generating test signals for the loudspeakers.
% One virtual point source is generated, i.e., we have a SIMO WFS system.
disp('WFS filters ...');
[ls_x,ls_y,source_pos,G] = wfs_filters;

% =========== PARAMETERS ========================

nLs=size(G,2);
nAngles=32;
fs=48000;
radius=0.5;
f_alias=round(340/(2*pi*radius/nAngles));

G=resample(G,f_alias,fs);

% ========== LOUDSPEAKER ARRAY TRANSFORMS ==================

c_resultl = zeros(nLs,nAngles,size(G,1)+1024-1);  %2*IRlength);

for i=1:nLs

    % Generation of a virtual wavefield (p,v) on the microphone locations.
    % The wavefield originates from a point source which transmits an impulse.
    % This point source represents one of the loudspeakers.
    angle=atan(ls_y(i)./ls_x(i));
    if (ls_x(i)<0)
        angle=angle+sign(ls_y(i))*pi;
    end
    angle=180*angle/pi;
    angle=270-angle;
    disp('calc circspherewave ...');
    [p,v] = circspherewave(newt(1024,1/f_alias),newangle(nAngles),radius,sqrt((ls_x(i)).^2+(ls_y(i)).^2),angle);

    % Now, a plane wave decomposition of this (virtual) wavefield is calculated
    disp('calc circrt (LS) ...');
    [q1,q2] = circrt(p,v,radius);

    % ---------------- convolution of transformation filters with WFS ----------
    % -------

    disp('calc conv: transf with WFS ...');
    for k=1:nAngles
        c_resultl(i,k,:)=conv(squeeze(G(:,i)), squeeze(q1.data(:,k)));
    end
end
% --------------------------------------------------------

% superposition of the contributions of the different loudspeakers

disp('calc superposition of LS ...');
c_result = zeros(nAngles,size(c_resultl,3));
for i=1:nLs
    c_result = c_result + squeeze(c_resultl(i,:,:));
end

clear c_resultl;
```

# Figur 18

| Mar 10, 04 15:01 | WAEC2.m | Page 2/4 |
|---|---|---|

```
% --------------------------------------------------

% load signal of the virtual point source

disp('load signal of virtual point source ...');
s=wavread('Air_Bach_48kHz.wav');
s=resample(s.data,f_alias,fs);

% convolution

disp('calc convolution to get x_pw ...');
x_pw=zeros(length(s)+size(c_result,2)-1,nAngles);
for k=1:nAngles
   x_pw(:,k)=conv(s,squeeze(c_result(k,:)));
end

clear c_result;

% --------------------------------------------------

% transformation of loudspeaker signals into
% time-wavenumber space

disp('transformation into the k_theta domain ...');
x_pw_t_kTheta=fft(x_pw,[],2);




% ============ MICROPHONE ARRAY TRANSFORMS ========================


% calculate plane wave decomposition for a cicular microphone array
% recorded with the 'measure_field.m' script after S.Spors
% (using sound field microphones)

% parameters
fs = 48000;                              % sampling rate
radius = 0.5;                            % radius of circular array
pv_scale = 1.7;                          % scale factor between p and v measurements

% options
plot_pw_deco_figures = 0;
downsample = 1;



% load data:
% Room acoustics. Recorded with sound field microphones
disp('load recorded data from sound field microphones ...');
load wavefield;

for i=1:nLs
   [n_pos,IRlength] = size(squeeze(p(i,:,:)));

   % build data objects
   p1 = data(squeeze(p(i,:,:))');
   p1.x = newangle(n_pos);
   p1.y = axise(newt(IRlength, 1/fs));

   v1 = data(pv_scale * squeeze(v(i,:,:))');
   v1.x = newangle(n_pos);
   v1.y = axise(newt(IRlength, 1/fs));

   % perform plane wave decomposition
```

# Figur 18

```
 Mar 10, 04 15:01              WAEC2.m                      Page 3/4

  disp('calculating plane wave decomposition ...');

  % calculate a plane-wave decomposition of this wavefield
  disp('calc circrt ...');
  [q1,q2] = circrt(p1,v1,radius);

  % ----------------- convolution of transformation filters with WFS -----------
  ------

  for k=1:nAngles
    tmp=conv(squeeze(G(:,i)),resample(squeeze(q1.data(:,k)),f_alias,fs));
    if (i==1 & k==1)
      c_result1 = zeros(nLs,nAngles,length(tmp));
    end
    c_result1(i,k,:)=tmp;
  end
end
% ----------------------------------------------------

% superposition of the contributions of the different loudspeakers

c_result = zeros(nAngles,size(c_result1,3));
for i=1:nLs
  c_result = c_result + squeeze(c_result1(i,:,:));
end

clear c_result1;


% ----------------------------------------------------

% convolution

% create delay
delay=zeros(1024,1);
delay(1024)=1;

y_pw=zeros(length(s)+size(c_result,2)+1024-2,nAngles);
for k=1:nAngles
  tmp=conv(s,squeeze(c_result(k,:))');
  y_pw(:,k)=conv(tmp,delay);
end

clear c_result;

% ----------------------------------------------------

% transformation of microphone signals into
% time-wavenumber space

y_pw_t_kTheta=fft(y_pw,[],2);




% ============ ADAPTIVE FILTERING ========================



L=1024;        % number of taps (FIR models for each channel)
Hstep=1        % dist. between snapshots of imp. resp. (max.: length(x))

farendnoise=Inf   % Far-end-SNR in dB (on each far microphone)
nearendnoise=Inf  % Near-end-SNR in dB (on the near microphone)


h_F_start=zeros(L,1);
```

# Figur 18

```
y_pw_t_kTheta=y_pw_t_kTheta(1:size(x_pw_t_kTheta,1),:);

n=zeros(size(y_pw_t_kTheta,1),1);


k=1;
[err,h_snap,yn,eps]=FDAF_overlap_mono_DTD(squeeze(x_pw_t_kTheta(:,k)),squeeze(y_
pw_t_kTheta(:,k)),n,L,h_F_start,Hstep);

err_k_theta=zeros(length(err),nAngles);
err_k_theta(:,1)=err;

h_snap_theta=zeros(size(h_snap,1),size(h_snap,2),nAngles);
h_snap_theta(:,:,1)=h_snap;

for k=2:nAngles
  k
   [err_k_theta(:,k),h_snap_theta(:,:,k),yn,eps]=FDAF_overlap_mono_DTD(squeeze(x_
pw_t_kTheta(:,k)),squeeze(y_pw_t_kTheta(:,k)),n,L,h_F_start,Hstep);
end


% ============ INVERSE TRANSFORMATION ========================

e_pw=ifft(err_k_theta,[],2);


e=sum(real(e_pw),2);


er=resample(e,11025,f_alias);
er=0.95.*er./max(abs(er));

save er_file er

y_pw2=ifft(y_pw_t_kTheta,[],2);


y=sum(real(y_pw2),2);
rate=f_alias

yr=resample(y,11025,f_alias);
yr=0.95.*yr./max(abs(yr));

save yr_file yr
```

FIG. 19

EP 1 680 910 B1

FIG. 20

FIG. 21

FIG. 22

2713

2715

prediction
error    e[n]

input signal    u[n]

2717

2703

2709

delay    h

2711

2705    2707

2701

FIG. 23

2813

Primary
signal

d[n]

2809

Reference
signal    u[n]    h    y[n]    +    system output

e[n]    2811

2803    2801    2805    2807

FIG. 24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Adaptive signal processing: Application to real-world problems. Springer-Verlag, Februar 2003
- **S. SHIMAUCHI ; S. MAKINO.** Stereo Projection Echo Canceller with True Echo Path Estimation. *Proc. IEEE International Conference on Acoustic, Speech, and Signal Processing ICASSP95,* Mai 1995, 3059-3062
- **J. BENESTY ; D.R. MORGAN ; M.M. SONDHI.** A better understanding and an improved solution to the problem of stereophonic acoustic echo cancellation. *Proc. IEEE International Conference on Acoustic, Speech, and Signal Processing ICASSP97,* April 1997, 303-306
- **S. HAYKIN.** Adaptive Filter Theory. Prentice Hall Inc, 1996
- **S. SHIMAUCHI ; S. MAKINO.** Stereo Projection Echo Canceller with True Echo Path Estimation. *Proc. IEEE International Conference on Acoustics, Speech, and Signal Processing ICASSP95,* Mai 1995, 3059-3062
- **MASATO MIYOSHI ; YUTAKA KANEDA.** Inverse Filtering of Room Acoustics. *IEEE Transactions on Acoustics, Speech, and Signal Processing,* Februar 1988, vol. 36 (2
- **A. HYVÄRINEN ; J. KARHUNEN ; E. OJA.** Independent Component Analysis. John Wiley & Sons, Inc, 2001
- **S. SPORS ; A. KUNTZ ; R. RABENSTEIN.** An approach to listening room compensation with wave field synthesis. *AES 24th International Conference on Multichannel Audio,* 1-13
- **D.S. JAGGER.** Recent developments and improvements in soundfield microphone technology. *Preprint 2064 of 75th AES Convention, Paris,* Marz 1984
- **D.S. JAGGER.** Recent developments and improvements in soundfield microphone technology. *Preprint 2064 of 75th AES Convention,* Marz 1984
- **D.H. JOHNSON ; D.E. DUDGEON.** Array Signal Processing: Concepts and Techniques. Prentice Hall, 1993
- **SCHRIFT K. BURG ; H. HAF ; F. WILLE.** Höhere Mathematik für Ingenieure - Band V: Funktionalanalysis und Partielle Differentialgleichungen. Teubner Verlag, 1993, vol. V
- **A. SOMMERFELD.** Vorlesungen über theoretische Physik - Band VI: Partielle Differentialgleichungen der Physik. Verlag Harri Deutsch, 1978, vol. VI
- **HANKEL-, BESSEL ; E. WILLIAMS ; FOURIER ACOUSTIC.** Zylinder-oder Kugelfunktionen. Academic Press, 1999
- **A. BERKHOUT.** Applied Seismic Wave Theory. Elsevier, 1987
- **D.S. JAGGER.** Recent developments and improvements in soundfield microphone technology. *Preprint 2064 of 75th AES Convention, Paris,* Marz 1994
- **L.D. FIELDER.** Practical limits for room equalization. *Audio engineering society 110th convention, New York,* September 2001
- **B. SKLAR.** Digital Communications. Prentica Hall, 1988